# EUROPEAN PATENT SPECIFICATION

(11) **EP 3 605 538 B1**
(45) Date of publication and mention of the grant of the patent: **01.06.2022**
(21) Application number: 18772572.6
(22) Date of filing: 08.03.2018
(51) Int. Cl.: G11B 20/00, H04N 5/913, H04N 21/2347, H04N 21/236, H04N 21/2389, H04N 21/4385, H04N 21/854, H04N 21/2362, H04N 21/242, H04N 9/804, H04N 9/82

(54) **INFORMATION PROCESSING DEVICE, INFORMATION RECORDING MEDIUM, INFORMATION PROCESSING METHOD, AND PROGRAM**
INFORMATIONSVERARBEITUNGSVORRICHTUNG, INFORMATIONSAUFZEICHNUNGSMEDIUM, INFORMATIONSVERARBEITUNGSVERFAHREN UND PROGRAMM
DISPOSITIF DE TRAITEMENT D'INFORMATIONS, SUPPORT D'ENREGISTREMENT D'INFORMATIONS, PROCÉDÉ DE TRAITEMENT D'INFORMATIONS, ET PROGRAMME

(30) Priority: 24.03.2017 JP 2017059268
(43) Date of publication of application: 05.02.2020
(73) Proprietor: Sony Group Corporation, Tokyo 108-0075 (JP)
(72) Inventor: UEDA, Kenjiro, Tokyo 108-0075 (JP); UCHIMURA, Kouichi, Tokyo 108-0075 (JP)
(74) Representative: Witte, Weller & Partner Patentanwälte mbB
(86) International application number: PCT/JP2018/009065
(87) International publication number: WO 2018/173780

(56) References cited:
- WO-A1-2015/034020
- JP-A- 2007 074 549
- JP-A- 2010 009 705
- JP-A- 2016 027 705
- JP-A- 2016 116 065
- JP-A- 2016 127 324
- JP-A- 2017 038 313
- US-A1- 2005 244 001
- US-A1- 2016 373 247

## Description

### Technical Field

The present disclosure relates to an information processing apparatus, an information recording medium, an information processing method, and a program. More specifically, the present disclosure relates to an information processing apparatus, an information recording medium, an information processing method, and a program in which processing of inputting MPEG media transport (MMT) format data that has been standardized as a future data transmission standard in a broadcasting wave or the like to be recorded in a medium, or reproduction processing of medium recording data is performed.

### Background Art

Currently, standardization for realizing data transmission of a high image quality image such as broadcasting of a 4K image, an 8K image, and the like has progressed, and as one of the standardization, a data distribution system using an MPEG media transport (MMT) format has been considered.

The MMT format defines a data transfer system (a transport format) of transmitting encoded data configuring content, such as an image (Video), a sound (Audio), and a caption (Subtitle), and data such as control information (signaling information: SI) including various management information items such as control information and attribute information through a broadcasting wave or a network.

The MMT format, for example, is planned to be used for broadcasting of next-generation content such as a 4K image and a high dynamic range (HDR) image, and the like.

Note that, an MPEG-2TS format has been widely used as a transmission format of the existing image (Video), the existing sound (Audio), the existing caption (Subtitle), and the like, or a data recording format with respect to a medium.

In addition, a BDMV or BDAV standard (format) has been widely used as a recording and reproduction application standard (format) corresponding to the MPEG-2TS format.

Note that, BDMV or BDAV is an application standard of data recording and reproduction mainly using a Blu-ray (Registered Trademark) disc (BD), but the standard is not limited to the BD, and can also be applied to data recording and reproduction using a medium other than the BD, such as a flash memory or an HD.

A data recording and reproduction processing configuration using the BD, for example, is described in Patent Literature 1 (Japanese Unexamined Patent Publication No. 2011-023071) and the like.

The BDMV, for example, is an application standard that has been developed for a BD-ROM in which movie content and the like are recorded in advance, and has been widely used mainly in a BD-ROM that is not capable of rewriting package content and the like.

On the other hand, the BDAV is a standard that has been developed to be applied to data recording and reproduction processing mainly using a rewritable BD-RE type disk, a write-once recordable BD-R type disk, and the like. The BDAV, for example, is used for recording and reproducing a video that is captured by a user with a video camera and the like, or for recording and reproducing television broadcasting.

In order to record distribution content according to the MMT format described above in an information recording medium (medium), and to perform content reproduction processing from the medium by using a reproduction application corresponding to the BDAV format, it is necessary to perform data recording in accordance with the BDAV format.

Currently, a configuration for enabling the MMT format data to be recorded and reproduced by extending the BDAV format has been discussed.

For example, it has been discussed that in a case where distribution data according to the MMT format, transmitted by a broadcasting station and the like, is received by an information processing apparatus such as a television, and the received data is recorded in a recording medium such as a BD, a flash memory, or a hard disk (HD), image data, sound data, caption data, or data such as control information (SI) is recorded in a medium as a packet string of a packet in which data according to the MMT format is stored.

Specifically, it has been discussed that a packet string of an MMT protocol (MMTP) packet, or a type length value (TLV) packet that is an upper packet of the MMTP packet is recorded in the medium.

An image, a sound, and a caption that are reproduction data, various control information items (the signaling information: SI), and the like are stored in the MMTP packet or the TLV packet.

For example, in order to record the MMTP packet or the TLV packet in which content such as an image, a sound, and a caption is stored in a recording medium such as a Blu-ray (Registered Trademark) disc (BD), a flash memory, or a hard disk (HD), and to perform content reproduction from the medium by using the reproduction application corresponding to the BDAV format described above, it is necessary to perform data recording in accordance with the BDAV format.

The BDAV format defines a database file such as a playlist file or a clip information file, as a reproduction control information file, and a BDAV correspondence reproduction application executes data reproduction processing with reference to the reproduction control information file (the database file).

Accordingly, it is also necessary to perform the reproduction processing with respect to the MMT format data by using reproduction control information that is recorded in the playlist file or the clip information file.

However, the reproduction control information corresponding to MPEG-2TS format data is originally recorded in the database file such as a playlist file or a clip information file of BDAV format definition.

Accordingly, in a case where MMT format data having a format different from the MPEG-2TS format is reproduced, there is a case where the reproduction control information that is recorded in the playlist file or the clip information file of the existing BDAV format definition is not capable of being applied.

In order to solve such a problem, it is necessary to perform processing of generating a playlist file or a clip information file corresponding to MMT format data to be recorded in a medium.

In order to record the MMT format data in the recording medium such as the BD, and to enable the content reproduction to be performed by using the BDAV format correspondence application, it is necessary that the playlist file or the clip information file corresponding to the MMT format data is generated and recorded in the medium at the time of performing recording processing of the MMT format data with respect to the medium.

In addition, when the MMT format data that is recorded in the medium is reproduced, it is necessary to perform the reproduction by using the playlist file or the clip information file corresponding to MMT format data.

However, such processing has not been embodied at the present moment.

### Citation List

### Patent Literature

Patent Literature 1: JP-A-2011-023071

In US 2005/0244001 A1, an information recording medium drive is described that supports a configuration capable of effectively preventing an encrypted content stored on the medium from being misused.

The published patent application US 2016/0373247 A1 describes a MPEG Multimedia Transport (MMT) transmission system comprising an encryption processing device.

### Disclosure of Invention

### Technical Problem

The present disclosure, for example, has been made in consideration of the problems described above, and an object thereof is to provide an information processing apparatus, an information recording medium, an information processing method, and a program in which distribution data according to an MMT format can be subjected to MMT format data reproduction from a recording medium by being input and recorded in the recording medium such as a BD.

### Solution to Problem

### Devices and methods as defined in the claims are provided

Note that, the program of the present disclosure, for example, is a program that can be provided to an information processing apparatus, a computer, or a system that is capable of executing various programs and codes, by a storage medium provided in a computer-readable form or a communication medium. Such a program is provided in a computer-readable form, and thus, processing according to the program is realized on the information processing apparatus, the computer, or the system.

Other objects, characteristics, or advantages of the present disclosure will be apparent by more detailed description based on examples or attached drawings of the present disclosure described below. Note that, herein, the system is a logical assembly configuration of a plurality of devices, and the devices of each configuration are not limited to be in the same housing.

### Advantageous Effects of Invention

According to the configuration of one example of the present disclosure, a configuration is realized in which block encryption MMT format data can be reproduced by applying a time stamp.

Specifically, for example, an MMT format stream file and a reproduction control information file are generated and recorded in a medium. The stream file includes encryption block data to which an encryption key generated by using an additional header in which copy control information of a block unit is stored, as a seed, is applied, and the additional header. Position identification information capable of determining a position of reproduction data, a position the seed to be applied to decoding of the reproduction data, a position of the time stamp, and a position of the seed to be applied to decoding of the time stamp is recorded in the reproduction control information file. Data decoding, and reproduction to which the time stamp is applied are performed by using recording information.

According to this configuration, the configuration is realized in which the block encryption MMT format data is reproduced by applying the time stamp.

Note that, the effects described herein are merely an example, are not limited, and may have additional effects.

### Brief Description of Drawings

[Fig. 1] Fig. 1 is a diagram describing a usage configuration example of an information processing apparatus executing processing of the present disclosure.
[Fig. 2] Fig. 2 is a diagram describing an MMT format.
[Fig. 3] Fig. 3 is a diagram describing an image data storage configuration example according to the MMT format.
[Fig. 4] Fig. 4 is a diagram describing a BDAV format.
[Fig. 5] Fig. 5 is a diagram describing a data reproduction processing example according to the BDAV format.
[Fig. 6] Fig. 6 is a diagram describing an MPEG-2TS format.
[Fig. 7] Fig. 7 is a diagram describing the MMT format.
[Fig. 8] Fig. 8 is a diagram describing an SPAV format.
[Fig. 9] Fig. 9 is a diagram describing a processing example of recording data received from a broadcasting station or the like in an information recording medium (medium) as an MMTP packet string that is MMT format data.
[Fig. 10] Fig. 10 is a diagram describing a processing example of recording the data received from the broadcasting station or the like in the information recording medium (medium) as a TLV packet string in which an MMTP packet that is the MMT format data is stored.
[Fig. 11] Fig. 11 is a diagram describing a processing example in a case where the MMT format data is recorded as BDAV format data.
[Fig. 12] Fig. 12 is a diagram describing a specific example of processing of recording the MMT format data in a recording medium, and of copying the recording data in other media.
[Fig. 13] Fig. 13 is a diagram illustrating a data configuration (syntax) of a service description table (MH-SDT) that is stored in the MMTP packet.
[Fig. 14] Fig. 14 is a diagram describing a data configuration (Syntax) of a content copy control descriptor.
[Fig. 15] Fig. 15 is a diagram describing a data configuration (Syntax) of a content usage control descriptor.
[Fig. 16] Fig. 16 is a diagram in which the type (five types) of digital copy control mode and the setting of three types of control information items defined in the MMT format are summarized as a table.
[Fig. 17] Fig. 17 is a diagram illustrating a processing example in a case where a packet string recorded in a medium is the MMTP packet string.
[Fig. 18] Fig. 18 is a diagram illustrating a processing example in a case where the packet string recorded in the medium is the TLV packet string.
[Fig. 19] Fig. 19 is a diagram describing a setting example of the packet string recorded in the medium and an additional header.
[Fig. 20] Fig. 20 is a diagram describing a setting example of the packet string recorded in the medium and the additional header.
[Fig. 21] Fig. 21 is a diagram describing a setting example of the packet string recorded in the medium and the additional header.
[Fig. 22] Fig. 22 is a diagram illustrating an example of a data configuration (Syntax) of an MMTP packet additional header.
[Fig. 23] Fig. 23 is a diagram illustrating an example of a data configuration (Syntax) of a TLV packet additional header.
[Fig. 24] Fig. 24 is a diagram describing encryption processing in a case where the TLV packet additional header in which copy control information is recorded is added to a TLV packet and is recorded in the information recording medium (medium).
[Fig. 25] Fig. 25 is a diagram describing encryption processing in a case where the MMTP packet additional header in which the copy control information is recorded is added to an MMTP packet and is recorded in the information recording medium (medium).
[Fig. 26] Fig. 26 is a diagram describing a data configuration of a playlist file.
[Fig. 27] Fig. 27 is a diagram describing an EP map.
[Fig. 28] Fig. 28 is a diagram describing the EP map.
[Fig. 29] Fig. 29 is a diagram describing the EP map.
[Fig. 30] Fig. 30 is a diagram describing CPI type recording data of the playlist file.
[Fig. 31] Fig. 31 is a diagram describing a data configuration of a play item of the playlist file.
[Fig. 32] Fig. 32 is a diagram describing play item recording data of the playlist file.
[Fig. 33] Fig. 33 is a diagram illustrating a data configuration (syntax) of an MMT package table (MPT).
[Fig. 34] Fig. 34 is a diagram describing a specific example of an asset type (asset_type) that is recorded in the MMT package table (MPT).
[Fig. 35] Fig. 35 is a diagram illustrating a data configuration (syntax) of an MPU time stamp descriptor that is recorded in the MMT package table (MPT).
[Fig. 36] Fig. 36 is a diagram illustrating a data configuration (syntax) of a clip information file.
[Fig. 37] Fig. 37 is a diagram illustrating a data configuration (syntax) of CPI information [CPI()] of the clip information file.
[Fig. 38] Fig. 38 is a diagram describing a data configuration of the EP map that is recorded in the CPI information [CPI()] of the clip information file.
[Fig. 39] Fig. 39 is a diagram describing a data configuration of the EP map that is recorded in the CPI information [CPI()] of the clip information file.
[Fig. 40] Fig. 40 is a diagram describing a data configuration of two tables configuring the EP map.
[Fig. 41] Fig. 41 is a diagram describing a problematic point of random access processing of the MMT format data.
[Fig. 42] Fig. 42 is a diagram describing a data configuration of the MMTP packet.
[Fig. 43] Fig. 43 is a diagram describing an RAP flag.
[Fig. 44] Fig. 44 is a diagram illustrating a data configuration (syntax) of an extend time stamp descriptor that is recorded in the MMT package table (MPT) .
[Fig. 45] Fig. 45 is a diagram describing an example of medium recording data including the TLV packet string in which the additional header is set in a plurality of TLV packets.
[Fig. 46] Fig. 46 is a diagram describing a data configuration example of an EP map corresponding to encryption MMT format data that is recorded in the CPI information [CPI()] of the clip information file.
[Fig. 47] Fig. 47 is a diagram describing the recording data with respect to an EP map corresponding to the MMT format data.
[Fig. 48] Fig. 48 is a diagram describing a specific example of the recording data of the EP map corresponding to the encryption MMT format data that is recorded in the CPI information [CPI()] of the clip information file.
[Fig. 49] Fig. 49 is a diagram describing a data configuration example of the EP map corresponding to the encryption MMT format data that is recorded in the CPI information [CPI()] of the clip information file.
[Fig. 50] Fig. 50 is a diagram describing the recording data with respect to the EP map corresponding to the MMT format data.
[Fig. 51] Fig. 51 is a diagram describing a specific example of the recording data of the EP map corresponding to the encryption MMT format data that is recorded in the CPI information [CPI()] of the clip information file.
[Fig. 52] Fig. 52 is a diagram describing a configuration example of the information processing apparatus executing data recording processing with respect to the information recording medium (medium).
[Fig. 53] Fig. 53 is a flowchart illustrating a processing sequence of the data recording processing with respect to the information recording medium (medium).
[Fig. 54] Fig. 54 is a flowchart illustrating the processing sequence of the data recording processing with respect to the information recording medium (medium).
[Fig. 55] Fig. 55 is a flowchart illustrating the processing sequence of the data recording processing with respect to the information recording medium (medium).
[Fig. 56] Fig. 56 is a flowchart illustrating the processing sequence of the data recording processing with respect to the information recording medium (medium).
[Fig. 57] Fig. 57 is a diagram describing a configuration example of the information processing apparatus executing data reproduction processing from the information recording medium (medium).
[Fig. 58] Fig. 58 is a flowchart illustrating the processing sequence of the data recording processing with respect to the information recording medium (medium).
[Fig. 59] Fig. 59 is a flowchart illustrating the processing sequence of the data recording processing with respect to the information recording medium (medium).
[Fig. 60] Fig. 60 is a flowchart illustrating the processing sequence of the data recording processing with respect to the information recording medium (medium).
[Fig. 61] Fig. 61 is a flowchart illustrating the processing sequence of the data recording processing with respect to the information recording medium (medium).
[Fig. 62] Fig. 62 is a flowchart illustrating the processing sequence of the data recording processing with respect to the information recording medium (medium).
[Fig. 63] Fig. 63 is a diagram describing a hardware configuration example of the information processing apparatus that is applied to processing of the present disclosure.

### Mode(s) for Carrying Out the Invention

Hereinafter, the details of an information processing apparatus, an information recording medium, an information processing method, and a program of the present disclosure will be described with reference to the drawings. Note that, the description will be given as follows.
1. Configuration Example of Communication System
2. MPEG Media Transport (MMT) Format
3. BDAV Format and SPAV Format
4. Processing When MMT Format Data Is Recorded in Accordance with BDAV Format
5. Copy Processing Mode, and Copy Control Information in MMT Format Data
6. Configuration in Which Information Processing Apparatus Executing Copy Processing Is Capable of Acquiring Copy Control Information of MMT Format Data That Is Recorded in Medium
   6-1. Example of Setting Additional Header in Which Copy Control Information Is Recorded in Packet Unit
   6-2. Example of Setting Additional Header in Which One Copy Control Information Item is Recorded with Respect to Plurality of Packets
   6-2-1. (Example 1) Example of Setting One Copy Control Information Recording Additional Header with Respect to N Packets (MMTP Packet or TLV Packet)
      6-2-2. (Example 2) Example of Setting One Copy Control Information Recording Additional Header with Respect to Fixed Length Packet (MMTP Packet or TLV Packet) Configuration Data
      6-2-3. (Example 3) Example of Setting One Copy Control Information Recording Additional Header with Respect to Variable Length Packet (MMTP Packet or TLV Packet) Configuration Data
   6-3. Example of Recording Data of Additional Header
7. Example of Encryption Processing When Packet String in Which Additional Header is Set Is Recorded in Medium
8. Reproduction Control Information That Is Applied to Random Access Reproduction Processing
   8-1. Outline of EP Map, and Playlist File Corresponding to MMT Format Data
   8-2. Basic Configuration Example of Clip Information File Corresponding to MMT Format and EP Map
   8-3. Configuration Example of EP Map Corresponding to Encryption MMT Format Data of Encryption Key That Is Generated by Using Additional Header as Seed
      8-3-1. Example 1 of EP Map Corresponding to Encryption MMT Format Data
      8-3-2. Example 2 EP Map Corresponding to Encryption MMT Format Data
9. Configuration and Processing of Information Processing Apparatus Executing Data Recording Processing with Respect to Information Recording Medium
10. Configuration and Processing of Information Processing Apparatus Executing Data Recording Processing from Information Recording Medium
11. Configuration Example of Information Processing Apparatus
12. Summary of Configuration Example of Present Disclosure

### [1. Configuration Example of Communication System]

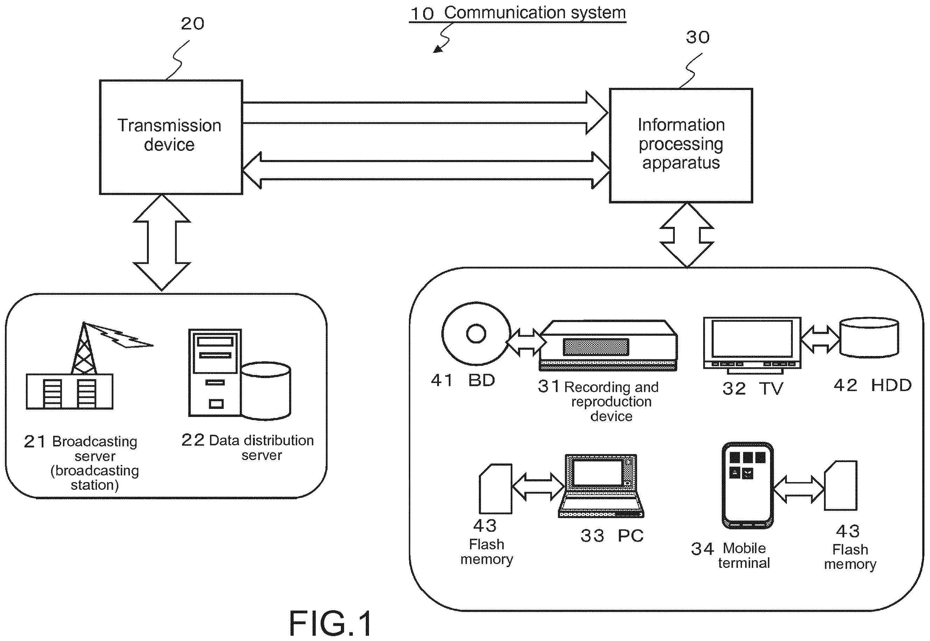

First, an example of a communication system that is one usage configuration example of an information processing apparatus executing processing of the present disclosure will be described with reference to Fig. 1.

An information processing apparatus 30 illustrated in Fig. 1 is mounted with a medium such as a Blu-ray (Registered Trademark) disc (BD), a flash memory, or a hard disk (HDD), and executes data recording processing with respect to the mounted medium, data reproduction processing from the mounted medium, data copy processing with respect to other media, or the like.

Data that is recorded in the medium by the information processing apparatus 30, for example, is transmission content provided by a transmission device 20 such as a broadcasting station (a broadcasting server) 21 or a data distribution server 22. Specifically, the data is a broadcasting program provided by a television station, and the like.

The transmission content is transmitted to the information processing apparatus 30 from the transmission device 20 through a broadcasting wave, or a network such as the internet.

The information processing apparatus 30, for example, is a recording and reproduction device 31, a television 32, a PC 33, a mobile terminal 34, and the like, and such an information processing apparatus, for example, is mounted with various media such as a Blu-ray (Registered Trademark) disc (BD) 41, a hard disk (HDD) 42, and a flash memory 43, and execute data recording processing with respect to such media, data reproduction processing from such media, or the like.

Data transmission with respect to the information processing apparatus 30 from the transmission device 20 is executed in accordance with an MPEG media transport (MMT) format.

The MMT format defines a data transfer system (a transport format) at the time of transmitting encoded data that is content configuration data, such as an image (Video), a sound (Audio), and a caption (Subtitle), through a broadcasting wave or a network.

The transmission device 20 encodes content data, generates a data file including encoded data and metadata of the encoded data, stores the generated encoded data in an MMT protocol (MMTP) packet that is defined in the MMT, and transmits the encoded data through a broadcasting wave or a network.

Data that is provided to the information processing apparatus 30 by the transmission device 20 includes guide information such as a broadcasting program guide, notification information, and control information (signaling information: SI) including various management information items such as a control message, in addition to reproduction target data such as an image, a sound, and a caption.

### [2. MPEG Media Transport (MMT) Format]

As described above, the data transmission with respect to the information processing apparatus 30 from the transmission device 20 is executed in accordance with the MPEG media transport (MMT) format.

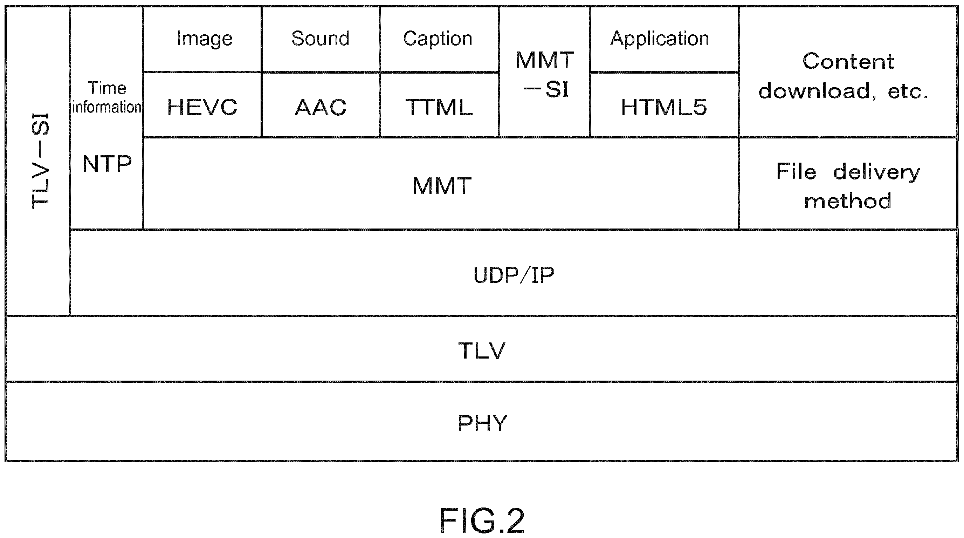

The MPEG media transport (MMT) format will be described with reference to Fig. 2 and the like.

Fig. 2 is a diagram illustrating a stack model of the MMT format.

In an MMT stack model illustrated in Fig. 2, a physical layer (PHY) is on the lowermost layer. The physical layer is divided into a broadcast (Broadcasting) layer on which processing of a broadcasting system is performed, and a broadband (Broadband) layer on which processing of a network system is performed.

The MMT enables processing using two communication networks of the broadcasting system and the network system to be performed.

A type length value (TLV) layer is an upper layer of the physical layer (PHY). The TLV is a format definition layer that defines a multiplexing system of an IP packet. A plurality of IP packets is subjected to multiplexing, and thus, is transmitted as a TLV packet. TLV-SI is a transmission layer of the control information (SI) such as the control message according to a TLV format.

The control information (SI) includes setting information necessary for receiving and reproducing content (a broadcasting program) on the information processing apparatus 30 side, the guide information such as the broadcasting program guide, the notification information, the control information, and the management information.

The control information (SI) stored in the TLV packet that is generated by the processing of the TLV layer is TLV-SI, and mainly includes control information relevant to reception processing.

The control information (SI) stored in the MMTP packet that is a packet generated in accordance with an MMT protocol (MMTP) is MMT-SI represented on the uppermost layer, and mainly includes control information relevant to reproduction control.

A UDP/IP layer is set on the TLV layer.

Specifically, the UDP/IP layer is a layer that can be divided into the IP layer and the UDP layer, and defines transmission of storing a UDP packet in a payload of the IP packet.

An MMT layer and a file delivery method layer are set on the UDP/IP layer.

A system in which the MMTP packet is transmitted by being stored in the IP packet and a system in which the data transmission is performed as the IP packet by using a file delivery method that is a data transmission system not using the MMTP packet are set to be used in combination.

The following layers of:
image (Video) data that is encoded image data according to high efficiency video coding (HEVC) that is an image encoding standard;
sound (Audio) data that is encoded sound data according to advanced audio coding (AAC) that is a sound encoding standard;
caption (Subtitle) data that is encoded caption data according to a timed text markup language (TTML) that is a caption encoding standard;
control information (MMT-SI) that is transmitted by using the MMTP packet; and
various applications described in accordance with a hyper text markup language 5 (HTML5)
are set on the MMT layer, and each of the data items is transmitted by being stored in the MMTP packet.

The control information (MMT-SI) is the control information (the signaling information) that is transmitted by the MMTP packet, and includes setting information necessary for reproducing the content (the broadcasting program) on the information processing apparatus 30 side, the guide information such as the broadcasting program guide, the notification information, and various management information items such as the control information.

Note that, time information (network time protocol: NTP) is absolute time information, and is transmitted by being directly stored in the UDP packet.

Data service (Data service) performing other data distributions, content download and the like (Contentdownload,etc.) can be distributed by using a file distribution method (File delivery method) different from the MMT.

As illustrated in Fig. 2, the control information (MMT-SI) such as the image, the sound, and the caption, various notification information items, and various management information items such as the control information, or an application are transmitted by the MMTP packet.

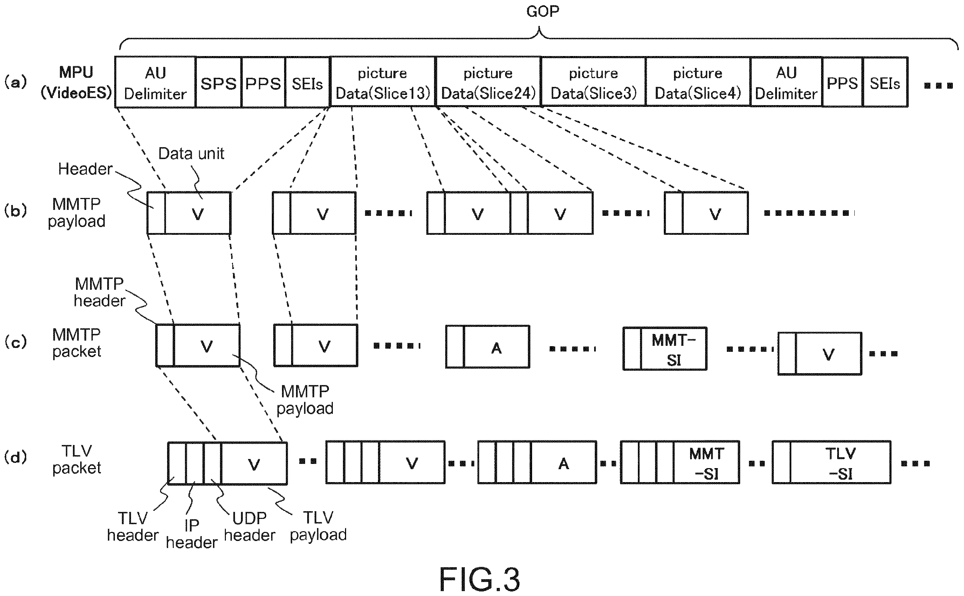

A specific configuration example of the MMTP packet will be described with reference to Fig. 3.

Fig. 3 illustrates four types of data configuration examples described below.
(a) Media Presentation Unit (MPU)
(b) MMTP Payload
(c) MMTP Packet
(d) TLV Packet

(d) The TLV packet is a packet that is transmitted through the broadcasting wave or the network, and each header information item of a UDP header, an IP header, and a TLV header is set in the TLV packet. The TLV packet is set for each data type as an individual packet.

That is, one type of data is stored in a TLV payload of one TLV packet. Specifically, for example, the control information (SI) including the image (V), the sound (A), the caption (S), and various management information items is individually stored.

Note that, the control information (SI) includes the control information (MMT-SI) that is stored in the MMTP packet, and the control information (TLV-SI) that is transmitted by the TLV packet, and the control information (MMT-SI) and the control information (TLV-SI) are stored in individual TLV packets different from each other.

An example of the TLV payload that is a payload of the TLV packet is the MMTP packet illustrated in Fig. 3(c).

The MMTP packet illustrated in Fig. 3(c) includes an MMTP header and an MMTP payload.

One type of data is stored in the MMTP payload of one MMTP packet. Specifically, for example, the image (V), the sound (A), and the caption (S), the control information (MMT-SI) stored in the MMTP packet, and any one type of data is stored in an individual MMTP packet.

Figs. 3(a) and 3(b) illustrate the detailed configuration of the image data that is stored in the MMTP payload of the MMTP packet illustrated in Fig. 3 (c) .

Fig. 3(b) illustrates only an MMTP packet in which an MMTP payload is the image data (V) by selecting the MMTP packet from the MMTP packets illustrated in Fig. 3(c).

The MMTP payload illustrated in Fig. 3(b) includes a header and a data unit.

As illustrated in Fig. 3(a), image data, and the following various parameters are stored in the data unit.
Access Unit Delimiter (AU Delimiter)
Sequence Parameter Set (SPS)
Picture Parameter Set (PPS)
Supplemental Enhancement Information (SEIs)

Such parameters are parameters that are used for displaying an image.

A media presentation unit (MPU) illustrated in Fig. 3(a) is one data processing unit of the reproduction target data such as the image, the sound, and the caption in the MMT format. The example illustrated in Fig. 3(a) is an example of the MPU of the image data, and is the same unit as that of a group of pictures (GOP) as a so-called encoding and decoding processing unit.

As described above, for example, the image data is divided into a parameter and image configuration data that are defined in the MMT format, as illustrated in Fig. 3(a), is stored in the MMTP payload illustrated in Fig. 3(b), and is configured as the MMTP packet illustrated in Fig. 3(c).

Further, the MMTP packet is set as the payload of the TLV packet illustrated in Fig. 3(d), and the TLV packet is transmitted through the broadcasting wave or the network.

Note that, the MMTP packet and the TLV packet in a data type unit are respectively set and transmitted with respect to each data item such as the sound and the caption, and each data item of the MMT-SI.

The TLV-SI is transmitted by being stored in the TLV packet without being stored in the MMTP packet.

### [3. BDAV Format and SPAV Format]

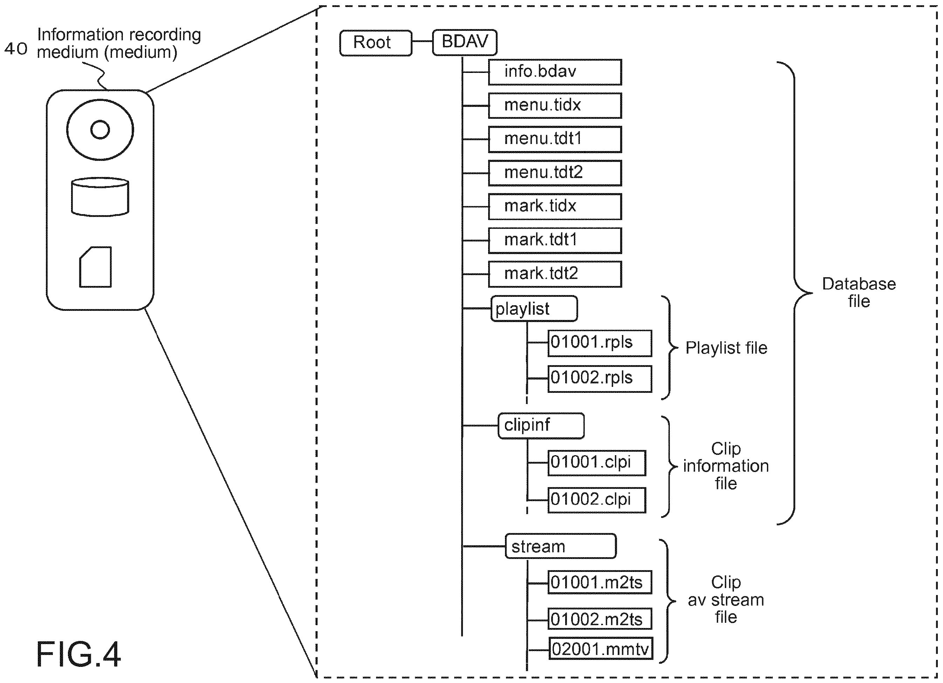

Next, a BDAV format and an SPAV format that are a recording data format in a case where distribution content according to the MMT format described above is reproduced by being recorded, for example, in a medium such as a Blu-ray (Registered Trademark) disc (BD), a flash memory, or a hard disk (HD) will be described with reference to Fig. 4.

For example, in a case where content such as the image, the sound, and the caption is reproduced from the medium such as the Blu-ray (Registered Trademark) disc (BD), the flash memory, or the HD, reproduction control information or index information for performing reproduction processing of the content is necessary. The reproduction control information or the index information, in general, is referred to as a database file.

Such reproduction control information or index information is different in accordance with a reproduction application of executing the reproduction processing of recording data in the medium.

As described above, the existing recording and reproduction application standard (= Data Recording Format) includes a BDMV standard or a BDAV standard (the data recording format). Such an application standard is designed as a data recording and reproduction application standard mainly using a Blu-ray (Registered Trademark) disc (BD).

Note that, BDMV or BDAV is an application standard of data recording and reproduction mainly using the BD, and is the data recording format (the standard), but the standard is not limited to the data recording and reproduction using the BD, and can also be applied to data recording and reproduction using a medium other than the BD, such as a flash memory.

The BDMV, for example, is an application standard that has been developed for a BD-ROM in which movie content and the like are recorded in advance, and has been widely used mainly in a BD-ROM that is not capable of rewriting package content and the like.

On the other hand, the BDAV is a standard that has been developed to be applied to data recording and reproduction processing mainly using a rewritable BD-RE type disk, a write-once recordable BD-R type disk, and the like. The BDAV, for example, is used for recording and reproducing a video that is captured by a user with a video camera and the like, or for recording and reproducing television broadcasting.

In order to perform content reproduction processing from the medium in which the distribution content according to the MMT format described above is recorded, by using a reproduction application corresponding to the BDAV format, it is necessary to perform data recording in accordance with the BDAV format.

As described above, the BDAV format defines a playlist file, a clip information file, or the like, as a recording file of the reproduction control information, and a BDAV correspondence reproduction application executes the data reproduction processing by using recording information of a reproduction control information file (the database file).

Fig. 4 is a diagram illustrating a directory configuration example of data that is recorded in an information recording medium (medium) 40 in accordance with the BDAV format.

As illustrated in Fig. 4, a storage file of various management information items, the reproduction control information, and the reproduction target data is set in the directory.

A management information file, for example, includes an info file (info), a menu file (menu), a mark file (mark), and the like illustrated in illustrated in Fig. 4. Management information of a title shown to the user, and the like are mainly stored in such files.

In addition, for example:
a playlist file (playlist); and
a clip information file (clipinf)
are recorded as the reproduction control information file.

Further, a clip AV stream file (stream) is recorded as a reproduction data storage file.

The playlist file is a file in which a reproduction order of the content, and the like are defined in accordance with program information of a reproduction program that is designated by the title, and for example, includes designation information and the like of the clip information file in which reproduction position information and the like are recorded.

The clip information file is a file that is designated by the playlist file, and includes reproduction position information and the like of the clip AV stream file.

The clip AV stream file is a file in which AV stream data or the management information to be a reproduction target is stored. The clip AV stream file includes a packet in which each data item such as the image, the sound, and the caption to be the reproduction target, or the management information is stored.

Note that, the management information that is defined in the MPEG-2TS format and is recorded in the clip AV stream file, for example, includes program specific information/service information (PSI/SI).

Note that, broadcasting data or network distribution data of the related art is MPEG-2TS format data including a transport stream (TS) packet, and it is expected that data including a high-definition image and the like, such as a 4K image and an 8K image of the future, is MMT format data including the MMTP packet described above.

Fig. 4 illustrates two types of stream files of:
a stream file (nnnnn.m2ts) including MPEG-2TS format data including the TS packet; and
MMT format data (nnnnn.mmtv) including the MMTP packet,
as the clip AV stream file (stream).

A directory example illustrated in Fig. 4 is a directory example of setting in which in a case where the data received by the information processing apparatus 30 is the MPEG-2TS format data, the received data is recorded in the medium as the MPEG-2TS format data, as it is, and in a case where the received data is the MMT format data, the received data is recorded in the medium as the MMT format data.

Note that, it has been discussed that the clip AV stream file in a case where the MMT format data is recorded in the medium is recorded as a packet string of a packet in which data according to the MMT format is stored.

Specifically, it has been discussed that the clip AV stream file is recorded as a packet string of the MMT protocol (MMTP) packet, or a type length value (TLV) packet that is an upper packet of the MMTP packet.

A specific example thereof will be described below in detail.

The management information file, the playlist file, the clip information file, and the data file thereof are a storage file of the management information that is applied to the reproduction processing of the image, the sound, the caption, and the like that are the reproduction data stored in the clip AV stream file. Such files are a file in which the reproduction control information, attribute information of the reproduction data, and the like are stored, and are referred to as the database file.

A sequence of reproducing the content recorded in the information recording medium is as follows.
(a) First, a specific title is designated from the management information file by the reproduction application.
(b) A playlist associated with the designated title is selected.
(c) An AV stream or a command as content actual data is read out by clip information that is defined in the selected playlist, and the reproduction of the AV stream or execution processing of the command is performed.

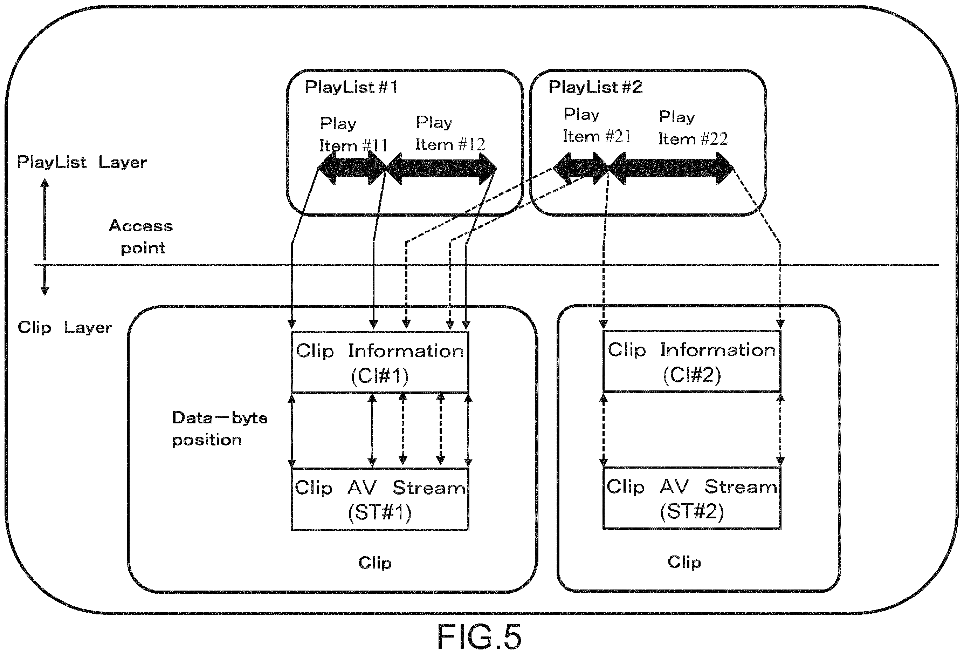

Fig. 5 is a diagram describing a correspondence relationship in the following data items that are recorded in the information recording medium (medium) 40, that is:
the playlist file;
the clip information file; and
the clip AV stream file.

The AV stream including the reproduction target data such as the image, the sound, and the caption that are actual reproduction target data is recorded as a clip AV stream (Clip AV Stream) file, and a playlist (PlayList) file and a clip information (Clip Information) file are defined as the management information and the reproduction control information file of the AV stream.

As illustrated in Fig. 5, such files of a plurality of categories can be partitioned into two layers of:
a playlist layer including the playlist (PlayList) file; and
a clip layer including the clip AV stream (Clip AV Stream) file and the clip information (Clip Information) file.

Note that, one clip information (Clip Information) file is associated with one clip AV stream (Clip AV Stream) file, a pair of such files is considered as one object, and such files are collectively referred to as a clip (Clip) or a clip file.

Detailed information of the data that is included in the clip AV stream file, for example, the management information such as an EP map in which I picture position information of MPEG data, and the like are recorded is recorded in the clip information file.

Note that, the clip AV stream (Clip AV Stream) file includes the TS packet in a case of the MPEG-2TS format data.

In addition, the clip AV stream (Clip AV Stream) file includes the MMTP packet in a case of the MMT format data.

For example, management information for acquiring a reproduction start position of storage data of the clip AV stream file such as correspondence data of a data position of byte string data of the clip AV stream file, and a reproduction time position such as an entry point (EP) that is a reproduction start point in a case of being decompressed on a time axis, and the like is stored in the clip information (Clip Information) file.

The playlist includes information indicating an access point corresponding to the reproduction start position or a reproduction end position of the clip (Clip) with a time stamp that is information on the time axis.

For example, it is possible to acquire a data reading position of the clip AV stream file, that is, an address as the reproduction start point, on the basis of the time stamp indicating a reproduction time elapse position from a start point of the content, with reference to the clip information file.

The clip information file (Clip Information file) is used for finding address information of the stream in the clip AV stream file to start decoding from the time stamp.

As described above, the playlist (PlayList) file includes designation information of a reproduction section with respect to reproducible data included in the clip (= Clip Information File + Clip AV Stream File) layer.

One or more play items (PlayItem) are set in the playlist (PlayList) file, and each of the play items includes the designation information of the reproduction section with respect to the reproducible data included in the clip (= Clip Information File + Clip AV Stream File) layer.

Note that, as described above, the clip AV stream (Clip AV Stream) file in which the reproduction target data is stored includes the TS packet in a case of the MPEG-2TS format data of the related art.

In addition, in a case of high-definition image data such as a 4K image and an 8K image that are expected to be widely used in the future, the clip AV stream (Clip AV Stream) file includes the MMTP packet in a case of the MMT format data.

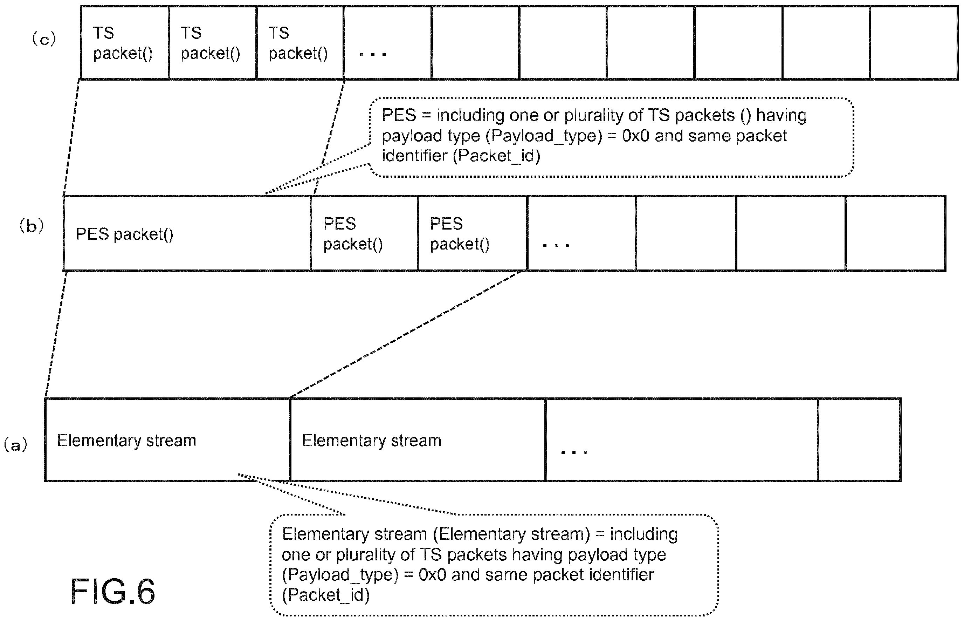

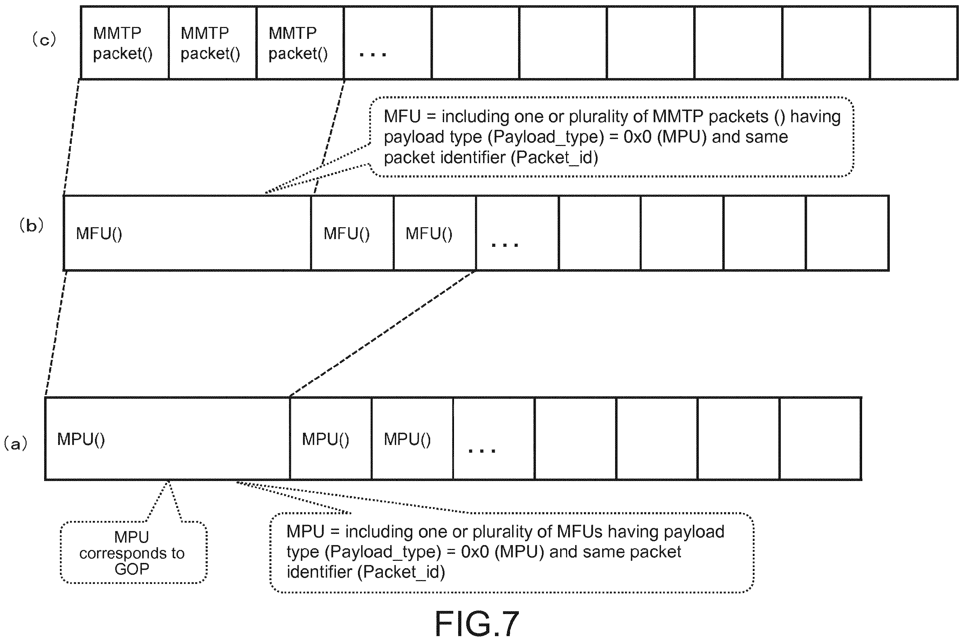

The MMT format and the MPEG-2TS format will be described with reference to Fig. 6 and Fig. 7.

First, the MPEG-2TS format will be described with reference to Fig. 6.

The MPEG-2TS format is a format in which a data storage form (a container format) of the encoded data at the time of storing the encoded data that is the content configuration data, such as the image (Video), the sound (Audio), and the caption (Subtitle), or the management information (PSI/SI) in a recording medium (medium), or of transmitting the encoded data or the management information (PSI/SI) through the broadcasting wave or the network is defined.

The MPEG-2TS format is a format that is standardized in ISO13818-1, and for example, is used for data recording with respect to the Blu-ray (Registered Trademark) disc (BD), digital broadcasting, and the like.

Figs. 6(a) to 6(c) are diagrams illustrating the configuration of the MPEG-2TS format data.

Fig. 6(a) illustrated in the lowermost row is a diagram illustrating the overall configuration of the MPEG-2TS format data.

As illustrated in Fig. 6(a), the MPEG-2TS format data includes a plurality of elementary streams (Elementary stream).

The elementary stream (Elementary stream), for example, is a unit that is set as one unit of the image, the sound, the caption, and the like.

As illustrated in Fig. 2(b), one elementary stream (Elementary stream) includes one or a plurality of packetized elementary stream (PES) packets.

Specifically, one elementary stream (Elementary stream) includes one or a plurality of PES packets having Payload Type (Payload_type) = 0x0 and the same packet identifier (Packet_id).

As illustrated in Fig. 6(c), one PES packet includes one or a plurality of TS packets.

Specifically, one PES packet includes one or a plurality of TS packets having Payload Type (Payload_type) = 0x0 and the same packet identifier (Packet_id).

The TS packet is different from the MMTP packet described above, and has a fixed length, and a packet size of one TS packet is fixed to 188 bytes.

Next, the MPEG media transport (MMT) format will be described with reference to Fig. 7.

The MMT format is described above with reference to Fig. 3, but an explanatory diagram of the MMT format illustrated in Fig. 7 is a diagram for easily understanding a correspondence relationship with respect to the MPEG-2TS format described with reference to Fig. 6.

As described above, the MMT format defines the data transfer system (the transport format) at the time of transmitting the encoded data that is the content configuration data such as the image (Video), the sound (Audio), and the caption (Subtitle) through the broadcasting wave or the network.

Fig. 7 is a diagram describing the MMT format that is a file format defined in ISO/IEC 23008-1.

Figs. 7(a) to 7(c) illustrate the configuration of the MMT format data.

Fig. 7(a) illustrated in the lowermost row is a diagram illustrating the overall configuration of the MMT format data.

As illustrated in Fig. 7(a), the MMT format data includes a plurality of media presentation units (MPU).

The MPU, for example, is a unit that is set as one unit of the image, the sound, the caption, and the like. For example, in a case of the image, the MPU corresponds to one group of picture (GOP) in which one MPU is one MPEG compression image unit.

As illustrated in Fig. 7(b), one MPU includes one or a plurality of media fragment units (MFU).

Specifically, one MPU includes one or a plurality of MFUs having Payload Type (Payload_type) = 0x0 (MPU) and the same packet identifier (Packet_id).

As illustrated in Fig. 7(c), one MFU includes one or a plurality of MMTP packets.

Specifically, one MFU includes one or a plurality of MMTP packets having Payload Type (Payload_type) = 0x0 (MPU) and the same packet identifier (Packet_id).

The MMTP packet has a variable length, and can be set to have various packet sizes.

Each of the MMTP packets includes a header (the MMTP header) in which the attribute information and the like are stored, and a payload (the MMTP payload) in which actual data of an encoded image, and the like are stored.

Note that, a format similar to the BDAV format includes the SPAV format. As described above, the BDMV or the BDAV is the application standard of the data recording and reproduction mainly using the BD. In contrast, the SPAV format is an application standard of data recording and reproduction mainly with respect to the hard disk.

However, both of the BDAV format and the SPAV format are a format that can be used in recording and reproduction using various media such as the BD, the flash memory, and the HD.

SPAV format data is capable of executing the data recording and reproduction in the same processing as the data recording and reproduction processing in the BDAV format. However, in the SPAV format, a part of file name setting is different from that of the BDAV format.

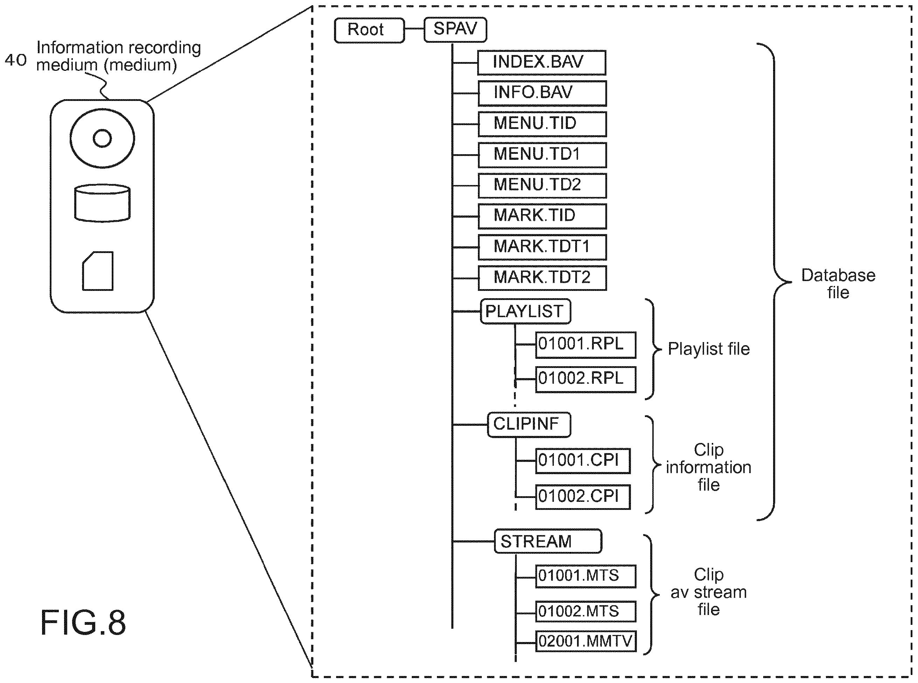

Fig. 8 illustrates a directory configuration example of the SPAV format.

As with the BDAV format described above with reference to Fig. 4, various management information items, the reproduction control information, and the storage file of the reproduction target data are set in the directory of the SPAV format illustrated in Fig. 8.

The management information file, for example, includes an info file (INFO), a menu file (MENU), a mark file (MARK), and the like illustrated in Fig. 8. The management information of the title shown to the user, and the like are mainly stored in such files.

In addition, for example:
a playlist file (PLAYLIST); and
a clip information file (CLIPINF)
are recorded as the reproduction control information file.

Further, a clip AV stream file (STREAM) is recorded as the reproduction data storage file.

As illustrated in Fig. 8, setting of a directory name of the SPAV format or an extension of each of the files is different from that of the BDAV format described with reference to Fig. 4.

However, data stored in each of the files, or a function of each of the files is identical to that of the BDAV format.

In the description of the following examples, a processing example is described in which the MMT format data is reproduced by being recorded as the BDAV format data, but the examples described below can also be applied to processing of reproducing the MMT format data by recording the MMT format data as the SPAV format data.

### [4. Processing When MMT Format Data Is Recorded in Accordance with BDAV Format]

Next, processing in a case where the MMT format data is recorded in accordance with the BDAV format will be described.

As described above, the MMT format is a data distribution format that is used in an 4K image and the like to be distributed in the future by the broadcasting station and the like, and is a format according to a protocol stack described with reference to Fig. 3.

On the other hand, the BDAV format is the data recording format with respect to the medium, and as described with reference to Fig. 4, the database file including the reproduction control information file such as the playlist file or the clip information file is defined in the BDAV format.

Note that, the BDAV format corresponds to not only the data recording format but also the data recording and reproduction application standard, and in data reproduction recorded in the medium in accordance with the BDAV format, the reproduction processing is executed by using the reproduction application corresponding to the BDAV format.

Accordingly, in order to record the distribution content according to the MMT format in the medium, and to perform the content reproduction processing from the medium in which the distribution content is recorded by using the reproduction application corresponding to the BDAV format, it is necessary to perform the data recording according to the BDAV format.

As described above, currently, definition for extending the BDAV format and for enabling the MMT format data to be recorded and reproduced has been discussed.

For example, it has been discussed that in a case of performing processing in which the distribution data according to the MMT format, transmitted by the broadcasting station and the like, is received by the information processing apparatus such as a television, and the received data is recorded in the medium such as the BD, the flash memory, or the hard disk (HD), the image data, the sound data, the caption data, or data such as the management information (SI) is recorded as the packet string of the packet in which the data according to the MMT format is stored, as it is.

That is, the packet string of the packet in which the data according to the MMT format is stored is recorded in a clip AV stream file [02001.mmtv and the like] that is set in the BDAV format illustrated in Fig. 4 or the SPAV format illustrated in Fig. 8.

Note that, a recording device generates a playlist file or a clip information file in which control information corresponding to MMT format data is set to be recorded in the medium, with respect to the playlist file or the clip information file that is the reproduction control information file corresponding to the clip AV stream file [02001.mmtv and the like] in which the MMT format data is stored.

It has been discussed that the clip AV stream file in which the MMT format data is stored is recorded as a packet string of the MMT protocol (MMTP) packet, or the type length value (TLV) packet that is the upper packet of the MMTP packet.

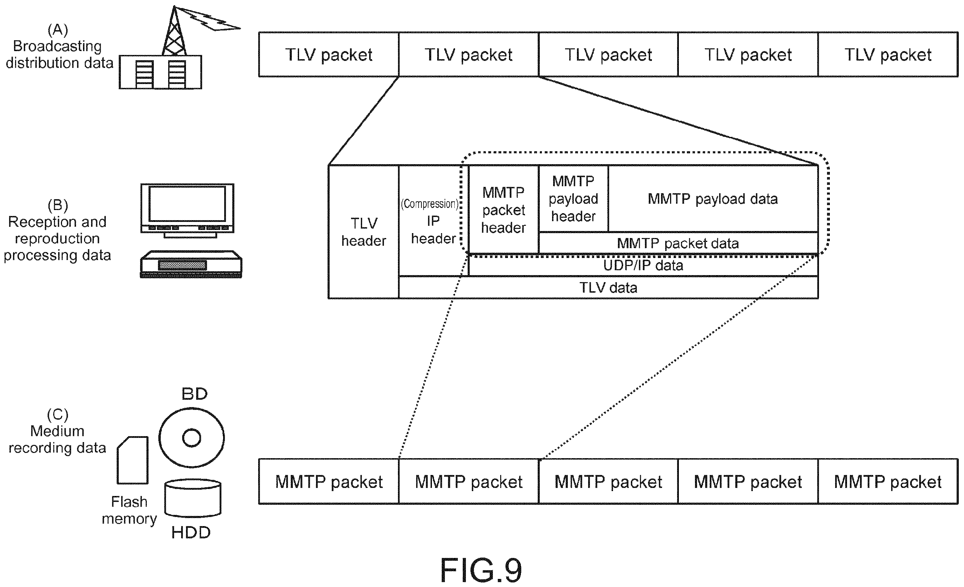

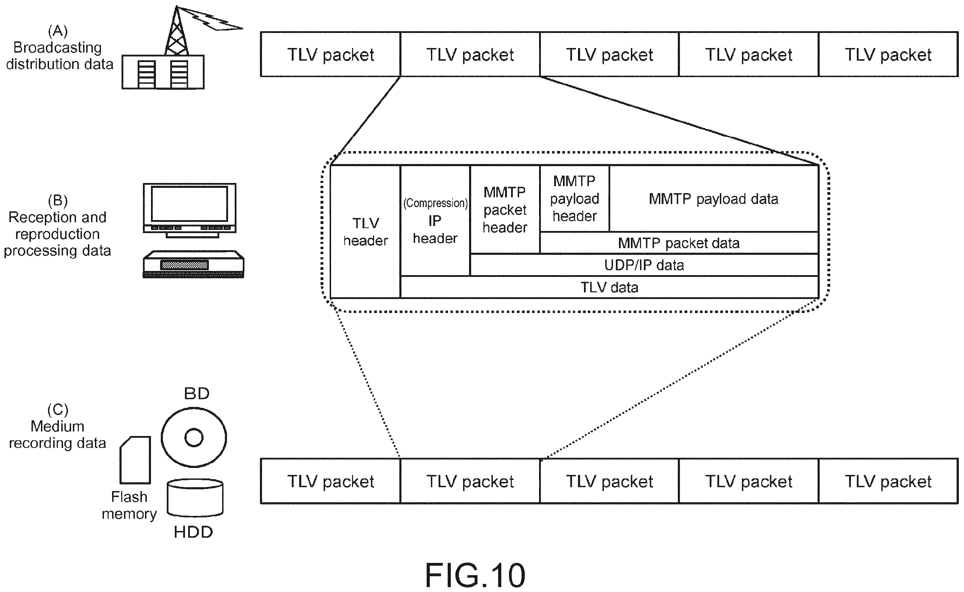

A specific recording configuration example of the clip AV stream file in which the MMT format data is stored will be described with reference to Fig. 9 and Fig. 10.

Fig. 9 is a diagram describing a processing example of recording an MMT protocol (MMTP) packet string according to the MMT format in the recording medium such as the BD, the flash memory, or the hard disk (HD).

Fig. 9 illustrates three data items described below.
(A) TLV Packet String That Is Broadcasting Distribution Data
(B) One TLV Packet That Is Processed as Reception and Reproduction Data
(C) MMTP Packet String That Is Proposed as Configuration of Medium Recording Data

(A) The TLV packet string that is the broadcasting distribution data is a string (a sequence) of the TLV packets having the MPEG media transport (MMT) format described above with reference to Fig. 2.

The TLV packet string is transmitted from the transmission device 20 such as the broadcasting station.

(B) One TLV packet that is processed as the reception and reproduction data is one TLV packet that is received by the information processing apparatus 30 such as a television or a recorder, and is subjected to the reproduction processing. The detailed configuration of one TLV packet configuring the TLV packet string illustrated in (A) is illustrated.

The TLV packet is a TLV packet having the MPEG media transport (MMT) format described above with reference to Fig. 2.

(C) An MMTP packet string illustrated as the configuration of the medium recording data is an MMTP packet string that has been currently proposed as the recording data with respect to the medium. As understood from a dotted line illustrating a correspondence relationship with respect to the Fig. 9(B), the MMTP packet recorded in the medium is an MMTP packet that is configuration data of a part of the TLV packet, and includes the following elements.
(a) MMTP Packet Header (MMTP_packet_header)
(b) MMTP Packet Data (MMTP_packet_data) (=

### Payload)

Note that, the MMTP packet data (MMTP_packet_data) (= Payload) includes the following elements.
(b1) MMTP Payload Header (MMTP_payload_header)
(b2) MMTP Payload Data (MMTP_payload_data)

One configuration that has been currently proposed as the recording data with respect to the information recording medium (medium) is a configuration as illustrated in Fig. 9(C) in which only the MMTP packet that is the constituent of the TLV packet is taken out, and is recorded by being aligned in a line.

Fig. 10 is a diagram describing a processing example of recording a packet string of an upper TLV packet in which the MMTP packet is stored, but not the MMT protocol (MMTP) packet, in the recording medium such as the BD, the flash memory, or the hard disk (HD).

Fig. 10 illustrates three data items described below, as with Fig. 9.
(A) TLV Packet String That Is Broadcasting Distribution Data
(B) One TLV Packet That Is Processed as Reception and Reproduction Data
(C) TLV Packet String That Is Proposed as Configuration of Medium Recording Data

(A) and (B) are the same data as that described with reference to Fig. 9.

(C) The TLV packet string illustrated as the configuration of the medium recording data is a TLV packet string that is another example that has been currently proposed as the recording data with respect to the medium.

As understood from a dotted line illustrating a correspondence relationship with respect to Fig. 10(B), the TLV packet recorded in the medium is a TLV packet including the MMTP packet, and includes the following elements.
(a) TLV Packet Header (TLV_header)
(b) TLV Packet Data (TLV_data)(= Payload)

As described above, as a recording mode of the MMT format data with respect to the medium such as the BD, currently, it has been discussed that the MMT format data is recorded as any one packet string of:
the packet string of the MMT protocol (MMTP) packet described with reference to Fig. 9; or
the packet string of the type length value (TLV) packet described with reference to Fig. 10.

In a case where the MMT format data is recorded in the medium in accordance with the setting as illustrated in Fig. 9 or Fig. 10, and the reproduction processing of the MMT format data is performed by using a reproduction application corresponding to the BDAV format, the reproduction is performed by using a reproduction control information file corresponding to the BDAV format, that is, the playlist file or the clip information file.

Note that, the BDAV format is the data recording format, and also corresponds to the data recording and reproduction application standard, and the reproduction of the data recorded in the medium in accordance with the BDAV format is executed by using the reproduction application corresponding to the BDAV format.

The BDAV format defines a database file intrinsic to the BDAV format such as the playlist file or the clip information file that is the reproduction control information file, and the BDAV correspondence reproduction application executes the data reproduction processing by using the recording information of the reproduction control information file (the database file) .

As described above, the database file such as the playlist file or the clip information file of the BDAV format definition is originally defined as a file that can be generated on the basis of the distribution data of the MPEG-2TS format.

Accordingly, even in a case where the distribution data according to the MMT format different from the MPEG-2TS format is recorded in the playlist file or the clip information file of the existing BDAV format definition, as it is, there is a case where the distribution data is data in which the existing BDAV correspondence reproduction application is not capable of being used.

In order to record the MMT format data in the medium, and to enable the content reproduction to be performed by using the application corresponding to the BDAV format, it is necessary that a playlist file or a clip information file corresponding to MMT format data is generated and recorded in the medium at the time of performing the recording processing of the MMT format data with respect to the medium.

In addition, it is necessary to perform the reproduction by using the playlist file or the clip information file corresponding to MMT format data at the time of reproducing the MMT format data recorded in the medium.

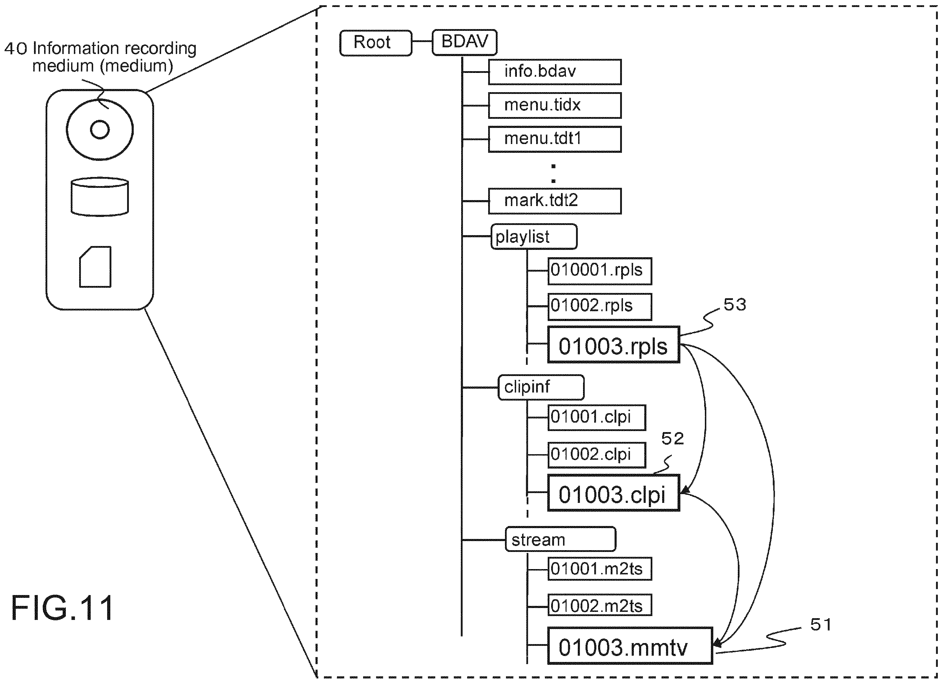

Specifically, as illustrated in Fig. 11, processing of generating a clip information file (nnnnn.clpi) 52 and a playlist file (nnnnn.rpls) 53 corresponding to an MMT format data storage clip AV stream file 51, of recording the clip information file (nnnnn.clpi) 52 and the playlist file (nnnnn.rpls) 53 in the medium (the BD, the flash memory, the HDD, and the like) to be used in the reproduction is necessary.

In a case where the MMT format data storage clip AV stream file 51 recorded in the medium is reproduced, the reproduction processing can be performed by using the clip information file (nnnnn.clpi) 52 and the playlist file (nnnnn.rpls) 53 corresponding to the MMT format data storage clip AV stream file 51.

However, as described above, data distributed in accordance with the MMT format that is the distribution data of the broadcasting station is not configured to include all of the recording data items of the playlist file or the clip information file defined in the BDAV format.

In addition, the MMT format data storage clip AV stream file 51 is a data form different from that of the MPEG-2TS format data, and thus, even in a case of using a playlist file or a clip information file including data having the same form as that of the playlist file or the clip information file corresponding to MPEG-2TS format data, correct reproduction processing is not capable of being executed.

Accordingly, in order to record the MMT format data in the medium, and to perform the content reproduction by using the application corresponding to the BDAV format, it is necessary to generate a playlist file or a clip information file having a data form intrinsic to the MMT format data that is capable of performing the reproduction control of the MMT format data storage clip AV stream file 51, and to record the playlist file or the clip information file in the medium.

### [5. Copy Processing Mode, and Copy Control Information in MMT Format Data]

Next, a copy processing mode of the data that is recorded in the medium, and copy control information of the MMT format data will be described.

For example, in a case where the MMTP packet or the TLV packet in which the content such as the image, the sound, and the caption is stored is recorded in the recording medium such as the Blu-ray (Registered Trademark) disc (BD), the flash memory, or the hard disk (HD), there is a case where the user further copies the medium recording data in another second medium.

However, as described above, most of the broadcasting content is content that is protected by the copyright, and various copy control information items are set by a content unit such as a broadcasting program.

For example, various copy control information items are set by a content (broadcasting program) unit, such as copy permitted content, copy prohibited content, and content in which the number of times of copy permission or the number of copy permissions are set.

Such copy control information relevant to the broadcasting content is stored in the packet (TLV Packet/MMTP Packet) that is transmitted through a broadcasting wave along with broadcasting program content, and is transmitted to the information processing apparatus on the user side.

Such data items are recorded in the medium such as the BD, and then, for example, copy processing is performed by using the application corresponding to the BDAV format.

However, an algorithm of performing processing in which the availability of the copy processing is determined with reference to the copy control information stored in the MMTP packet is not included in an application corresponding to the existing BDAV format.

Accordingly, in a case where some countermeasures are not performed, there is a possibility that disorder copy processing is performed in which the copy control information that is transmitted by a broadcasting wave is ignored.

The configuration of the present disclosure in which such a problem is solved, and thus, accurate copy control of observing the copy control information set in the MMT format data can be performed will be described later.

Before the configuration of the present disclosure is described, the copy processing mode of the data recorded in the medium, and the copy control information recorded in the MMT format data will be described.

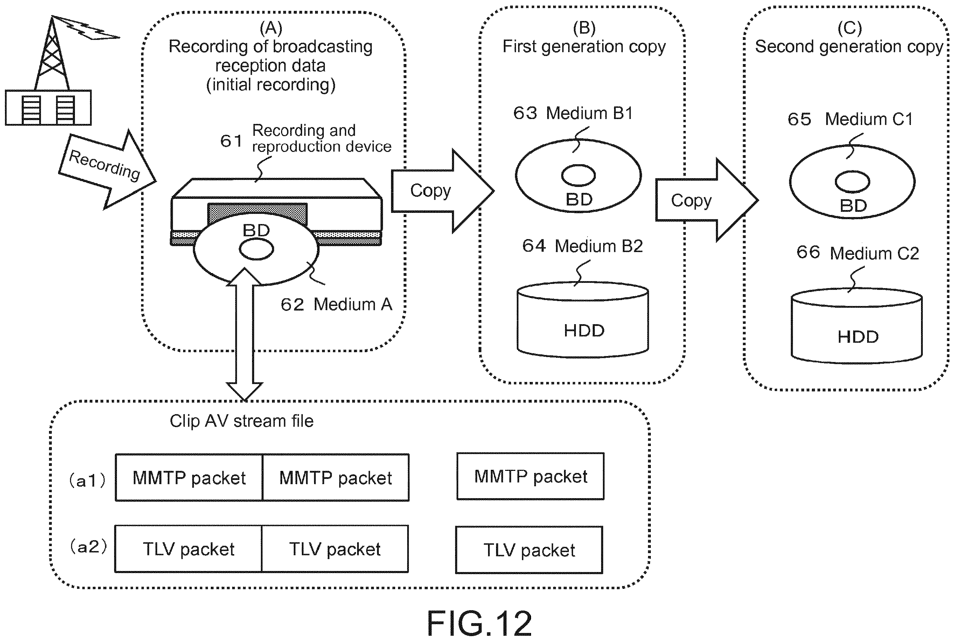

First, a specific example of processing of recording the MMT format data in the recording medium such as the BD, and of copying the recording data to other media will be described with reference to Fig. 12.

Fig. 12 illustrates three processings described below.
(A) Initial Recording of Broadcasting Reception Data
(B) First Generation Copy
(C) Second Generation Copy

(A) The initial recording of the broadcasting reception data is processing of inputting the data that is received from the transmission device such as the broadcasting station into a recording and reproduction device 61 to be recorded in a medium A 62.

The medium A 62, for example, is a BD, and as described above with reference to Fig. 11 and the like, is recorded as the BDAV format data.

As described above with reference to Fig. 9 and Fig. 10, the clip AV stream file configuring the BDAV format data that is recorded in the medium A 62 includes the MMTP packet string or the TLV packet string.

As illustrated on the lower portion of Fig. 12, the clip AV stream file including any packet string of:
(a1) the MMTP packet string; and
(a2) the TLV packet string
is recorded in the medium A 62.

The recording and reproduction device 61, or other recording and reproduction devices are capable of copying the recording data of the medium A 62 to the other media.

According to such copy processing, as illustrated in Fig. 12(B), it is possible to generate a medium B1 63, a medium B2 64, or the like that is a medium in which the first generation copy data is recorded.

Further, the recording and reproduction device 61, or the other recording and reproduction devices are capable of copying the first generation copy data that is recorded in the medium B1 63, the medium B2 64, or the like to the other media.

According to such copy processing, as illustrated in Fig. 12(C), it is possible to generate a medium C1 65, a medium C2 66, or the like that is a medium in which the second generation copy data is recorded.

In the drawing, only the first generation copy data and the second generation copy data are illustrated, but it is also possible to prepare the third generation copy data, the fourth generation copy data, ..., and the multi-generation copy data.

However, as described above, most of the broadcasting content is content that is protected by the copyright, and various copy control information items are set by the content unit such as the broadcasting program.

For example, various copy control information items are set by the content (broadcasting program) unit, such as the copy permitted content, the copy prohibited content, content in which the number of times of copy permission or the number of copy permissions are set.

Such copy control information relevant to the broadcasting content is stored in the packet (TLV Packet/MMTP Packet) that is transmitted through the broadcasting wave along with the broadcasting program content, and is transmitted to a reception device on the user side.

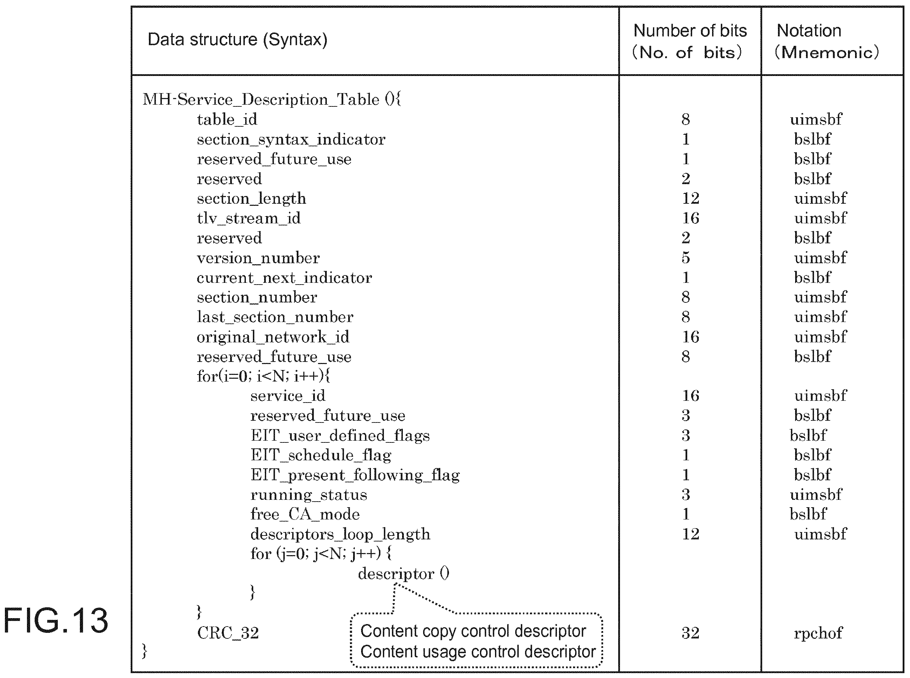

The copy control information that is transmitted along with the broadcasting program content from the broadcasting station or the like will be described with reference to Fig. 13.

The copy control information that is transmitted from the broadcasting station or the like along with the broadcasting program content, for example, is transmitted by being stored in the MMTP packet in which the control information corresponding to the broadcasting program is stored. Specifically, for example, the copy control information is recorded in a service description table (MH-SDT) in which writing is interlaced in the packet.

Fig. 13 is a diagram illustrating a data configuration (syntax) of the service description table (MH-SDT) that is stored in the MMTP packet.

Note that, the number of bits (No. of bits), data notation (Mnemonic) are illustrated along with the data configuration (Syntax).

Note that, "uimsbf" in the data notation indicates "an unsigned integer, the uppermost bit is the first" (unsigned integer most significant bit first) notation.

"bslbf" indicates "a bit string, a left bit is the first" (bit string, left bit first).

Note that, the control information relevant to the MMT format data is recorded in a plurality of tables in accordance with the type (the category) of control information.

As described above, for example, the following tables are provided.
(a) TLV-NIT (network information table)
(b) MH-BIT (Broadcaster Information Table)
(c) MH-SDT (Service Description Table)
(d) MH-EIT (Event Information Table)
(e) MH-TOT (Time Offset Table)
(f) MMT Package Table (MPT)

Further, each of lower control information items that is included in a specific category and is finely sorted is recorded in such tables by a descriptor (descriptor) unit.

In a descriptor (descriptor) recording region of the service description table (MH-SDT) illustrated in Fig. 13, the following descriptors:
(1) content copy control descriptor; and
(2) content usage control descriptor are recorded.

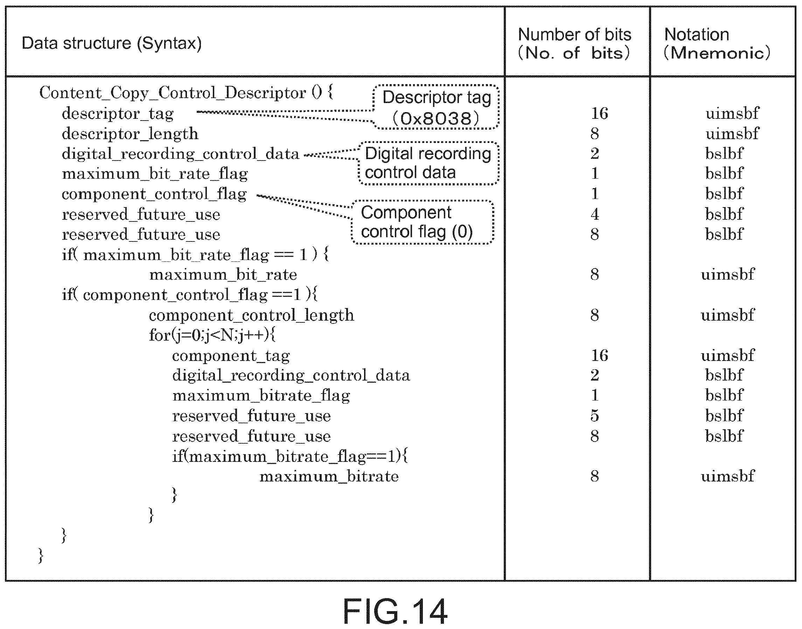

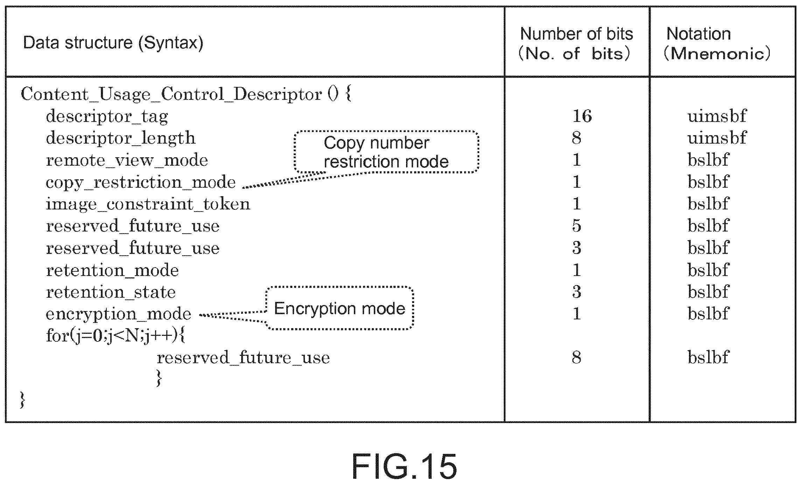

A specific data configuration of such two descriptors will be described with reference to Fig. 14 and Fig. 15.

First, a data configuration (Syntax) of "(1) Content Copy Control Descriptor" will be described with reference to Fig. 14.

As illustrated, for example, each of the following data items is recorded in the content copy control descriptor illustrated in Fig. 14.
Descriptor Tag (descriptor_tag)
Digital Recording Control Data (digital_recording_control_data)
Component Control Flag (component_control_flag)

In the descriptor tag (descriptor_tag), an identification tag (0×8038) indicating that the descriptor (descriptor) is a content copy control descriptor is recorded.

In the digital recording control data (digital_recording_control_data), a value indicating whether or not to execute the copy processing as digital recording is recorded.

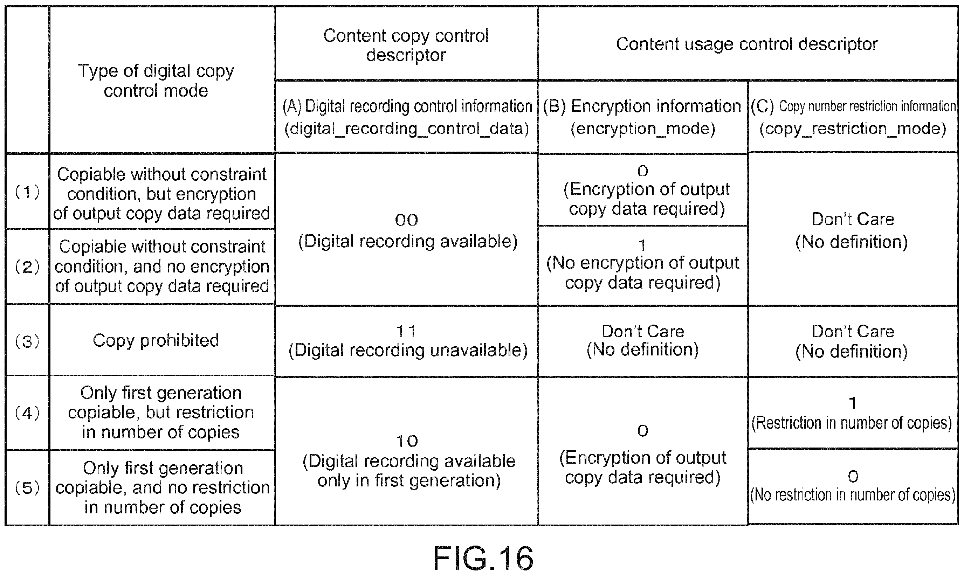

A specific example will be described later with reference to Fig. 16 and the like.

In the component control flag (component_control_flag), a value indicating whether or not the descriptor (content copy control descriptor) is valid is recorded. For example, one bit described below is recorded.
Valid = 0
Invalid = 1

Next, a data configuration (Syntax) of the "content usage control descriptor" that is another descriptor recorded as the descriptor (descriptor) of the service description table (MH-SDT) illustrated in Fig. 13 will be described with reference to Fig. 15.

As illustrated in Fig. 15, for example, each of the following data items is recorded in the "content usage control descriptor".
Copy Number Restriction Mode
(copy_restriction_mode)
Encryption Mode (encryption_mode)

In the copy number restriction mode (copy_restriction_mode), data indicating whether or not there is a restriction in the number of copies that can be copied is recorded.

For example, the following data items:
Restriction in Number of Copies = 1; and
No Restriction in Number of Copies = 0 are recorded.

In the encryption mode (encryption_mode), data indicating whether or not it is necessary that output data in a case of performing the copy processing is output as the encryption data is recorded.

For example, the following data items:
Encryption of Output Data Required = 0; and
No Encryption of Output Data Required = 1 are recorded.

In the service description table (MH-SDT) illustrated in Fig. 13, as described above with reference to Fig. 14 and Fig. 15, three types of copy control associated information items described below are recorded.
(A) Digital Recording Control Information (digital_recording_control_data)
(B) Encryption Information (encryption_mode)
(C) Copy Number Restriction Information (copy_restriction_mode)

Fig. 16 is a diagram in which the type (five types) of digital copy control mode and the setting of three types of control information items defined in the MMT format described above are summarized as a table.

Fig. 16 illustrates five types described below as the type of digital copy control mode.
(1) Copiable without Constraint Condition, but Encryption of Output Copy Data Required
(2) Copiable without Constraint Condition, and No Encryption of Output Copy Data Required
(3) Copy Prohibited
(4) Only First Generation Copiable, but Restriction in Number of Copies
(5) Only First Generation Copiable, and No Restriction in Number of Copies

In five types of digital copy control modes described above, as illustrated, the setting of three types of control information items defined in the MMT format described above are set as follows.
(1) Copiable without Constraint Condition, but Encryption of Output Copy Data Required
   (A) Digital Recording Control Information = 00 (Digital Recording Available)
   (B) Encryption Information = 0 (Encryption of Output Copy Data Required)
   (C) Copy Number Restriction Mode = Don't Care (No Definition)
(2) Copiable without Constraint Condition, and No Encryption of Output Copy Data Required
   (A) Digital Recording Control Information = 00 (Digital Recording Available)
   (B) Encryption Information = 1 (No Encryption of Output Copy Data Required)
   (C) Copy Number Restriction Mode = Don't Care (No Definition)
(3) Copy Prohibited
   (A) Digital Recording Control Information = 11 (Digital Recording Unavailable)
   (B) Encryption Information = Don't Care (No Definition)
   (C) Copy Number Restriction Mode = Don't Care (No Definition)
(4) Only First Generation Copiable, but Restriction in Number of Copies
   (A) Digital Recording Control Information = 10 (Digital Recording Available Only in First Generation)
   (B) Encryption Information =0 (Encryption of Output Copy Data Required)
   (C) Copy Number Restriction Mode = 1 (Restriction in Number of Copies)
(5) Only First Generation Copiable, and No Restriction in Number of Copies
   (A) Digital Recording Control Information = 10 (Digital Recording Available Only in First Generation)
   (B) Encryption Information = 0 (Encryption of Output Copy Data Required)
   (C) Copy Number Restriction Mode = 0 (No Restriction in Number of Copies)

Five types of digital copy control modes (1) to (5) illustrated in Fig. 16, three types of control information items defined in the MMT format, that is:
(A) Digital Recording Control Information (digital_recording_control_data);
(B) Encryption Information (encryption_mode); and
(C) Copy Number Restriction Information (copy_restriction_mode).

As illustrated in Fig. 16, such recording data items are set as described above.

### [6. Configuration in Which Information Processing Apparatus Executing Copy Processing Is Capable of Acquiring Copy Control Information of MMT Format Data That Is Recorded in Medium]

Next, a configuration will be described in which the information processing apparatus executing the copy processing is capable of performing accurate copy control of observing the copy control information of the MMT format data recorded in the medium.

As described above, the broadcasting content data is recorded in the medium such as the BD, and then, for example, the copy processing is performed by using the application corresponding to the BDAV format.

However, an algorithm of performing processing in which the availability of the copy processing is determined with reference to the copy control information stored in the MMTP packet is not included in the application corresponding to the existing BDAV format.

Accordingly, in a case where some countermeasures are not performed, there is a possibility that disorder copy processing is performed in which the copy control information that is transmitted by a broadcasting wave is ignored.

Hereinafter, a configuration of solving such a problem will be described.

That is, a configuration will be described in which in a case where the distribution data according to the MMT format is input and recorded in the recording medium such as the BD, and the recording data is copied to the other media, accurate copy control of observing the copy control information set in the original MMT format data can be performed.

### [6-1. Example of Setting Additional Header in Which Copy Control Information Is Recorded in Packet Unit]

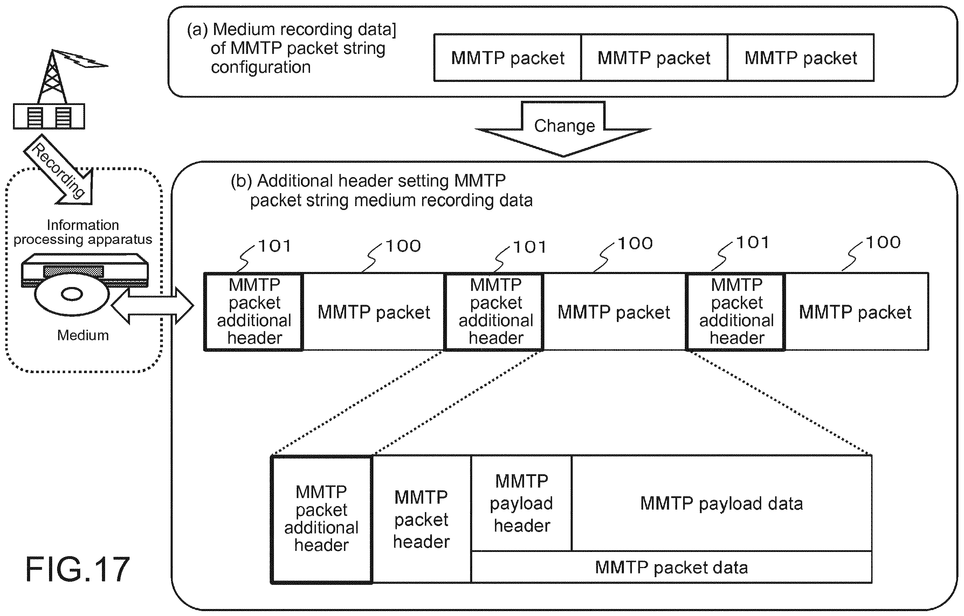

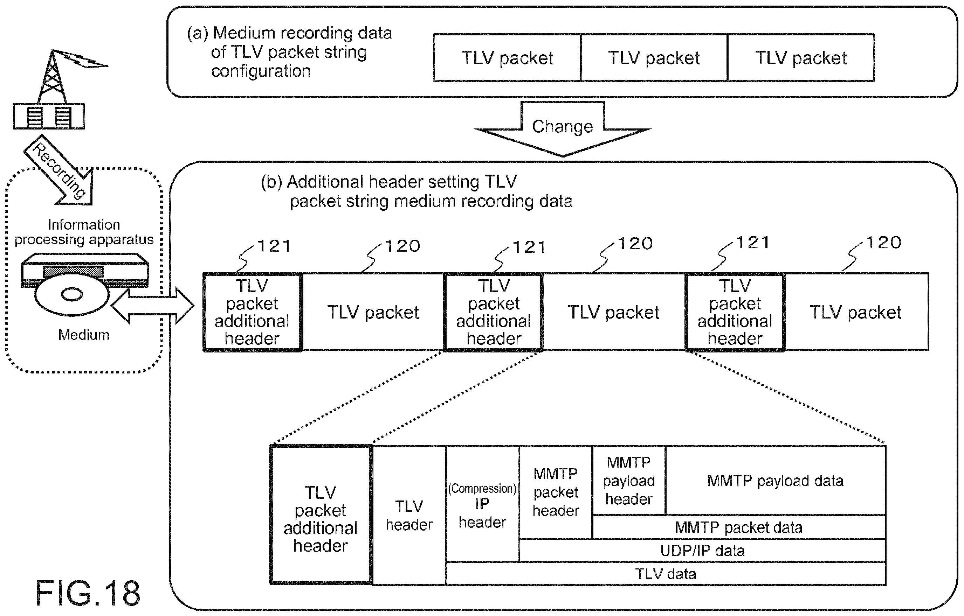

First, an example in which an additional header in which the copy control information is recorded is set by a packet unit will be described with reference to Fig. 17 and Fig. 18.

In the configuration of the present disclosure, the information processing apparatus executing the data recording (the initial recording) with respect to the medium by inputting the transmission data from the transmission device such as the broadcasting station acquires the service description table (MH-SDT) that is included in the input MMT format data, and reads the copy control information that is recorded in the service description table (MH-SDT).

Further, the information processing apparatus generates a header (the additional header) in which the copy control information acquired from the service description table (MH-SDT) is recorded, inserts the header into the top of each of the MMTP packets or the top of each of the TLV packets to be recorded in the medium.

Fig. 17 is a diagram illustrating a processing example in a case where the packet string that is recorded in the medium is the MMTP packet string.

As illustrated in Fig. 17, the information processing apparatus executing the data recording (the initial recording) with respect to the medium by inputting the transmission data from the transmission device such as the broadcasting station sets the additional header (an MMTP packet additional header 101) on the first portion of each MMTP packet 100 recorded in the medium to be recorded in the medium.

The copy control information corresponding to the storage data of the subsequent MMTP packet 100 is recorded in the MMTP packet additional header 101.

Specifically, for example, the additional header is recorded in which each value of three types of control information items of the MMT format definition described with reference to Fig. 16, that is:
(A) Digital Recording Control Information (digital_recording_control_data);
(B) Encryption Information (encryption_mode); and
(C) Copy Number Restriction Information (copy_restriction_mode)
   are recorded.

The additional header is recorded in the medium, and thus, a copy device (the information processing apparatus) executing the copy processing is capable of acquiring each setting value of copy control information corresponding to the MMT format with respect to the storage data of the subsequent MMTP packet, that is:
(A) Digital Recording Control Information (digital_recording_control_data);
(B) Encryption Information (encryption_mode); and
(C) Copy Number Restriction Information (copy_restriction_mode)
   on the basis of the recording content of the additional header.

As a result thereof, it is possible to determine whether or not the storage data of the MMTP packet subsequent to the additional header is the copy control target content corresponding to any one of five types of digital copy control modes (1) to (5) illustrated in Fig. 16, that is, five types of:
(1) Copiable without Constraint Condition, but Encryption of Output Copy Data Required;
(2) Copiable without Constraint Condition, and No Encryption of Output Copy Data Required;
(3) Copy Prohibited;
(4) Only First Generation Copiable, but Restriction in Number of Copies; and
(5) Only First Generation Copiable, and No Restriction in Number of Copies.

The copy device (the information processing apparatus) executing the copy processing is capable of performing the data copy processing with respect to the medium by observing the original copy control information corresponding to the MMT format in a MMTP packet unit, on the basis of the determination.

The example illustrated in Fig. 17 is a processing example in a case where the recording data with respect to the medium is set as the MMTP packet string.

As described above with reference to Fig. 9 and Fig. 10, it is assumed that the recording data with respect to the medium is set as any one of:
the MMTP packet string; or
the TLV packet string.

A setting example of the additional header in a case where the recording data with respect to the medium is set as the TLV packet string will be described with reference to Fig. 18.

In this case, as illustrated in Fig. 18, the information processing apparatus executing the data recording (the initial recording) with respect to the medium by inputting the transmission data from the transmission device such as the broadcasting station sets additional header (a TLV packet additional header 121) on the first portion of each TLV packet 120 recorded in the medium to be recorded in the medium.

The copy control information corresponding to the storage data of the subsequent TLV packet 120 is recorded in the TLV packet additional header 121.

That is, each value of:
(A) Digital Recording Control Information (digital_recording_control_data);
(B) Encryption Information (encryption_mode); and
(C) Copy Number Restriction Information (copy_restriction_mode)
   is recorded.

The copy device (the information processing apparatus) executing the copy processing by recording the additional header in the medium is capable of acquiring each setting value of the copy control information corresponding to the MMT format with respect to the storage data of the subsequent TLV packet, that is:
(A) Digital Recording Control Information (digital_recording_control_data);
(B) Encryption Information (encryption_mode); and
(C) Copy Number Restriction Information (copy_restriction_mode)
   on the basis of the recording content of the additional header.

As a result thereof, it is possible to determine whether or not the storage data of the TLV packet subsequent to the additional header is the copy control target content corresponding to any one of five types of digital copy control modes (1) to (5) illustrated in Fig. 16, that is, five types of:
(1) Copiable without Constraint Condition, but Encryption of Output Copy Data Required;
(2) Copiable without Constraint Condition, and No Encryption of Output Copy Data Required;
(3) Copy Prohibited;
(4) Only First Generation Copiable, but Restriction in Number of Copies; and
(5) Only First Generation Copiable, and No Restriction in Number of Copies.

The copy device (the information processing apparatus) executing the copy processing is capable of performing the data copy processing with respect to the medium by observing the original copy control information corresponding to the MMT format in the MMTP packet unit, on the basis of the determination.

### [6-2. Example of Setting Additional Header in Which One Copy Control Information Item is Recorded with Respect to Plurality of Packets]

In the example described above, for example, as described with reference to Fig. 17 and Fig. 18, a configuration example of individually setting the additional header in which the copy control information is recorded by one MMTP packet or one TLV packet unit has been described.

However, a setting mode of the additional header in which the copy control information is recorded is not limited to a configuration of setting the additional header by one packet unit.

For example, the configuration may be a configuration of setting one additional header with respect to a plurality of packets.

Hereinafter, an example of setting the additional head in which one copy control information item is recorded with respect to a plurality of packet, or data having a predetermined length including a plurality of packet data items will be described.

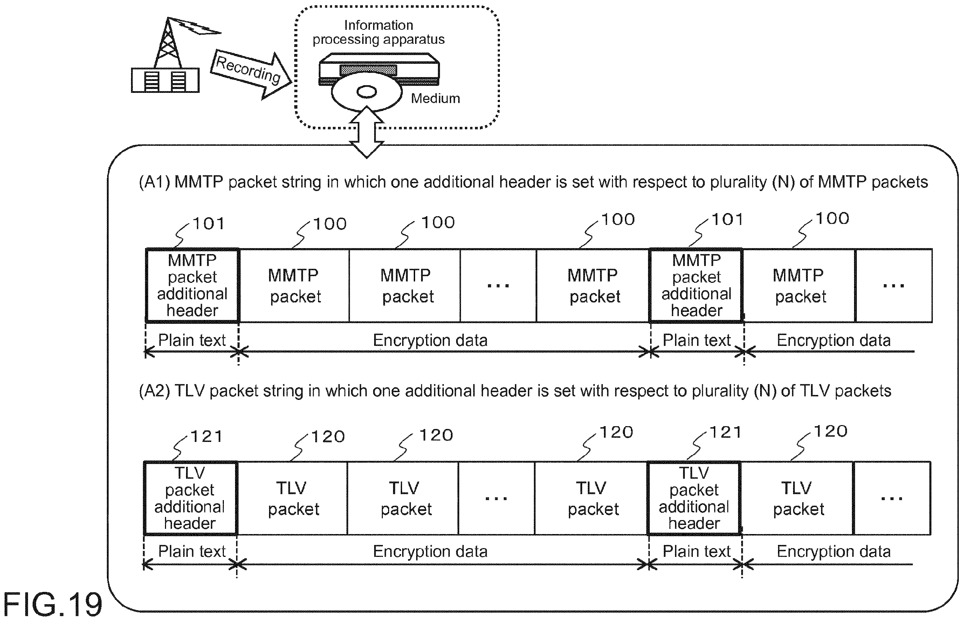

Three additional header setting examples described below will be described with reference to Fig. 19 and the like.
(Example 1) Example of Setting One Copy Control Information Recording Additional Header with Respect to N Packets (MMTP Packets or TLV Packets)
(Example 2) Example of Setting One Copy Control Information Recording Additional Header with Respect to Packet (MMTP Packet or TLV Packet) Configuration Data Having Fixed Length
(Example 3) Example of Setting One Copy Control Information Recording Additional Header with Respect to Packet (MMTP Packet or TLV Packet) Configuration Data Having Variable Length

Hereinafter, such additional header setting examples will be sequentially described.

### [6-2-1. (Example 1) Example of Setting One Copy Control Information Recording Additional Header with Respect to N Packets (MMTP Packet or TLV Packet)]

First, an example of setting the additional header in which one copy control information is recorded with respect to N packets (MMTP packets or TLV packets) will be described with reference to Fig. 19.

Fig. 19 is a diagram illustrating a configuration example of the recording data with respect to the medium, as described above with reference to Fig. 17 or Fig. 18.

As illustrated in Fig. 19, the information processing apparatus recording the data received from the transmission device such as the broadcasting station in the medium, the additional header in which one copy control information is recorded is set and recorded with respect to a plurality of (N) packets (MMTP packets or TLV packets).

Fig. 19 illustrates packet strings that are two data recording examples described below.
(A1) MMTP Packet String in Which One Additional Header Is Set with Respect to Plurality of (N) MMTP Packets
(A2) TLV Packet String in Which One Additional Header Is Set with Respect to Plurality of (N) TLV Packets

The example illustrated in (A1) is an example in which the MMTP packet 100 recorded in the medium is separated into N units, and the additional header (the MMTP packet additional header 101) is set on the first portion of N MMTP packets to be recorded in the medium.

The example illustrated in (A2) is an example in which the TLV packet 120 recorded in the medium is separated into N units, and the additional header (the TLV packet additional header 121) is set on the first portion of N TLV packets to be recorded in the medium.

In this example, N is greater than or equal to 2.

Note that, in the drawing, an example of setting the additional headers 101 and 121 as a plain text, and of setting the MMTP packet 100 and the TLV packet 120 as a code text is illustrated as an example, but an example of recording the MMTP packet 100 and the TLV packet 120 as a plain text can also be provided.

The copy control information corresponding to the storage data of the subsequent plurality of (N) MMTP packets 100 is recorded in the MMTP packet additional header 101.

The copy control information corresponding to the storage data of the subsequent plurality of (N) TLV packets 120 is recorded in the TLV packet additional header 121.

The copy device (the information processing apparatus) executing the copy processing by recording the additional header in the medium is capable of acquiring the copy control information corresponding to the MMT format with respect to the storage data of the subsequent plurality of MMTP packets or TLV packets, on the basis of the recording content of the additional header.

### [6-2-2. (Example 2) Example of Setting One Copy Control Information Recording Additional Header with Respect to Fixed Length Packet (MMTP Packet or TLV Packet) Configuration Data]

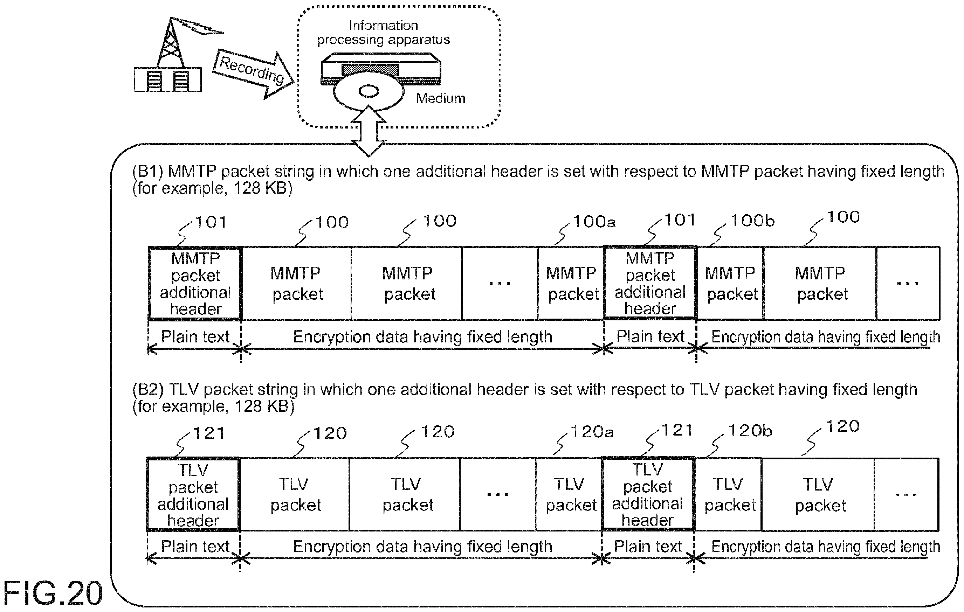

Next, an example of setting one copy control information recording additional header with respect to the packet (the MMTP packet or the TLV packet) configuration data having a fixed length will be described with reference to Fig. 20.

Fig. 20 is a diagram illustrating a configuration example of the recording data with respect to the medium, as illustrated in Fig. 19.

As illustrated in Fig. 20, the information processing apparatus recording the data received from the transmission device such as the broadcasting station in the medium sets the additional header in which one copy control information is recorded with respect to the plurality of packet (MMTP packet or TLV packet) configuration data items.

In this example, a data length of the packet configuration data subsequent to one additional header 101 and one additional header 121 is a fixed length.

Specifically, for example, fixed length data of 128 KB is set to be subsequent to one additional header.

In this case, as illustrated in the MMTP packets 100a and 100b or the TLV packets 120a and 120b, there is a case where one MMTP packet or one TLV packet is divided by the additional headers 101 and 121.

Fig. 20 illustrates packet strings that are two data recording examples described below.
(B1) MMTP Packet String in Which One Additional Header Is Set with Respect to MMTP Packet Having Fixed Length (for example, 128 KB)
(B2) TLV Packet String in Which One Additional Header Is Set with Respect to TLV Packet Having Fixed Length (for example, 128 KB)

Note that, in the drawing, an example of setting the additional headers 101 and 121 as a plain text, and of setting the MMTP packet 100 and the TLV packet 120 as a code text is illustrated as an example, but an example of recording the MMTP packet 100 and the TLV packet 120 as a plain text can also be provided.

The copy control information corresponding to the storage data of the subsequent MMTP packet 100 having a fixed length is recorded in the MMTP packet additional header 101.

The copy control information corresponding to the storage data of the subsequent TLV packet 120 having a fixed length is recorded in the TLV packet additional header 121.

### [6-2-3. (Example 3) Example of Setting One Copy Control Information Recording Additional Header with Respect to Variable Length Packet (MMTP Packet or TLV Packet) Configuration Data]

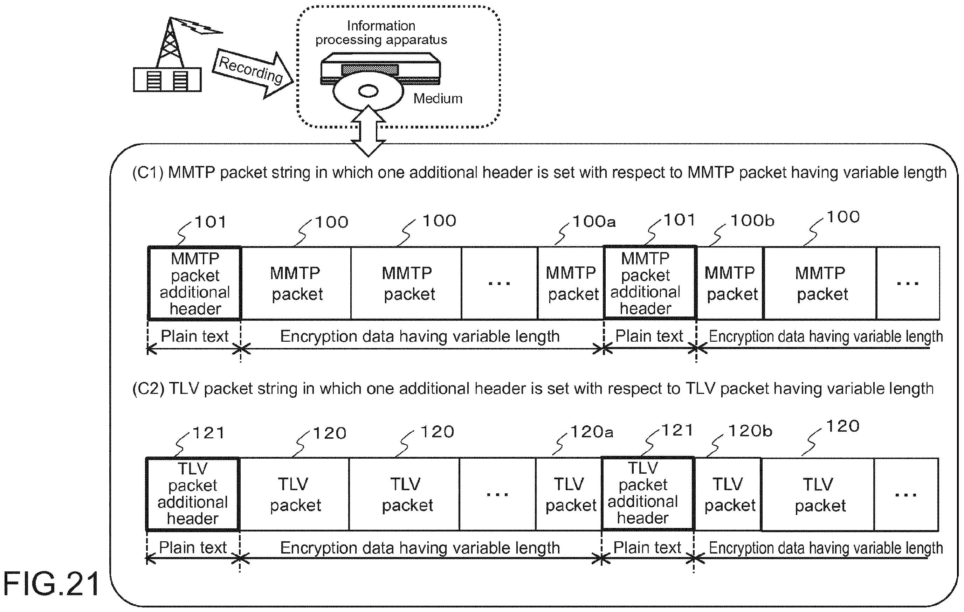

Next, an example of setting one copy control information recording additional header with respect to the packet (MMTP packet or TLV packet) configuration data having a variable length will be described with reference to Fig. 21.

Fig. 21 is a diagram illustrating a configuration example of the recording data with respect to the medium, as illustrated in Fig. 19.

As illustrated in Fig. 21, the information processing apparatus recording the data received from the transmission device such as the broadcasting station in the medium sets the additional header in which one copy control information is recorded with respect to the plurality of packet (MMTP packet or TLV packet) configuration data items.

In this example, a data length of the packet configuration data subsequent to one additional header 101 and one additional header 121 is variable length.

In this example, as with the example illustrated in Fig. 20, there is a case where one MMTP packet or one TLV packet is divided by the additional headers 101 and 121, as with the MMTP packets 100a and 100b or the TLV packets 120a and 120b illustrated in Fig. 21.

Fig. 21 illustrates packet strings that are two data recording examples described below.
(C1) MMTP Packet String in Which One Additional Header Is Set with Respect to MMTP Packet Having Variable Length
(C2) TLV Packet String in Which One Additional Header Is Set with Respect to TLV Packet Having Variable Length

Note that, in the drawing, an example of setting the additional headers 101 and 121 as a plain text, and of setting the MMTP packet 100 and the TLV packet 120 as a code text is illustrated as an example, but an example of recording the MMTP packet 100 and the TLV packet 120 as a plain text can also be provided.

The copy control information corresponding to the storage data of the subsequent MMTP packet 100 having a variable length is recorded in the MMTP packet additional header 101.

The copy control information corresponding to the storage data of the subsequent TLV packet 120 having a variable length is recorded in the TLV packet additional header 121.

As described above, in the stream file in which the MMT format data is stored as the reproduction data, the additional header is set by the packet unit, or a block unit including a predetermined data length, such as a plurality of packets, and the copy control information of the subsequent block is stored in the additional header.

Note that, even though it will be described later, each block is subjected to block encryption of a block unit by an encryption key that is generated by using the configuration data of the additional header as a seed, and is recorded in the recording medium.

### [6-3. Example of Recording Data of Additional Header]

Next, a specific data configuration example of the additional header in which the copy control information described above is recorded will be described.

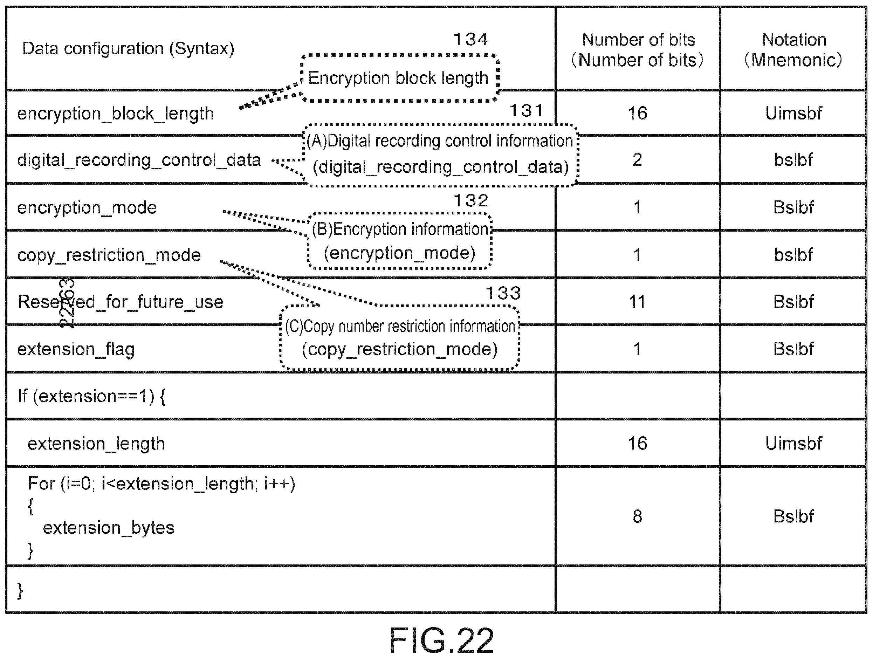

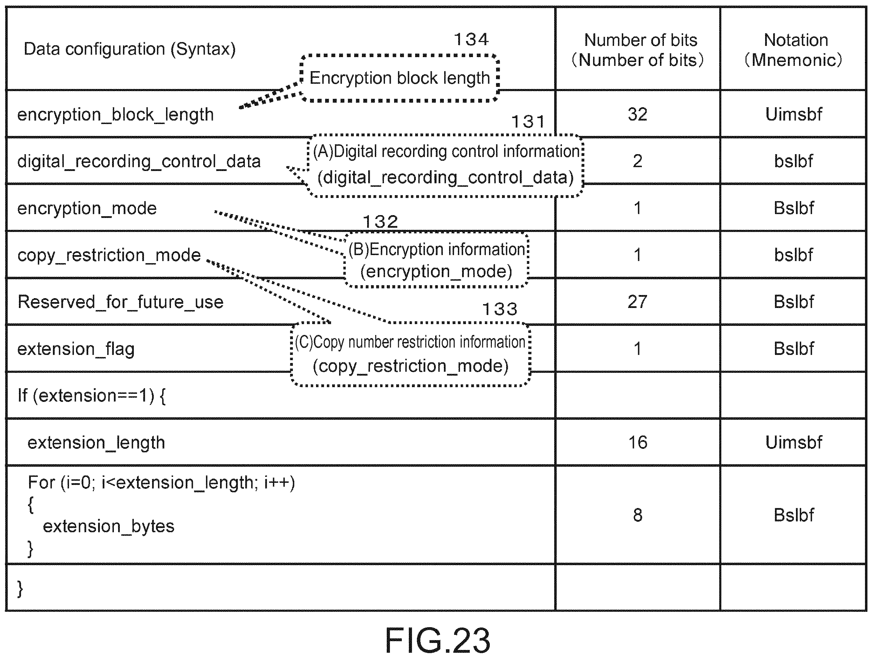

Fig. 22 and Fig. 23 are diagrams illustrating an example of a data configuration (Syntax) example of the recording data of the additional header 101 corresponding to the MMTP packet and the additional header 121 corresponding to the TLV packet described with reference to Fig. 17 to Fig. 21.

Fig. 22 illustrates an example of the recording data of the additional header 101 corresponding to the MMTP packet.

As illustrated in Fig. 22, each of the following data items is recorded in the MMTP packet additional header.
(A) Digital Recording Control Information (digital_recording_control_data) 131
(B) Encryption Information (encryption_mode) 132
(C) Copy Number Restriction Information (copy_restriction_mode) 133

Each of the data items corresponds to the data recorded in the service description table (MH-SDT) that is the control information recording table defined in the MMT format described above with reference to Fig. 13 to Fig. 16.

As illustrated in Fig. 16, (A) the digital recording control information (digital_recording_control_data) has any one setting of:
Digital Recording Available (Setting Bit Value = 00) ;
Digital Recording Unavailable (11); and
Only Digital Recording of First Generation Available (10).

As illustrated in Fig. 16, (B) the encryption information (encryption_mode) has any one setting of:
Encryption of Output Copy Data Required (0); and
No Encryption of Output Copy Data Required (1).

As illustrated in Fig. 16, (C) the copy number restriction information (copy_restriction_mode) has any one setting of:
Restriction in Number of Copies (1); and
No Restriction in Number of Copies (0).

The information processing apparatus executing the data recording (the initial recording) with respect to the medium by inputting the transmission data from the transmission device such as the broadcasting station acquires the service description table (MH-SDT) included in the input MMT format data, and reads the copy control information items (A) to (C) described above that are recorded in the service description table (MH-SDT).

Further, the information processing apparatus generates the MMTP packet additional header in which the copy control information items (A) to (C) acquired from the service description table (MH-SDT) is recorded, and sets each of the MMTP packets to the first to be recorded in the medium.

Note that, setting of recording only at least one data items selected from (A) to (C) described above in the additional header can also be performed.

Each setting value of:
(A) Digital Recording Control Information (digital_recording_control_data) 131;
(B) Encryption Information (encryption_mode) 132; and
(C) Copy Number Restriction Information (copy_restriction_mode) 133
   of the MMTP packet additional header illustrated in Fig. 22 is the copy control information of the data that is stored in the subsequent MMTP packet.

As described above, the copy control information relevant to the subsequent data is recorded in the additional header 101.

For example, the information processing apparatus copying the data including the MMTP packet string that is recorded in the medium to the other media is capable of acquiring the copy control information of the data in the subsequent MMTP packet by reading the data of the additional header that is set in each of the MMTP packets, and is capable of performing the copy processing of observing the copy control information corresponding to the original MMT format data.

Note that, as illustrated in Fig. 22, length data indicating the length of the encryption block subsequent to the additional header is also recorded on the top of the MMTP packet additional header.

The device executing, for example, the copy processing by recording the length data in the additional header is capable of grasping a separation position of each of the MMTP packets from the MMTP packet string that is recorded in the medium, and of sequentially acquiring and reading the MMTP packet additional header on the first portion of the MMTP packet.

Fig. 23 is a diagram illustrating an example of a data configuration (Syntax) example of the recording data of the additional header 121 corresponding to the TLV packet described with reference to Fig. 17 to Fig. 21.

As illustrated in Fig. 23, each of the following data items is recorded in the TLV packet additional header.
(A) Digital Recording Control Information (digital_recording_control_data) 131
(B) Encryption Information (encryption_mode) 132
(C) Copy Number Restriction Information (copy_restriction_mode) 133

Each of the data items is the same data items as the recording data of the additional header 101 corresponding to the MMTP packet described with reference to Fig. 22.

Further, the encryption block length (encryption_block_length) 134 is additionally recorded.

The encryption block length (encryption_block_length) 134 illustrated in Fig. 22 and Fig. 23 is data indicating a data length of a packet subsequent to the additional header.

Note that, in a case where the packet subsequent to the additional header is not the encryption data, a block length (block_length) may be recorded.

Note that, the length of data (a data length) including a plurality of packets the subsequent to the additional header may be defined in advance. For example, an allowable minimum length or maximum length is defined in advance, and the data length is set to be in a definition range.

In addition, a flag indicating whether or not the data stored in the packet subsequent to the additional header is the encryption data, that is:
(D) Encryption Flag (encryption_flag),
may be recorded in the additional header, in addition to the data items (A) to (C) illustrated in Fig. 22 and Fig. 23.

For example, a case of Encryption Flag = 00 indicates that the data stored in the subsequent packet is non-encryption data (= Plain Text Data).

A case of Encryption Flag = 11 indicates that the data stored in the subsequent packet is the encryption data.

Note that, for example, scramble data is also included in the encryption data.

As described above, for example, the following copy control information items are recorded in the additional header.
(A) Digital Recording Control Information (digital_recording_control_data) 131
(B) Encryption Information (encryption_mode) 132
(C) Copy Number Restriction Information (copy_restriction_mode) 133
(D) Encryption Flag (encryption_flag)

For example, the information processing apparatus copying the data including the packet string (the MMTP packet string or the TLV packet string) recorded in the medium in the other media is capable of acquiring the copy control information of the data in the subsequent packet by reading the data of the additional header, and is capable of performing the copy processing of observing the copy control information corresponding to the original MMT format data.

Further, it is possible to immediately determine whether the data stored in the MMTP packet is the encryption data or the plain text data, on the basis of the encryption flag recorded in the additional header, and thus, for example, in a case of performing the reproduction processing, it is possible to immediately determine the necessity of the decoding processing by the MMTP packet unit.

In addition, when the copy processing is performed, it is possible to immediately determine the necessity of decoding processing or re-encryption processing with respect to the copy target data by the MMTP packet unit, on the basis of the encryption flag.

### [7. Example of Encryption Processing When Packet String in Which Additional Header is Set Is Recorded in Medium]

Next, an example of the encryption processing in a case of recording the packet string in which additional header is set in the medium will be described.

As described above, the information processing apparatus that receives the broadcasting wave including the MMT format data, and records the data in the information recording medium (medium) newly adds the additional header (the MMTP packet additional header or the TLV packet additional header) with respect to the MMTP packet or the TLV packet in which the MMT format data is stored, and records the copy control information in such an additional header to be recorded in the information recording medium (medium).

When the data recording processing is performed with respect to the information recording medium (medium), there is a case where the re-encryption processing of the packet (MMTP packet or TLV packet) storage data is required.

For example, it is necessary that a standard for protecting the copyright the recording data of the information recording medium (medium) such as the Blu-Ray (Registered Trademark) disc (BD), the HD, and the DVD is defined by an advanced access content system (AACS), and an encryption mode of medium recording content of the BD is a system according to the AACS definition.

However, the broadcasting content is not restricted by the AACS definition, it is not necessary to use the encryption mode of the AACS definition, and distribution is performed in a unique encryption mode.

Accordingly, it is necessary that the information processing apparatus that receives the broadcasting wave including the MMT format data, and records the data in the information recording medium (medium) reads out the encryption data that is received as the broadcasting data, or the recording data of a first medium such as a hard disk in which the encryption data is recorded as it is, decodes the data once, and after that, performs the re-encryption in the system according to the AACS definition, and records the data in the information recording medium (a second medium) that is a copy destination.

As described above, in the stream file in which the MMT format data is stored as the reproduction data, the additional header is set by the block unit having a predetermined data length, such as the packet unit or the plurality of packets, and the copy control information of the subsequent block is stored in the additional header. Each of the blocks is subjected to the block encryption of the block unit by the encryption key that is generated by using the configuration data of the additional header as the seed, and is recorded in the recording medium.

Hereinafter, the encryption processing example will be described.

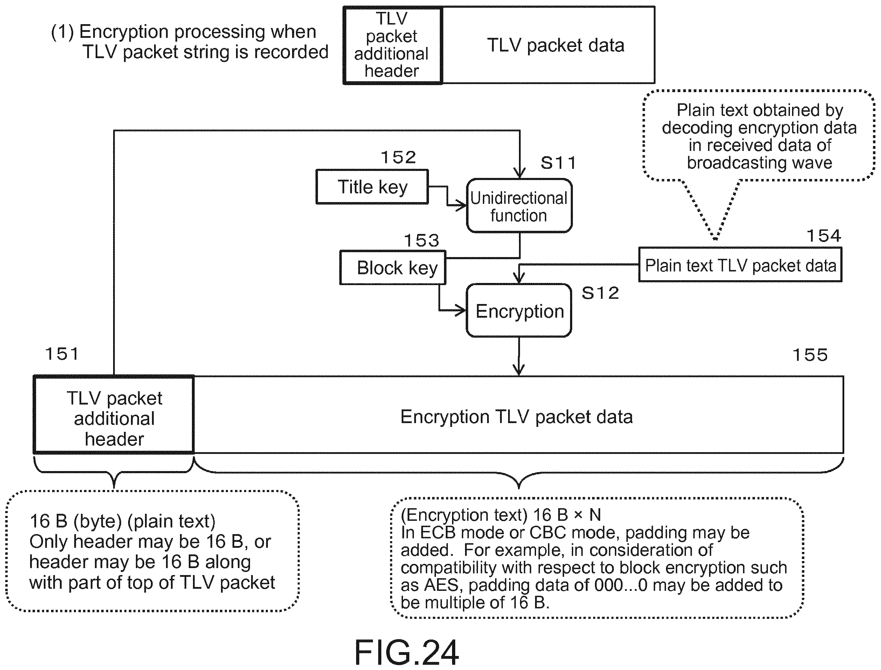

First, an encryption processing example in a case of recording the TLV packet string described above with reference to Fig. 10 in the information recording medium (medium) will be described with reference to Fig. 24.

The information processing apparatus adds the TLV packet additional header in which the copy control information is recorded to the TLV packet to be recorded in the information recording medium (medium).

Fig. 24 illustrates the sequence of the encryption processing in a case where the processing is executed.

First, the information processing apparatus acquires a TLV packet additional header 151 in which the copy control information is recorded.

The TLV packet additional header 151 includes plain text data of 16 bytes. Note that, in a case where the TLV packet additional header is less than 16 bytes, a part of the data on the top of the TLV packet may be combined with the TLV packet additional header as the plain text data to be the TLV packet additional header 151 of 16 bytes.

### (Step S11)

The information processing apparatus acquires the TLV packet additional header 151 of 16 bytes, and in Step S11, executes an arithmetic operation using a unidirectional function to which a title key 152 generated in advance by random number generation processing or the like is applied, and generates a block key 153.

That is, the block key 153 that is the encryption key of the block unit (a cryptographic processing unit) is generated by using configuration data of the TLV packet additional header 151 of 16 bytes as seed information for generating an encryption key.

### (Step S12)

Next, in Step S12, the information processing apparatus inputs plain text TLV packet data 154, executes the encryption processing to which the block key generated in Step S11 is applied, and generates encryption block data, that is, encryption TLV packet data 155.

Note that, the plain text TLV packet data 154 is the plain text TLV packet data 154 obtained by decoding the encryption data that is transmitted from the broadcasting station or the like. The plain text TLV packet data 154 is the same data as that of a decoding result when the reproduction processing is performed.

Note that, the plain text TLV packet data 154 is data in a range of being a setting unit of one additional header, and in a case of the configuration described with reference to Fig. 18, is one TLV packet data item, but in a case of the configuration described with reference to Fig. 19 to Fig. 21, includes data items of one or a plurality of TLV packets.

The encryption block data generated by executing the encryption processing to which the block key is applied, that is, the encryption TLV packet data 155 is set as the subsequent data of the TLV packet additional header 151, and is recorded in the information recording medium (medium).

Note that, the encryption processing to which the block key is applied, for example, can be executed as encryption processing to which an ECB mode or a CBC mode is applied. In addition, in a case where such encryption processing is performed, padding data may be added. For example, in consideration of compatibility with respect to the block encryption such as AES, padding data including a data string such as 000...0 may be added such that the encryption TLV packet is a multiple of 16 bytes.

All of the TLV packets configuring the clip AV stream file are subjected to the same encryption processing, and a data set including the TLV packet additional header and the encryption TLV packet is arranged and recorded in the information recording medium such as the BD.

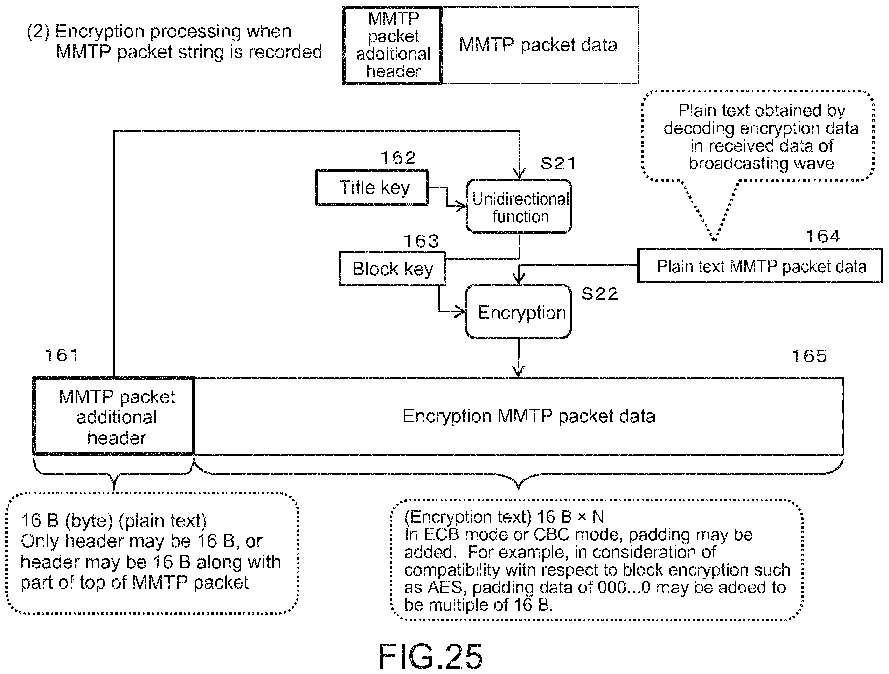

Next, an encryption processing example in a case where the MMTP packet string described above with reference to Fig. 9 is recorded in the information recording medium (medium) will be described with reference to Fig. 25.

The information processing apparatus adds the MMTP packet additional header in which the copy control information is recorded to the MMTP packet to be recorded in the information recording medium (medium).

Fig. 25 illustrates the sequence of the encryption processing in a case where the processing is executed.

First, the information processing apparatus acquires an MMTP packet additional header 161 in which the copy control information is recorded.

The MMTP packet additional header 161 includes the plain text data of 16 bytes. Note that, in a case where the MMTP packet additional header is less than 16 bytes, a part of the data on the top of the MMTP packet may be combined with the MMTP packet additional header as the plain text data 16 bytes to be the plain text MMTP packet additional header 161.

### (Step S21)

The information processing apparatus acquires the MMTP packet additional header 161 of 16 bytes, and in Step S21, executes an arithmetic operation using a unidirectional function to which a title key 162 generated in advance by the random number generation processing or the like is applied, and generates a block key 163.

That is, the block key 163 that is the encryption key of the block unit (the cryptographic processing unit) is generated by using configuration data of the MMTP packet additional header 161 of 16 bytes as the seed information for generating an encryption key.

### (Step S22)

Next, in Step S22, the information processing apparatus inputs plain text MMTP packet data 164, executes the encryption processing to which the block key generated in Step S21 is applied, and generates the encryption block data, that is, encryption MMTP packet data 165.

Note that, the plain text MMTP packet data 164 is the plain text MMTP packet data 164 obtained by decoding the encryption data that is transmitted from the broadcasting station or the like. The plain text MMTP packet data 164 is the same data as that of a decoding result when the reproduction processing is performed.

Note that, the plain text MMTP packet data 164 is data in a range of being a setting unit of one additional header, an in a case of the configuration described with reference to Fig. 17, is one MMTP packet data item, but in a case of the configuration described with reference to Fig. 19 to Fig. 21, includes data items of one or a plurality of MMTP packets.

The encryption block data generated by executing the encryption processing to which the block key is applied, that is, the encryption MMTP packet data 165 is set as the subsequent data of the MMTP packet additional header 161, and is recorded in the information recording medium (medium).

Note that, the encryption processing to which the block key is applied, for example, can be executed as the encryption processing to which the ECB mode or the CBC mode is applied. In addition, in a case where such encryption processing is performed, the padding data may be added. For example, in consideration of the compatibility with respect to the block encryption such as AES, the padding data including the data string such as 000...0 may be added such that the encryption MMTP packet is a multiple of 16 bytes.

All of the MMTP packets configuring the clip AV stream file are subjected to the same encryption processing, and a data set including the MMTP packet additional header and the encryption MMTP packet is arranged and recorded in the information recording medium such as the BD.

As described above, the information processing apparatus executing the copy processing generates the block key that is the encryption key of the block unit (the cryptographic processing unit) at the time of executing the copy processing, and performs the encryption by the block unit.

In order to generate the encryption key of the block unit, the configuration data of the additional header is used as the seed information.

As described above with reference to Fig. 7 and Fig. 18, in a case where the additional header is set by the packet (MMTP packet or TLV packet) unit, the block key that is the encryption key of the block unit (cryptographic processing unit) is generated by using the configuration data of the additional header set by the packet unit as the seed information.

In contrast, as described with reference to Fig. 19 to Fig. 21, an additional header of a plurality of packet units, an additional header of a fixed data length unit, or an additional header of a variable data length unit is set instead of the additional header of the packet unit, the block key that is the encryption key of the block unit (the cryptographic processing unit) is generated by using configuration data of the additional header of the plurality of packet units, the additional header of the fixed data length unit, or the additional header of the variable data length unit as the seed information.

Processing of performing the encryption with respect to data subsequent to the additional header to be recorded in a copy destination medium is executed by using the block key.

[8. Reproduction Control Information That Is Applied to Random Access Reproduction Processing]

Next, the reproduction control information to be applied to random access reproduction processing will be described.

As described above, as a recording mode of the MMT format data with respect to the medium such as the BD, currently, it has been discussed that the MMT format data is recorded as any one packet string of:
the packet string of the MMT protocol (MMTP) packet described with reference to Fig. 9; or
the packet string of the type length value (TLV) packet described with reference to Fig. 10.

In a case where the MMT format data is recorded in the medium in accordance with the setting as illustrated in Fig. 9 or Fig. 10, and the reproduction processing of the MMT format data is performed by using a reproduction application corresponding to the BDAV format, the reproduction is performed by using a reproduction control information file corresponding to the BDAV format, that is, the playlist file or the clip information file

That is, as described above with reference to Fig. 11, processing of generating a reproduction control information file corresponding to the MMT format data storage clip AV stream file 51, specifically, the clip information file (nnnnn.clpi) 52 and the playlist file (nnnnn.rpls) 53, and of recording the reproduction control information file in the medium (the BD, the flash memory, the HDD, or the like) to be used in the reproduction is necessary.

In a case where the MMT format data storage clip AV stream file 51 recorded in the medium is reproduced, the reproduction processing is performed by using the clip information file (nnnnn.clpi) 52 and the playlist file (nnnnn.rpls) 53 corresponding to the MMT format data storage clip AV stream file 51.

One of the reproduction control information items includes random access reproduction control information to be applied to the random access reproduction processing, that is, the EP map (EP_map).

Hereinafter, the EP map for performing the random access reproduction of the MMT format data will be sequentially described in accordance with the following items.
8-1. Outline of EP Map, and Playlist File Corresponding to MMT Format Data
8-2. Basic Configuration Example of Clip Information File Corresponding to MMT Format and EP Map
8-3. Configuration Example of EP Map Corresponding to Encryption MMT Format Data of Encryption Key That Is Generated by Using Additional Header as Seed

### [8-1. Outline of EP Map, and Playlist File Corresponding to MMT Format Data]

First, the outline of the EP map, and the playlist file corresponding to the MMT format data will be described.

The EP map, for example, is correspondence data between reproduction time information (a presentation timestamp: PTS) that is a random access point and a source packet number (SPN) that is a packet identifier of a packet in the position, and is map information that can be used for acquiring a packet in which the reproduction data of the random access point is stored.

The EP map includes address information for finding the location of the entry point (EP) in the AV stream to start decoding.

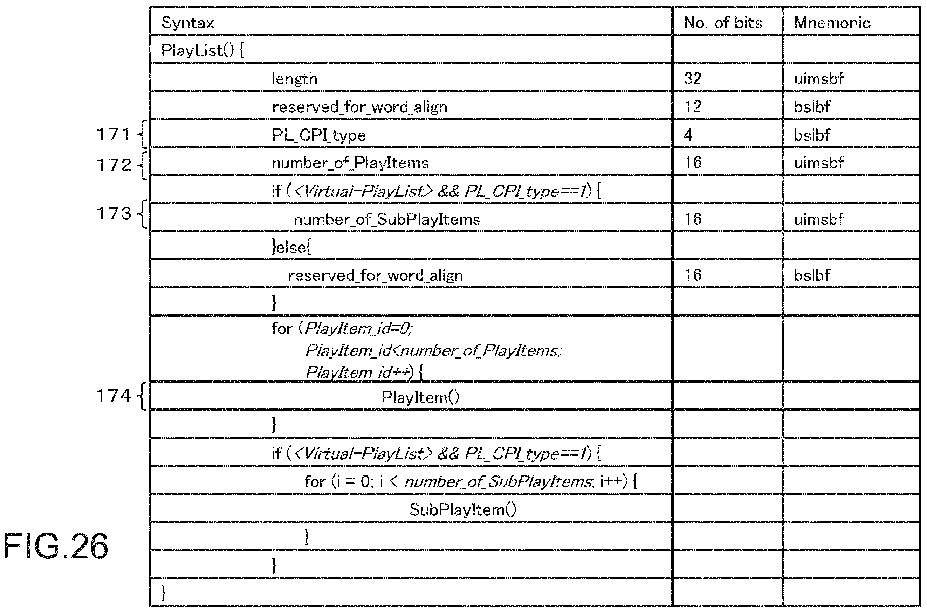

Before the EP map is described, first, the playlist file corresponding to the MMT format data will be described with reference to Fig. 26 and the like.

As described above, information relevant to data that is reproduced by applying the playlist is recorded in the playlist file. Specifically, for example, the playlist file includes information relevant to a play item to be applied to the content reproduction processing, and the designation information of the clip information file or the like in which the reproduction position information and the like are recorded.

Fig. 26 is a diagram illustrating a data configuration (syntax) of [PlayList] that is recorded in one playlist (PlayList) file.

Main recording data of [PlayList] illustrated in Fig. 26 will be described.

A length (length) indicates a byte count immediately after a length field to the end of playlist file configuration data.

A PL_CPI type (PL_CPI_type) 171 is information indicating a CPI type in the clip information file referred to by a play item (PlayItem) that is defined in the playlist file.

The number of play items (number_of_PlayItems) 172 indicates the number of play items (PlayItem) that are defined in the playlist file.

The number of sub-play items (number_of_SubPlayItems) 173 indicates the number of play items (PlayItem) that are defined in the playlist file.

The detailed information of each of the play items and each of the sub-play items is recorded in the play item information (PlayItem()) 174.

As described above, the PL_CPI type (PL_CPI_type) 171 is the information indicating the CPI type in the clip information file referred to by the play item (PlayItem) defined in the playlist file.

Characteristic point information (CPI) is the recording data of the clip information file, and for example, is data for acquiring a data address of the reproduction start point at which random access reproduction can be started.

Note that, the CPI defined in the BDAV format, for example, includes different types of maps of an EP map (EP_map) and a TU map (TU_map).

Both of the maps, for example, are correspondence data between the reproduction time information (the presentation time stamp: PTS) that is the random access point and the source packet number (SPN) that is the packet identifier of the packet in the position, and are map information that can be used for acquiring the packet in which the reproduction data of the random access point is stored.

Both of the EP map and the TU map are map data in which random access point information is recorded, the EP map is map data in which more detailed random access point information is recorded, and the TU map is map data in which rough random access point information compared to the EP map is recorded.

In the BDAV format, two types of maps of the EP map and the TU map are defined, but the TU map is rarely used, and only the EP map is used.

The EP_map or the TU_map includes address information for finding the location of the entry point (EP) in the AV stream to start decoding.

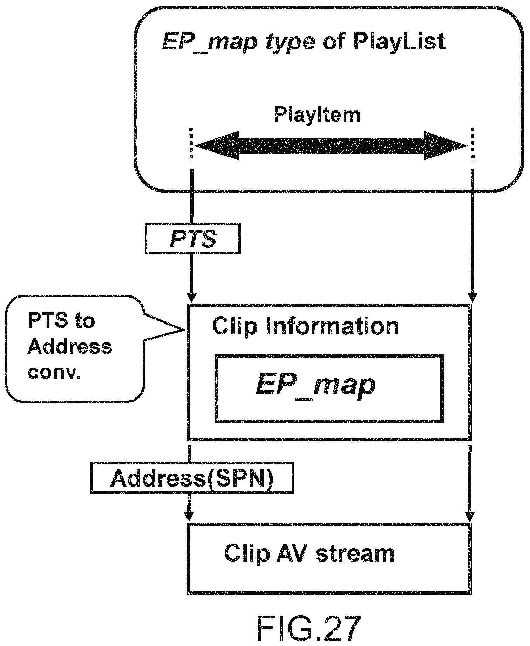

The EP map will be described with reference to Fig. 27 and the like.

As described above with reference to Fig. 5, the playlist includes the information indicating the reproduction start position of the clip (Clip) or the access point corresponding to the reproduction end position with the time stamp that is the information on the time axis.

The clip information file (Clip Information file) is used for finding the address information of the stream in the clip AV stream file to start decoding from the time stamp.

In addition, the clip information file (Clip Information file) includes the EP map (EP_map) illustrated in Fig. 27.

In the EP map, the reproduction start position in the reproduction data stored in the clip AV stream file at which the random reproduction can be started, or the access point information corresponding to the reproduction end position is recorded.

That is, in the EP map, the correspondence data between the time stamp representing the reproduction start position on the time axis and the address information for acquiring a packet corresponding to packet position information is recorded.

Specifically, Specifically, the EP map includes correspondence information between:
(a) Time Stamp Representing Access Point On Time Axis (Presentation TimeStamp: PTS); and
(b) Source Packet Number (SPN) Corresponding to Address Indicating Access Point with Packet Position in Clip AV Stream.

The corresponding address (SPN) can be acquired on the basis of the time stamp with reference to the EP map including such correspondence information, and for example, a decoding start point that is the reproduction start position in the AV stream, and the like can be found in accordance with the address (SPN).

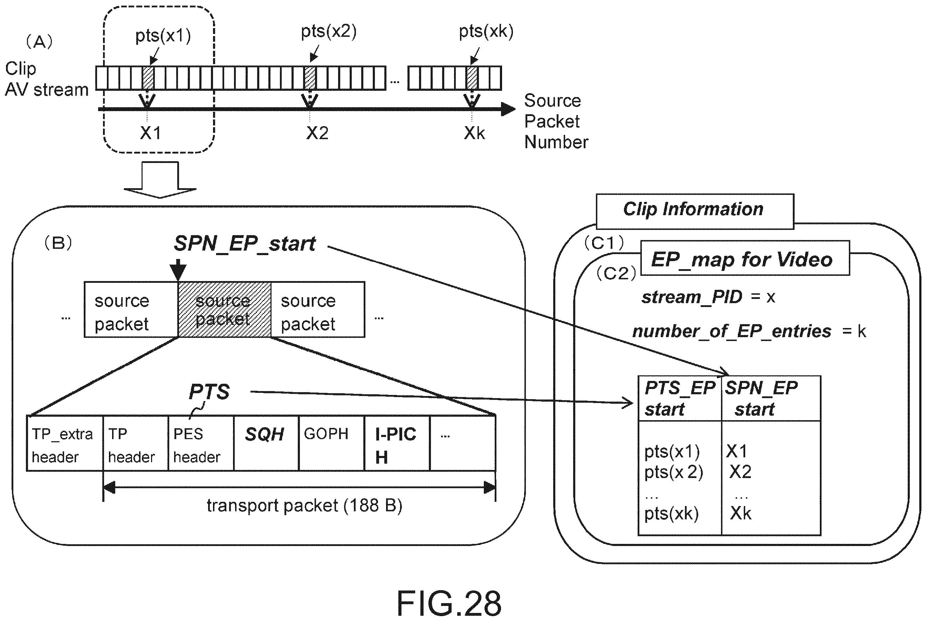

Fig. 28 is a diagram describing a specific configuration and a usage example of the EP map (EP_map). In the clip AV stream (Clip AV stream) illustrated in Fig. 28(A), a video stream including a source packet that is identified by the packet identifier (PID) is subjected to multiplexing. The video stream is discriminated by the PID included in a header of a transport packet in the source packet, for each source packet.

The source packet of the video stream includes an IPB picture configuring the MPEG data, that is, an intra (I) picture, a predictive (P) picture, and a bidirectionally predictive (B) picture. The I picture is picture data that can be independently decoded, and in a case where the P picture and the B picture are decoded, it is necessary to refer to before-and-after I pictures. For example, a reproduction start point according to a random access is set in a packet position including the I picture that can be independently decoded.

The EP map retains position information of the I picture as position information of a random accessible reproduction start point, as the correspondence data between the PTS and the SPN described above. That is, the EP map includes the correspondence information between:
(a) Time Stamp Representing Access Point on Time Axis (Presentation Time Stamp: PTS); and
(b) Source Packet Number (SPN) Corresponding to Address Indicating Access Point with Packet Position in Clip AV Stream.

It is possible to obtain the location of the I picture that is the random accessible reproduction start position, with reference to the EP map set as described above. The EP map (EP_map) is data included in the clip information file.

The detection of an I picture position based on the EP map will be described with reference to Fig. 28. Fig. 28(A) illustrates the clip AV stream, and each rectangle illustrates a source packet of 192 bytes.

Fig. 28(A) illustrates a source packet including the first byte of the intra (I) picture by a square with a hatched line. A white square without a hatched line illustrates a source packet including data that is not to be the random access point, and a source packet including data of the other stream.

For example, a source packet of a source packet number X1 including the first byte of a random accessible I picture in the video stream discriminated by PID = x is arranged in a position of PTS = pts(x1) on the time axis of the clip AV stream. Similarly, next, the source packet including the first byte of the random accessible I picture is set to a source packet of a source packet number X2, and is arranged in a position of PTS = pts(x2).

As illustrated in Fig. 28(B), the source packet is configured by adding a header (TP_extra_header) of 4 bytes to a transport packet of 188 bytes. A transport packet portion includes a header portion (a TP header) and a payload portion.

SPN_EP_start that is registered data of an EP map illustrated in Fig. 28(C2) indicates a source packet number (SPN) of a source packet including the first byte of an access unit (Access Unit) including an I picture starting from a sequence header (SQH).

Note that, a set of numbers set in all packets in the clip AV stream file are the source packet number (SPN). In the clip AV stream file, a source packet number of the initial source packet is zero, and a source packet number of the next packet is 1, and after that, a source packet number is increased by one for each subsequent packet.

As illustrated in Fig. 28(C2), in the EP map (EP_map), data items of:
a stream PID (Stream_PID);
the number of EP entries (number_of_EP_entries);
presentation time stamp EP start (PTS_EP_start); and
source packet number EP start (SPN_EP_start) are recorded.

The stream PID (Stream_PID) is a packet identifier (PID) of a transport packet that transmits the video stream.

The number of EP entries (number_of_EP_entries) is the number of entries that are a pair of the PTS_EP_start and the SPN_EP_start included in the EP_map.

The presentation time stamp EP start (PTS_EP_start) indicates a presentation time stamp (PTS) of Access Unit starting from the random accessible I picture.

The source packet number EP start (SPN_EP_start) indicates a source packet number (SPN) including the first byte of access unit (Access Unit) that is referred to by the value of the PTS_EP_start.

The value of the packet identifier (PID) of the video stream is stored in the stream_PID, and an EP_map() that is table information indicating a correspondence relationship between the PTS_EP_start and the SPN_EP_start is generated.

For example, in the EP map of the video stream of PID = x, a table including correspondence data between the PTS and the SPN of:
PTS = pts(x1) and Source Packet Number (SPN)X1;
PTS = pts(x2) and Source Packet Number (SPN)X2; ..., and
PTS = pts(xk) and Source Packet Number (SPN)Xk,
is described.

The EP map (EP_map) including the table described above is stored in a clip information file corresponding to one clip AV stream.

The EP map (EP_map) including such data, for example, is referred to in order to specify a decoding start position at the time of performing the random access and the like.

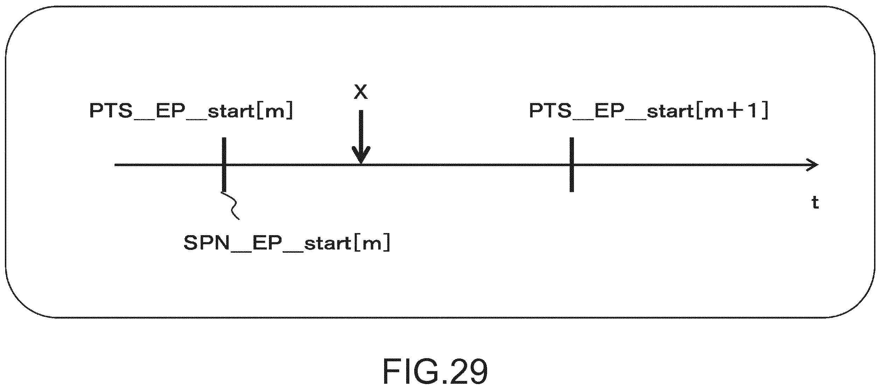

A method of calculating the address information of the stream in the clip AV stream file to start decoding by using the EP_map when the reproduction is started from a time x on the time axis of the clip will be described with reference to Fig. 29.

As illustrated in Fig. 29, in a case where the playlist (PlayList) includes information of designating the start of the reproduction from the time x on the time axis in the clip, a time stamp [PTS_EP_start[m]] having a value that is less than and closest to x is specified.

A source packet number [SPN_EP_start[m]] corresponding to the time stamp [PTS_EP_start[m]] is specified on the basis of the time stamp [PTS_EP_start[m]] that is specified in accordance with playlist information, with reference to the EP map in the clip information file.

As described above, the SPN that is the packet position information corresponding to the PTS, that is, [SPN_EP_start[m]] is acquired from the PTS that is the reproduction time information determined in accordance with the playlist information, by using the EP map.

The packet position [SPN_EP_start[m]] is acquired as the reproduction start point in the clip AV stream file, that is, the address information to start decoding, and is subjected to decoding processing, and thus, it is possible to perform the reproduction.

A usage example of the EP map described with reference to Fig. 27 to Fig. 29 is a packet acquisition processing example corresponding to the random access point using the MPEG-2TS format data. In the MPEG-2TS format data, as described above, the SPN that is the packet position information corresponding to the PTS, that is, [SPN_EP_start[m]] is acquired from the PTS that is the reproduction time information determined in accordance with the playlist information, by using the EP map.

However, the MMT format data has a format different from that of the MPEG-2TS format data, and thus, it is not possible to acquire a packet corresponding to the random access point by executing the same processing as that of the MPEG-2TS format data.

That is, in a case where the reproduction target data is the MMT format data, it is necessary to perform data processing corresponding to the MMT format data, different from the processing described above.

The EP map is defined in the clip information file, and it is necessary that the EP map corresponding to the MMT format data for executing random access point acquisition processing corresponding to the MMT format data is recorded in the clip information file corresponding to the MMT format data.

That is, it is necessary that the EP map corresponding to the MMT format data is recorded in the clip information file (nnnnn.clpi) 52 corresponding to the MMT format data storage clip AV stream file 51 illustrated in Fig. 11. A specific example thereof will be described below.

As described above, the EP map corresponding to the MPEG-2TS format data is different from the EP map corresponding to the MMT format data.

As described with reference to Fig. 26, the PL_CPI type (PL_CPI_type) recorded in the playlist file illustrated in Fig. 26 is the information indicating the CPI type in the clip information file referred to by the play item (PlayItem) defined in the playlist file.

The characteristic point information (CPI) is the recording data of the clip information file, and is a region in which data indicating the type of EP map or TU map for acquiring the data address of the reproduction start point (the random access point) is recorded.

The identification information of the EP map or the TU map corresponding to the MPEG-2TS format data is recorded in PL_CPI type (PL_CPI_type) of the related art.

However, the EP map corresponding to the MMT format data is a map different from the EP map corresponding to the MPEG-2TS format data of the related art.

Accordingly, in the PL_CPI type (PL_CPI_type) of the playlist file, it is also necessary to set an identifier in which the PL_CPI type (PL_CPI_type) is discriminated.

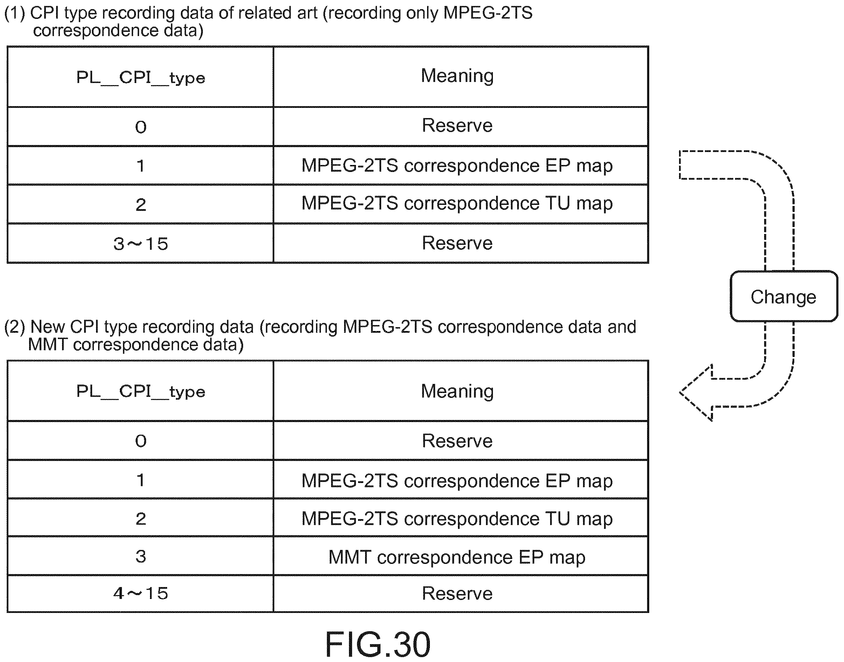

Fig. 30 illustrates the following CPI type recording data items.
(1) CPI Type Recording Data of Related Art (Recording Only MPEG-2TS Correspondence Data)
(2) New CPI Type Recording Data (Recording MPEG-2TS Correspondence Data and MMT Correspondence Data)

Data illustrated in "(1) CPI Type Recording Data of Related Art (Recording Only MPEG-2TS Correspondence Data)" of Fig. 30 is data that is defined as the PL_CPI type (PL_CPI_type) of the playlist file of the related art.

PL_CPI Type (PL_CPI_type) = 1 indicates that the CPI type in the clip information file referred to by the play item (PlayItem) defined in the playlist file is the EP map corresponding to MPEG-2TS.

PL_CPI Type (PL_CPI_type) = 2 indicates that the CPI type in the clip information file referred to by the play item (PlayItem) defined in the playlist file is the TU map corresponding to MPEG-2TS.

As described above, only the MPEG-2TS correspondence data is recorded in the CPI type recording data of the related art.

"(2) New CPI Type Record Data (Recording MPEG-2TS Correspondence Data and MMT Correspondence Data)" of Fig. 30 is configured by further adding setting of Bit Value = 3: $PL _ CPI Type \left(PL_CPI_type\right) = 3$ to the setting described above.

PL_CPI Type (PL_CPI_type) = 3 indicates that the CPI type in the clip information file referred to by the play item (PlayItem) defined in the playlist file is the EP map corresponding to the MMT.

As described above, it is possible to perform three types of definitions of PL_CPI Type (PL_CPI_type) = 1 to 3, and it is possible to identify three CPI types.

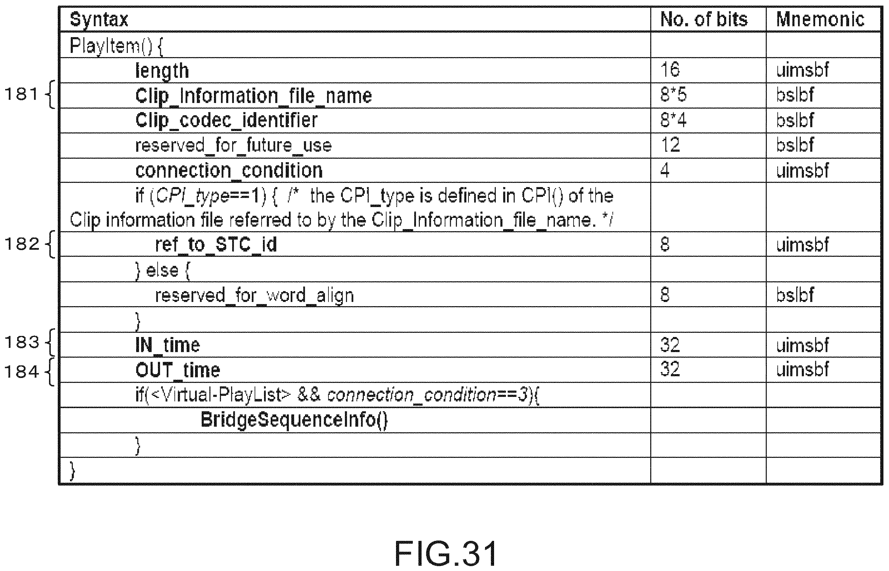

Next, the details (the syntax) of the play item information (PlayItem()) 174 recorded in [PlayList] described above with reference to Fig. 26 will be described with reference to Fig. 31 and the like.

As described above, the detailed information of each of the play items and each of the sub-play items is recorded in the play item information (PlayItem()) 174.

Fig. 31 is a diagram illustrating a data configuration (syntax) of the play item information (PlayItem()) 174.

A file name of the clip information file that is applied to the reproduction processing using the play item is recorded in a clip information file name (Clip_Information_file_name) 181.

A reference STC identifier (ref_to_STC_id) 182 indicates an STC identifier of a system time clock (STC) consecutive section to be referred to by the play item.

A system time clock (STC) is a standard clock at the time of performing AV stream reproduction, and in a consecutive reproduction section, one STC is used. For example, one STC is used in the consecutive reproduction section reproduced by one play item, and a different STC is referred to by switching the play item.

Information of designating the system time clock (STC) to be referred to by the play item is recorded in the reference STC identifier (ref_to_STC_id) 182.

A start time (IN_time) 183 is a recording region of a reproduction start time of the play item.

An end time (OUT_time) 184 is a recording region of a reproduction end time of the play item.

In a case where the MPEG-2TS format data of the related art is set to the reproduction target, difference time information (45 KHzh clock) from a start time of the STC corresponding to the play item that is designated by the reference STC identifier (ref_to_STC_id) 182 is recorded as start time information and end time information.

Note that, 45 KHz clock is a general clock that is used in the recording and reproduction of the MPEG-2TS format data.

However, in a case where the reproduction target data is the MMT format data, as with the MPEG-2TS format data, a configuration is not obtained in which an individual STC is associated with each of the reproduction target data items (the MMT format data items) corresponding to the play item.

Accordingly, it is necessary that:
the start time (IN_time) 183; and
the end time (OUT_time) 184,
that are recorded in the play item information (PlayItem()) of the playlist in which the MMT format data is set to the reproduction target are set to time information intrinsic to the MMT format data.

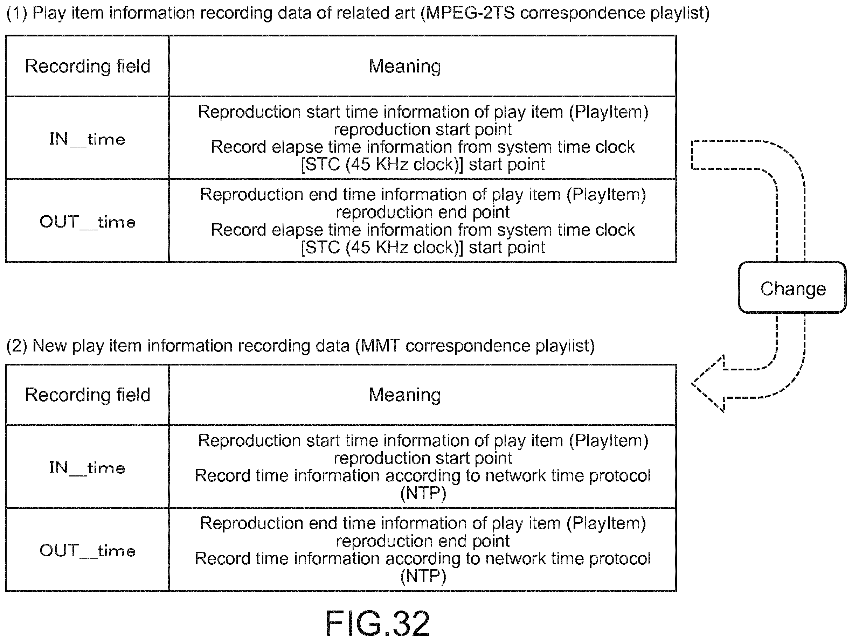

A modification example thereof will be described with reference to Fig. 32.

Fig. 32 illustrates the following data examples.
(1) Play Item Information Recording Data (MPEG-2TS Correspondence Playlist) of Related Art
(2) New Play Item Information Recording Data (MMT Correspondence Playlist)

In a case where the reproduction target data is the MPEG-2TS format data, "(1) Play Item Information Record Data (MPEG-2TS Correspondence Playlist) of Related Art" illustrated in Fig. 32(1) illustrates recording data of the start time (IN_time) and the end time (OUT_time) recorded in the play item information (PlayItem()).

The start time (IN_time) is reproduction start time information of a play item (PlayItem) reproduction start point, and as described above, elapse time information from a system time clock [STC (45 KHz clock)] start point that is applied to the reproduction processing using the play item is recorded in the start time (IN_time). The STC is an STC that is specified by the reference STC identifier (ref_to_STC_id) 182 described with reference to Fig. 31.

In addition, the end time (OUT_time) is reproduction end time information of a play item (PlayItem) reproduction end point, and as described above, the elapse time information from the system time clock [STC (45 KHz clock)] start point that is applied to the reproduction processing using the play item is recorded in the end time (OUT_time). The STC is an STC that is specified by the reference STC identifier (ref_to_STC_id) 182 described with reference to Fig. 31.

In a case where the reproduction target data is the MMT format data, "(2) New Play Item Information Recording Data (MMT Correspondence Playlist)" illustrated in Fig. 32(2) illustrates the recording data of the start time (IN_time) and the end time (OUT_time) recorded in the play item information (PlayItem()).

The start time (IN_time) is the reproduction start time information of the play item (PlayItem) reproduction start point. In a case where the reproduction target data is the MMT format data, time information according to a network time protocol (NTP) is recorded in the start time (IN_time).

The end time (OUT_time) is the reproduction end time information of the play item (PlayItem) reproduction end point. In a case where the reproduction target data is the MMT format data, the time information according to the network time protocol (NTP) is recorded in the end time (OUT_time).

The time information according to the network time protocol (NTP), for example, is transmitted along with the MMT format data including the broadcasting content and the like that are transmitted by the transmission device 20 such as the broadcasting server (the broadcasting station) 21 illustrated in Fig. 1.

The information processing apparatus 30 such as the television (TV) 32 acquires the time information according to the network time protocol (NTP) that is transmitted by the transmission device 20, and records the time information in the playlist.

The transmission device 20, for example, transmits control information in which reproduction time information of the media presentation unit (MPU) that is one data processing unit in the MMT format described above with reference to Fig. 3 is recorded as the time information according to the network time protocol (NTP), along with the reproduction target data (the broadcasting program content).

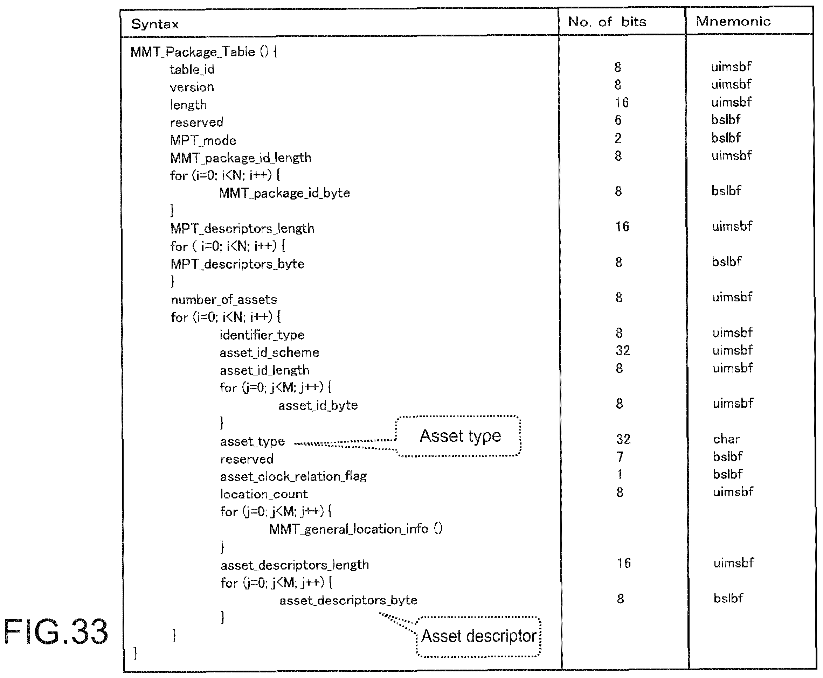

A specific example will be described with reference to Fig. 33 and the like.

For example, it is necessary that the information processing apparatus 30 that receives the distribution content (the broadcasting program) from the transmission device 20 such as the broadcasting server (the broadcasting station) 21 illustrated in Fig. 1, as the MMT format data, and records the received content in the information recording medium (medium) extracts various information items from the received data, and generates a playlist file or a clip information file.

As described above with reference to Fig. 2 and the like, the MMT format data includes control information necessary for receiving and reproducing the content (the broadcasting program) on the information processing apparatus 30 side, the guide information such as the broadcasting program guide, the notification information, and the control information (the signaling information) including the management information and the like.

The control information (the signaling information) defined in the MMT format includes signaling information (MMT-SI) that is transmitted in the MMTP packet, and signaling information (TLV-SI) that is transmitted in the TLV packet.

The information processing apparatus 30 that receives the MMT format data, and records the received data in the medium, for example, extracts various information items from the signaling information such as TLV-SI or MMT-SI included in the MMT format, and generates a playlist file or a clip information file.

One of the signaling information items (MMT-SI) that are transmitted in the MMTP packet is an MMT package table (MPT). The MMT package table (MPT), for example, is a table in which attribute information (an asset descriptor) of the data is recorded in detail for each data type (asset type) such as the image, the sound, and the caption.

Note that, a packet ID of the MMT package table (MPT) is stored in an MMTP packet of Packet ID = 0x0000, and the information processing apparatus is capable of determining a storage packet of the MMT package table (MPT) on the basis of the packet ID.

The configuration of the MMT package table (MPT) will be described with reference to Fig. 33.

Fig. 33 is a diagram illustrating a data configuration (syntax) of the MMT package table (MPT).

As described above, the MMT package table (MPT) defined in the MMT format, for example, is a table in which the attribute information (the asset descriptor) of the data is recorded in detail for each data type (asset type) such as the image, the sound, and the caption.

As illustrated in Fig. 33, the MMT package table (MPT) includes a data recording region of:
an asset type (asset_type); and
an asset descriptor (asset_descriptors_byte).

The asset type (asset_type) is a region in which an identifier for each data type such as the image, the sound, and the caption is recorded. The asset is data processing unit having common attribute, and the image, the sound, the caption, and the like are respectively set as different asset.

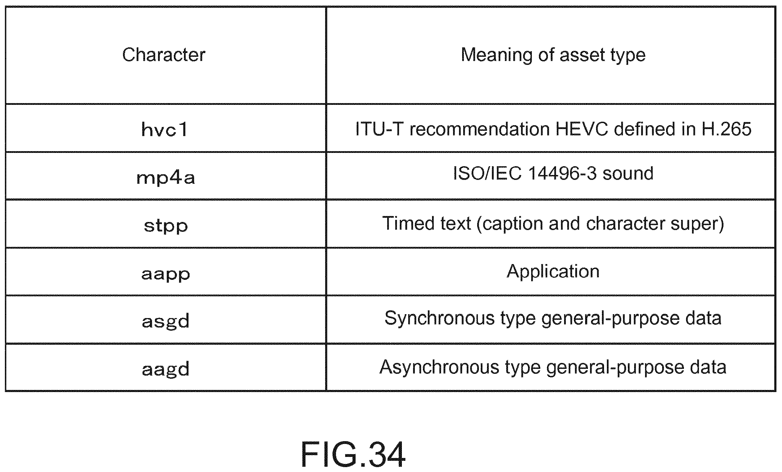

A specific example of the asset type (asset_type) recorded in the MMT package table (MPT) is illustrated in Fig. 34.

As illustrated in Fig. 34, the asset type (asset_type) recorded in the MPT, for example, includes the following types.
- hvc1:: HEVC Image
- mp4a:: Sound
- stpp:: Caption and Others
- aapp:: Application

In an asset type (asset_type) recording field of the MPT illustrated in Fig. 33, for example, any of the above type information items is recorded.

In the field of:
the asset descriptor (asset_descriptors_byte)
illustrated in the lower row of the MPT of Fig. 33, each asset type (for example, the image, the sound, and the caption), and various attribute information items according to the data type are recorded.

One of information items recorded as the asset descriptor (asset_descriptors_byte) includes the reproduction time information of the image, the sound, and the like.

The reproduction time information is recorded as the time information according to the network time protocol (NTP).

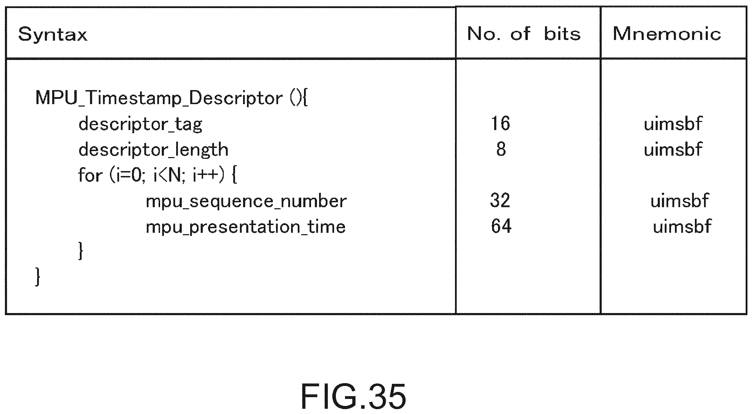

Fig. 35 illustrates a data configuration (syntax) of an MPU time stamp descriptor in which the reproduction time information (the time stamp) of the MPU unit that is recorded in the MMT package table (MPT) as the asset descriptor (asset_descriptors_byte) is recorded.

Note that, as described with reference to Fig. 3, the MPU is the media presentation unit (MPU) illustrated in Fig. 3(a), and is one data processing unit in the MMT format. The example illustrated in Fig. 3(a) is an example of the MPU of the image data, and is the same unit as that of the group of pictures (GOP) as the so-called encoding and decoding processing unit.

The MPU time stamp descriptor recorded in the MMT package table (MPT) corresponds to the reproduction time information of the MPU unit.

As illustrated in Fig. 35, each of the following data items is recorded in the MPU time stamp descriptor.
MPU Sequence Number (MPU_sequenc_number)
MPU Reproduction Time (MPU_presentation_time)

An identifier of the MPU is recorded in the MPU sequence number (MPU_sequenc_number).

A reproduction time (a presentation time) of the MPU is recorded in the MPU reproduction time (MPU_presentation_time) as the time information according to the network time protocol (NTP).

Note that, an NTP time (an NTP time stamp), for example, is absolute time information of 64-bit data, that is, absolute time information indicating an elapse time from a standard time defined in advance. Upper 32 bits indicate time information (elapse time information) of longer than or equal to 1 second, and lower 32 bits indicate time information (elapse time information) of shorter than or equal to 1 second.

Note that, setting using NTP time information of a short form in which upper 16 bits indicate time information of longer than or equal to 1 second, and lower 16 bits indicate time information of shorter than or equal to 1 second, in 32 bits in total, can also be performed.

As described above, an MPU time stamp that is the reproduction time information (the time stamp) of the MPU unit is recorded in the MMT package table (MPT) as the asset descriptor (asset_descriptors_byte).

The transmission device 20 illustrated in Fig. 1 records the reproduction time information of the media presentation unit (MPU) that is one data processing unit in the MMT format, in the MMT package table (MPT) as the NTP time information, and transmits the reproduction time information to the information processing apparatus 30 such as the television.

The information processing apparatus 30 acquires the time information, and records the time information in the playlist.

That is, in a case where the data recorded in the information recording medium (medium) as the clip AV stream file is the MMT format data, the information processing apparatus 30 records the NTP time information acquired from the MMT package table (MPT) in the playlist file that is the reproduction control information file.

As described above with reference to Fig. 32(2), in a case where the reproduction target data recorded in the information recording medium (medium) as the clip AV stream file is the MMT format data, the information processing apparatus 30 records the time information according to the network time protocol (NTP) as the start time (IN_time) and the end time (OUT_time) of the play item information (PlayItem()) of the playlist file.

### [8-2. Basic Configuration Example of Clip Information File Corresponding to MMT Format and EP Map]

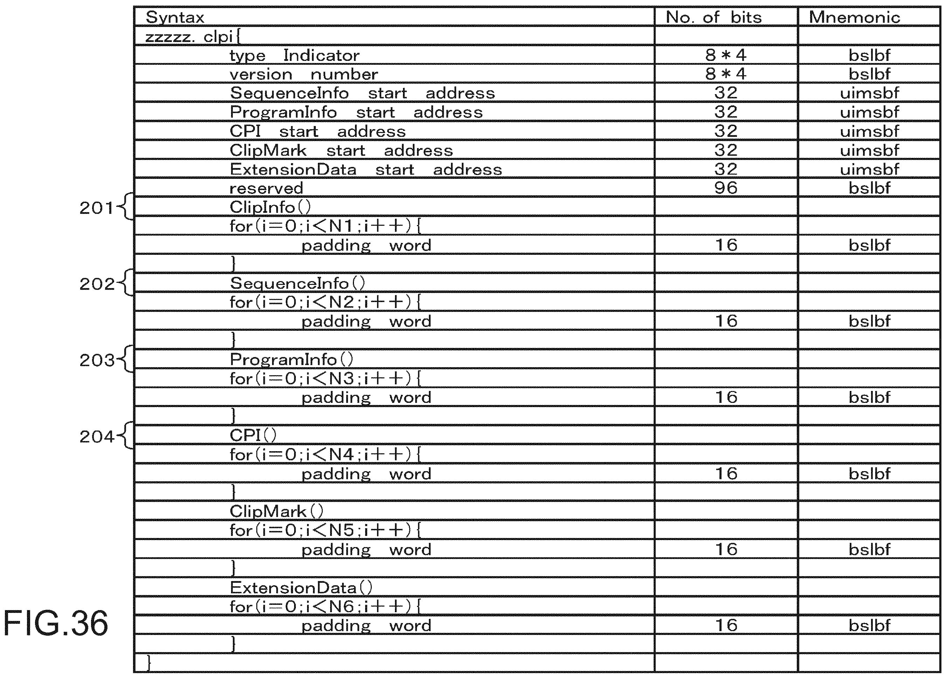

Next, the clip information file corresponding to the MMT format data will be described with reference to Fig. 36 and the like.

As described above, information relevant to data that is reproduced by applying the clip information file is recorded in the clip information file. Specifically, for example, the information includes the reproduction position information of the clip AV stream file, and the like.

Fig. 36 is a diagram illustrating a data configuration (syntax) of one clip information file.

Information relevant to the reproduction data associated with the clip information is recorded in the clip information file. As illustrated in Fig. 36, for example, each of the following information items is recorded.
Clip Information [ClipInfo()] 201
Sequence Information [SequenceInfo()] 202
Program Information [ProgramInfo()] 203
CPI Information [CPI()] 204

Attribute information of an AV stream file corresponding to the clip information file is recorded in the clip information [ClipInfo()] 201.

Information relevant to a reproduction sequence of the reproduction target data that is stored in the AV stream file corresponding to the clip information file is recorded in the sequence information [SequenceInfo()] 202.

Information relevant to a program (program) including definition information of the reproduction section or the time section, and the like of the clip AV stream reproduced by the clip information file is recorded in the program information [ProgramInfo()] 203.

For example, the EP_map or the TU_map that is data for acquiring the data address of the reproduction start point, described above with reference to Fig. 27 to Fig. 29, is recorded in the CPI information [CPI()] 204.

As described above with reference to Fig. 26, the CPI type (CPI_type) is recorded in the playlist file. The CPI type (CPI_type) is the information indicating the CPI type in the clip information file that is referred to by the play item (PlayItem) defined in the playlist file.

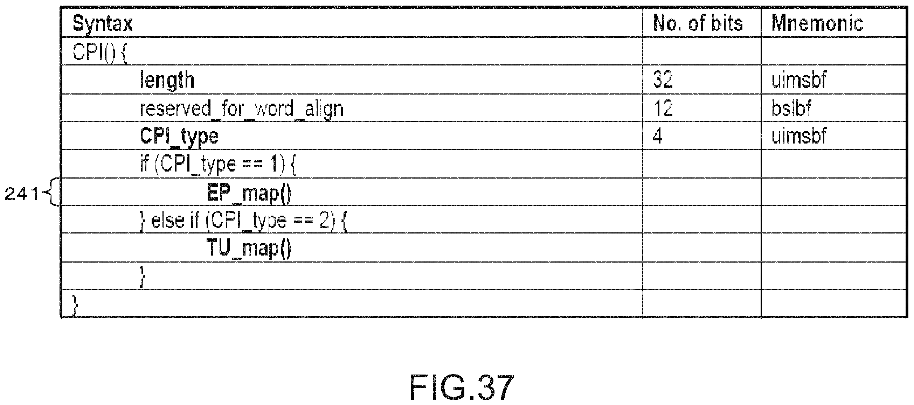

Next, a data configuration (syntax) of the CPI information [CPI()] 204 that is recorded in the clip information file will be described with reference to Fig. 37 and the like.

The CPI information [CPI()] 204, for example, is data for acquiring the data address of the reproduction start point, and the EP_map or the TU_map described above with reference to Fig. 27 to Fig. 29 is recorded in the CPI information [CPI()] 204.

As described above, the characteristic point information (CPI) is the recording data of the clip information file, for example, and is data for acquiring the data address of the reproduction start point.

As illustrated in Fig. 37, in a case of CPI Type = 1, the EP map is recorded, and in a case of CPI Type = 2, the TU map is recorded.

Note that, the example illustrated in Fig. 37 is an example of a case where the reproduction target data is the MPEG-2TS format data. As described above with reference to Fig. 30, in a case where the reproduction target data is the MPEG-2TS format data, CPI Type = 1 or 2 is set, and both of the EP map and the TU map can be used.

On the other hand, in a case where the reproduction target data is the MMT format data, as described above with reference to Fig. 30, CPI Type = 3 is set, and only the EP map can be used.

As described above with reference to Fig. 27 to Fig. 29, the EP map is a map in which the access point information corresponding to the reproduction start position or the reproduction end position at which the random reproduction of the reproduction data stored in the clip AV stream file can be started is recorded.

That is, the correspondence data between the time stamp (the presentation time stamp: PTS) representing the reproduction start position on the time axis, and the address information (the source packet number: SPN) for acquiring the packet corresponding to the packet position information is recorded in the EP map.

By using the EP map, the reproduction device is capable of acquiring the packet number (SPN) of the packet in which the data corresponding to the data position is stored, on the basis of a time stamp (the presentation time stamp (PTS)) corresponding to a random accessible data position, of acquiring a setting packet of the acquired SPN, and of performing the reproduction.

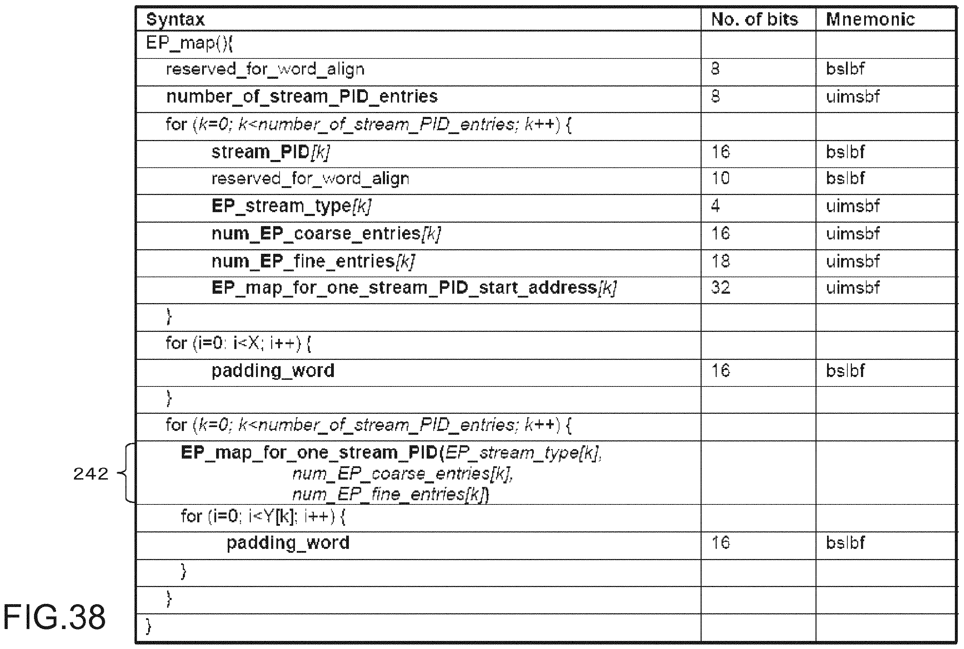

A data configuration (syntax) of the EP map will be described with reference to Fig. 38.

Fig. 38 is a diagram illustrating a data configuration (syntax) of the EP map stored in the clip information file.

As described above with reference to Fig. 28(A), in the clip AV stream (Clip AV stream), the video stream including the source packet that is identified by the packet identifier (PID) is subjected to multiplexing. The video stream is discriminated by the PID included in the header of the transport packet in the source packet for each source packet.

The EP map is set in one stream unit that is identified by each PID.

That is, an EP map (EP_map_for_one_stream_PID) of one stream PID (one_stream_PID) unit is recorded in an EP map recording region 242 of Fig. 38.

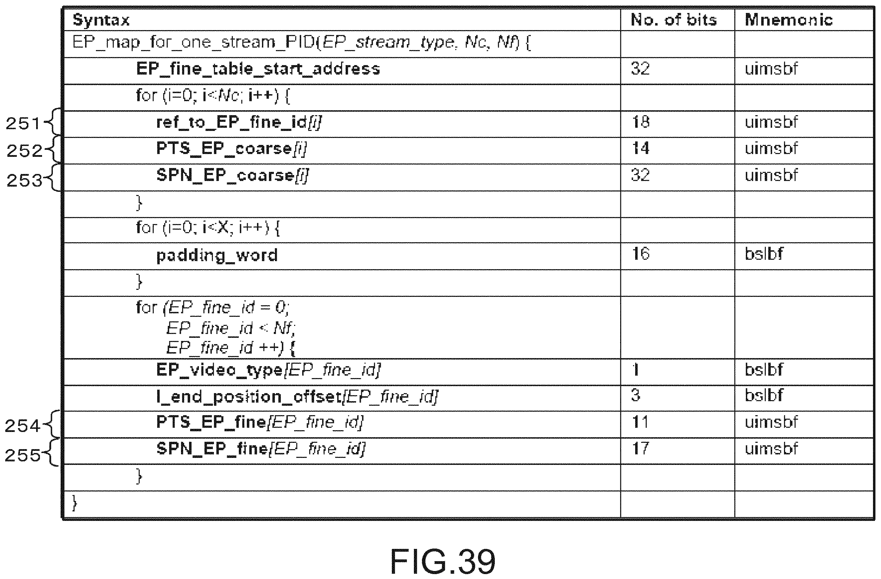

A specific data example of the EP map recording region 242 is illustrated in Fig. 39.

As illustrated in Fig. 39, the EP map including the following data recording regions.
(1) Fine EP Map Reference Data (ref_to_EP_fine) 251
(2) Presentation Time Stamp (PTS) of Coarse EP Map (PTS_EP_coarse) 252
(3) Source Packet Number (SPN) of Coarse EP Map (SPN_EP_coarse) 253
(4) Presentation Time Stamp (PTS) of Fine EP Map (PTS_EP_fine) 254
(5) Source Packet Number (SPN) of Fine EP Map (SPN_EP_fine) 255

The EP map includes two tables in order to realize a reduction in a data amount, and efficient search processing of the SPN from the PTS.

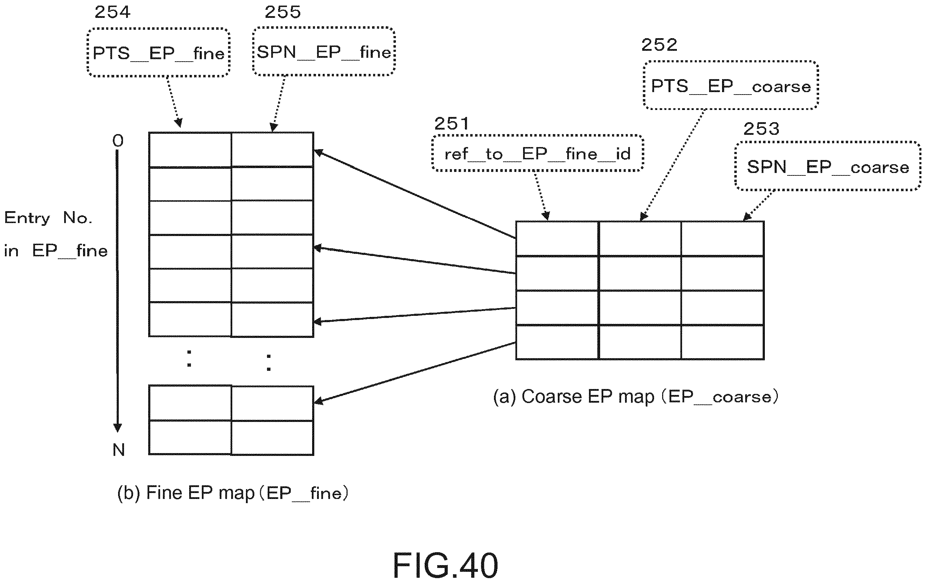

Such two-table configuration will be described with reference to Fig. 40.

As illustrated in Fig. 40, the EP map includes two tables described below.
(a) Coarse EP Map (EP_coarse)
(b) Fine EP Map (EP_fine)

In (a) the coarse EP map (EP_coarse), correspondence data including only an upper bit of each bit data item of bit data of the PTS and bit data of the SPN is stored.

The correspondence data is correspondence data between the (PTS_EP_coarse) 252 and the (SPN_EP_coarse) 253.

On the other hand, in (b) the fine EP map (EP_fine), correspondence data including only a lower bit of the bit data of the PTS and the bit data of the SPN is stored.

The correspondence data is correspondence data between the (PTS_EP_fine) 254 and the (SPN_EP_fine) 255.

Further, in the coarse EP map (EP_coarse), the fine EP map reference data (ref_to_EP_fine) 251 is stored in association with each PTS-SPN correspondence data item.

The reproduction device acquiring the SPN on the basis of the PTS, first, acquires the entry with reference to the coarse EP map (EP_coarse), on the basis of the upper bit of the PTS, further acquires the fine EP map reference data (ref_to_EP_fine) 251 set in the acquired entry, accesses the data position of the fine EP map (EP_fine) corresponding to the reference position, and acquires fine SPN on the basis of the lower bit of the PTS.

In the EP map data illustrated in Fig. 39, each of the following data items for executing processing using two tables described with reference to Fig. 40 is recorded.
(1) Fine EP Map Reference Data (ref_to_EP_fine) 251
(2) Presentation Time Stamp (PTS) of Coarse EP Map (PTS_EP_coarse) 252
(3) Source Packet Number (SPN) of Coarse EP Map (SPN_EP_coarse) 253
(4) Presentation Time Stamp (PTS) of Fine EP Map (PTS_EP_fine) 254
(5) Source Packet Number (SPN) of Fine EP Map (SPN_EP_fine) 255

However, the EP data is data that is capable of being applied to a case where the reproduction target data is the MPEG-2TS format data, and in a case where the reproduction target data is the MMT format data, the EP data is not capable of being used as it is.

Accordingly, it is necessary to record the EP map corresponding to the MMT format data in the clip information file corresponding to the MMT format data.

Next, a configuration example of the EP map corresponding to the MMT format data will be described.

As described above with reference to Fig. 9 and Fig. 10, the clip AV stream file in which the MMT format data such as the image, the sound, and the caption is stored is planned to be recorded as the packet string of the MMTP packet (Fig. 9) or the packet string of the TLV packet (Fig. 10).

The image, the sound, the control information (SI) such as the MMT package table (MPT) described above with reference to Fig. 33, and the like are also stored in the MMTP packet, and the packet string including such data items is recorded in the medium such as the BD as the clip AV stream file.

For example, the MMT format data storage clip AV stream file 51 described with reference to Fig. 11 includes the packet string of the MMTP packet or the TLV packet.

The packet in which the random accessible reproduction data is stored is also included in the packet (the MMTP packet or the TLV packet) in which the reproduction target data such as the image is stored.

In order to perform the random access reproduction, processing using the EP map that is recorded in the clip information file is performed.

As described above with reference to Fig. 26 and the like, the access point information corresponding to the reproduction start position or the reproduction end position at which the random reproduction start of the reproduction data stored in the clip AV stream file can be started is recorded in the EP map corresponding to the MPEG-2TS format data of the related art.

That is, the correspondence data between the time stamp (the presentation time stamp: PTS) representing the reproduction start position on the time axis, and the address information (source packet number: SPN) for acquiring the packet corresponding to the packet position information is recorded in the EP map corresponding to the TS packet of the related art.

By using the EP map, the reproduction device is capable of acquiring the packet number (SPN) of the packet in which the data corresponding to the data position is stored, on the basis of a time stamp (the presentation time stamp (PTS)) corresponding to a random accessible data position, of acquiring a setting packet of the acquired SPN, and of performing the reproduction.

However, the recording data of the EP map is data that can be applied to a case where the reproduction target data is the MPEG-2TS format data, and in a case where the reproduction target data is the MMT format data, the recording data of the EP map is not capable of being used as it is.

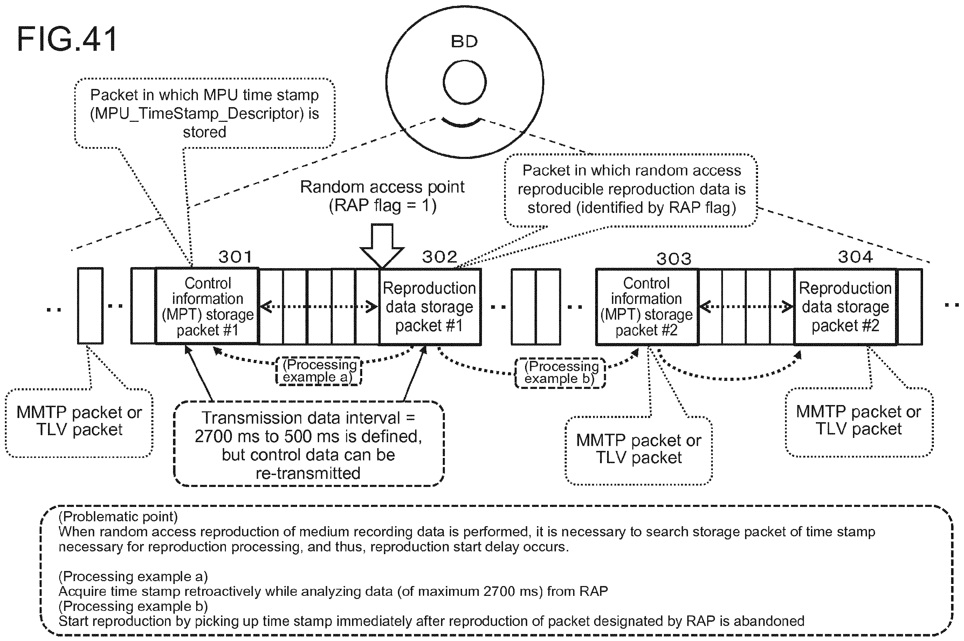

Such a problematic point will be described with reference to Fig. 41.

Fig. 41 is a diagram illustrating an example of the packet string of the clip AV stream file including the MMT format data that is recorded in the recording medium (BD).

The middle row of Fig. 41 is the packet string of the clip AV stream file, and each square is each packet configuring the clip AV stream file (the MMTP packet or the TLV packet).

The image, the sound, the caption, the control information (SI), or the like is individually stored in such packets.

A packet 302 illustrated approximately in the middle of the packet string is a reproduction data storage packet #1 302 in which the random access reproducible image data is stored.

Note that, whether or not each of the packets configuring the clip AV stream file is the packet in which the random access reproducible reproduction data is stored can be determined on the basis of the setting of the random access point (RAP) flag that is set in the packet header of the MMTP packet configuring the packet.

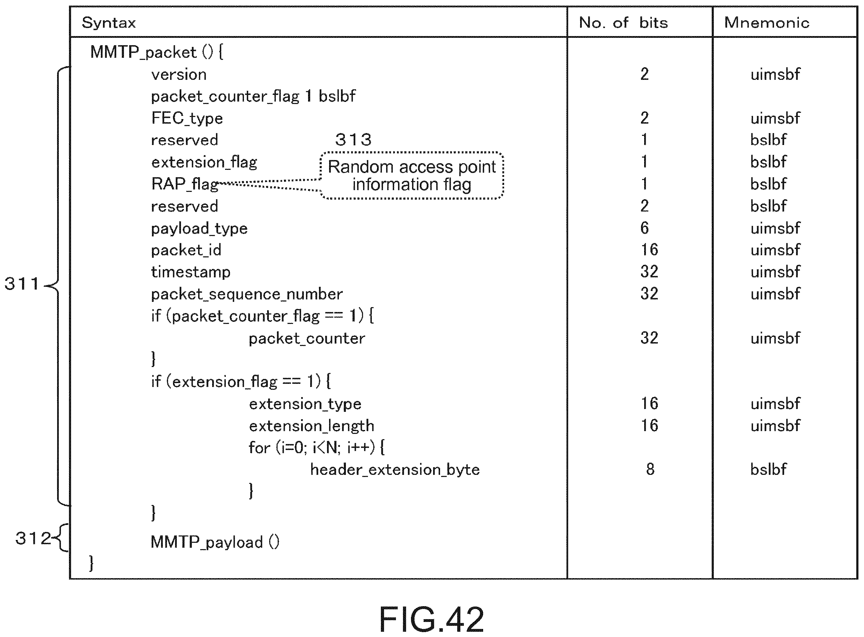

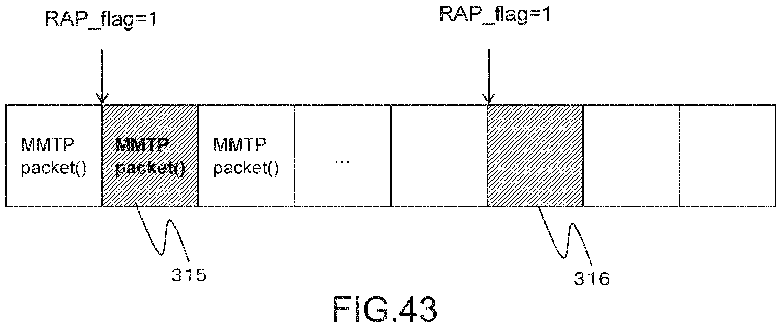

The RAP flag will be described with reference to Fig. 42 and Fig. 43.

Fig. 42, for example, is a diagram illustrating a data configuration (syntax) of the MMTP packet configuring the MMT format data that is transmitted to the information processing apparatus 30 from the transmission device 20 such as the broadcasting station.

As described above with reference to Fig. 3, the MMTP packet includes the MMTP header and the MMTP payload. One type of data is stored in the MMTP payload of one MMTP packet. Specifically, for example, one type of data of the image (V), the sound (A), the caption (S), and the signaling information (MMT-SI) stored in the MMTP packet is stored in the individual MMTP packet.

Fig. 42 illustrates a data configuration of one MMTP packet, and the MMTP packet includes a header portion 311 and a payload portion 312.

Information such as the type of data stored in the payload portion 312 is recorded in the header portion 311. A random access point information flag (RAP_flag) 313 is recorded as one of the recording data items of the header portion 311.

The random access point information flag (RAP_flag) 313
is a flag indicating whether or not the MMTP packet is a packet in which data to be the random access point is stored,
in a case where the MMTP packet is the packet in which the data to be the random access point is stored, a flag of 1 is recorded, and
in a case where the MMTP packet is not the packet in which the data to be the random access point is stored, a flag of 0 is recorded.

For example, the reproduction device executing the reproduction of the data recorded in the medium is capable of confirming the random access point information flag (RAP_flag) recorded in the MMTP packet header of the packet string configuring the clip AV stream file, of storing the reproduction data that can be the random access point, and of detecting the packet.

Fig. 43 illustrates a specific setting example of the random access point information flag (RAP_flag) .

The reproduction device executing the data reproduction from the medium confirms an setting value of the RAP_flag that is stored in the header information of each of the MMTP packets in the clip AV stream file, and detects a setting packet of RAP_flag = 1.

In the example illustrated in Fig. 43, MMTP packets 315 and 316 are the setting packet of RAP_flag = 1.

The reproduction device is capable of starting the random access reproduction processing by extracting the setting packet of RAP_flag = 1.

However, here, it is problematic that the data stored in the setting packet of RAP_flag = 1 is the MMT format data, and information such as the reproduction start time of the MMT format data is not recorded in the packet.

Returning to Fig. 41, such a problematic point will be described.

The reproduction device is capable of confirming that the packet 302 illustrated in Fig. 41 is the packet in which the random access reproducible reproduction data is stored, on the basis of the RAP flag.

However, the time stamp of the reproduction time information necessary for reproducing the reproduction target data stored in the packet 302, for example, the image data, and the like is stored in a control information (MPT) storage packet #1 301 but not in the packet 302.

The control information (MPT) storage packet #1 301 is a packet in which the MMT package table (MPT) described above with reference to Fig. 33 is stored.

The MMT package table (MPT), for example, is a table in which the attribute information (the asset descriptor) of the data is recorded in detail for each data type (asset type) such as the image, the sound, and the caption.

As described above with reference to Fig. 35, the reproduction time (presentation time) information (the time stamp) of the MPU unit is recorded in the MMT package table (MPT), as the asset descriptor (asset_descriptors_byte).

Note that, as described above with reference to Fig. 3, the MPU is the media presentation unit (MPU) illustrated in Fig. 3(a), and is one data processing unit in the MMT format. The example illustrated in Fig. 3(a) is an example of the MPU of the image data, and is the same unit as that of a group of pictures (GOP) as a so-called encoding and decoding processing unit.

The MPU time stamp descriptor recorded in the MMT package table (MPT) corresponding to the reproduction time information of the MPU unit.

As described above with reference to Fig. 35, each of the following data items is recorded in the MPU time stamp descriptor.
MPU Sequence Number (MPU_sequenc_number)
MPU Reproduction Time (MPU_presentation_time)

The identifier of the MPU is recorded in the MPU sequence number (MPU_sequenc_number).

The reproduction time (the presentation time) of the MPU is recorded in the MPU reproduction time (MPU_presentation_time) as the time information according to the network time protocol (NTP).

Note that, the NTP time (the NTP time stamp), for example, is absolute time information of 64-bit data, that is, absolute time information indicating an elapse time from a standard time defined in advance. Upper 32 bits indicate time information (elapse time information) of longer than or equal to 1 second, and lower 32 bits indicate time information (elapse time information) of shorter than or equal to 1 second.

Note that, setting using NTP time information of a short form in which upper 16 bits indicate time information of longer than or equal to 1 second, and lower 16 bits indicate time information of shorter than or equal to 1 second, in 32 bits in total, can also be performed.

As described above with reference to Fig. 35, a time stamp (a PTS presentation timestamp) indicating reproduction (presentation) time information of the MPU unit is recorded in the MMT package table (MPT) as the MPU time stamp descriptor.

Further, a time stamp (a DTS decoding timestamp) indicating decoding (decode) time information of the MPU unit is recorded in the MMT package table (MPT) as the MPU extension time stamp descriptor.

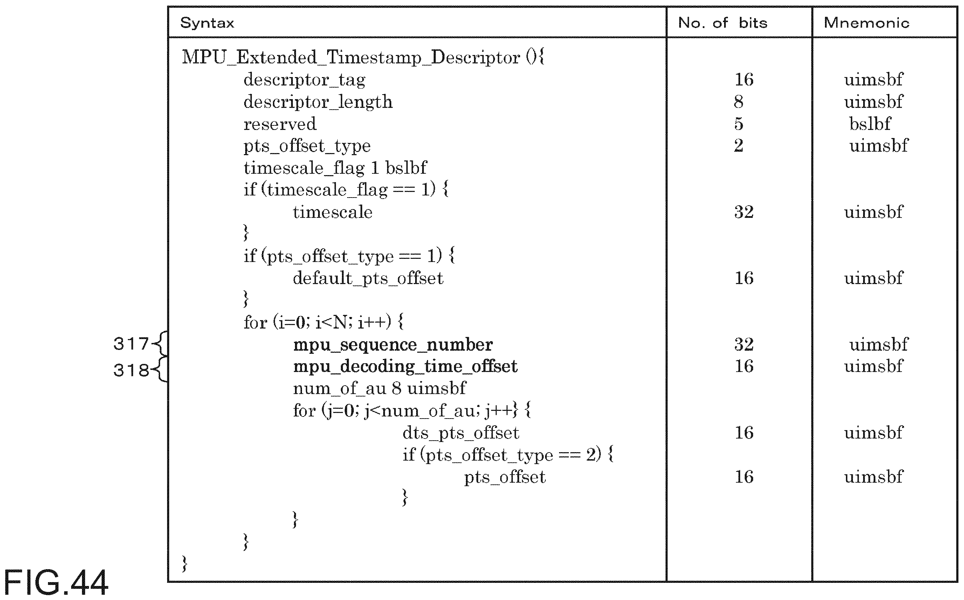

A data configuration (syntax) of an MPU extension time stamp descriptor that is recorded in the MMT package table (MPT) is illustrated in Fig. 44.

As illustrated in Fig. 44, each of the following data items is recorded in the MPU extension time stamp descriptor.
MPU Sequence Number (MPU_sequenc_number) 317
MPU decoding Time Offset (MPU_decoding_time_offset) 318

The identifier of the MPU is recorded in the MPU sequence number (MPU_sequenc_number) 317.

Difference information between a decoding time and the reproduction time (the presentation time) of the MPU is recorded in the MPU decoding time offset (MPU_decoding_time_offset) 318.

As described above, the time stamp (the PTS presentation timestamp) indicating the reproduction time (the presentation time) information of the MPU unit, and the time stamp (the DTS decoding timestamp) indicating the decoding time of the MPU unit are recorded in the MMT package table (MPT) as the asset descriptor (asset_descriptors_byte).

In order to perform the decoding and the reproduction processing with respect to the data that is stored in the random access reproducible reproduction data storage packet #1 302 illustrated in Fig. 41, it is necessary to acquire a time stamp (PTS/DTS) that is recorded in the control information (MPT) storage packet #1 301 illustrated in Fig. 41.

Note that, there is a definition in a transmission interval between the reproduction data storage packet #1 302 and the control information (MPT) storage packet #1 301 in which the control information such as the time stamp necessary for the data reproduction is stored, and a transmission interval of each of the packets from the transmission device such as the broadcasting station is defined to be in a range of 2700 ms to 500 ms.

Note that, re-transmission with respect to the control information (MPT) storage packet #1 after the reproduction data storage packet #1 302 is also permitted as a countermeasure for a reception error or the like.

The recording device that receives the packet string that is received from the transmission device such as the broadcasting station, and records the packet string in the medium such as the BD sequentially records the received packet string in the medium.

As a result thereof, the packet string (the MMTP packet string or the TLV packet string) illustrated in the middle row of Fig. 41 is recorded in the medium.

The reproduction device performing the reproduction processing from the medium in which such a packet string is recorded is capable of finding the control information (MPT) storage packet #1 in which the control information such as the time stamp necessary for the reproduction of the reproduction data storage packet #1 302 is stored by sequentially examining the packet strings before and after the reproduction data storage packet #1 302.

(Processing Example a) illustrated in Fig. 41 represents a processing example of selecting the control information (MPT) storage packet #1 301 in which the control information such as the time stamp necessary for the reproduction of the reproduction data storage packet #1 302 is stored from the previous distribution packet, and of acquiring the time stamp information.

On the other hand, (Processing Example b) represents a processing example of selecting a control information (MPT) storage packet #1 303 in which the control information such as the time stamp necessary for the reproduction of the reproduction data storage packet #1 302 is stored from the subsequent distribution packet, and of acquiring the time stamp information.

However, even in a case where the processing of both of the processing examples a and b is executed, packet search is required, the start time of the data reproduction processing is delayed, that is, a so-called processing delay increases.

Hereinafter, a configuration for solving such a problem will be described.

In order to solve the problem described above, when the clip AV stream file corresponding to the MMT format data is recorded in the medium such as the BD, the clip information file in which the EP map corresponding to the MMT format data is recorded is generated and recorded in the medium.

Hereinafter, a plurality of specific examples of the EP map corresponding to the MMT format data will be described.

### [8-3. Configuration Example of EP Map Corresponding to Encryption MMT Format Data of Encryption Key That Is Generated by Using Additional Header as Seed]

Next, a configuration example of the EP map corresponding to the encryption MMT format data of the encryption key that is generated by using the additional header as the seed will be described.

The EP map corresponding to the MMT format data described below is an EP map capable of being used in a case where the MMT format data that is recorded in the medium such as the BD, for example, is data encrypted with the encryption key that is generated by using the additional header (the TLV packet additional header and the MMTP packet additional header) described with reference to Fig. 24 and Fig. 25 as the seed.

In a case where the MMT format data that is recorded in medium is the encryption data, it is not possible to acquire the reproduction data or the time stamp unless the encryption key using the additional header as the seed is generated, and the decoding of the packet is performed.

Data that is required to be decoded in order to be reproduced is two data items described below.
(1) Random Access Reproducible Reproduction Data
(2) MMT Package Table (MPT) in Which Time Stamp Information of Reproduction Data Is Recorded

Each of the data items is encrypted with the encryption key that is generated by using a different seed (the additional header) or the same seed (the additional header), and is recorded in the medium.

Accordingly, in a case of using the data items (1) and (2) described above, it is necessary to perform the decoding processing of two data items.

For this reason, it is necessary to generate the encryption key to be applied to the decoding of each of the data items. Further, in order to generate the encryption key, it is necessary to acquire the seed to be applied to the generation of the encryption key.

Note that, in the data encryption processing described above with reference to Fig. 24 and Fig. 25, the applied encryption key can also be used as a decoding key in data decoding processing.

The decoding key (= Encryption Key) to be applied to the data decoding processing can be acquired in accordance with the same sequence as that described above with reference to Fig. 24 and Fig. 25.

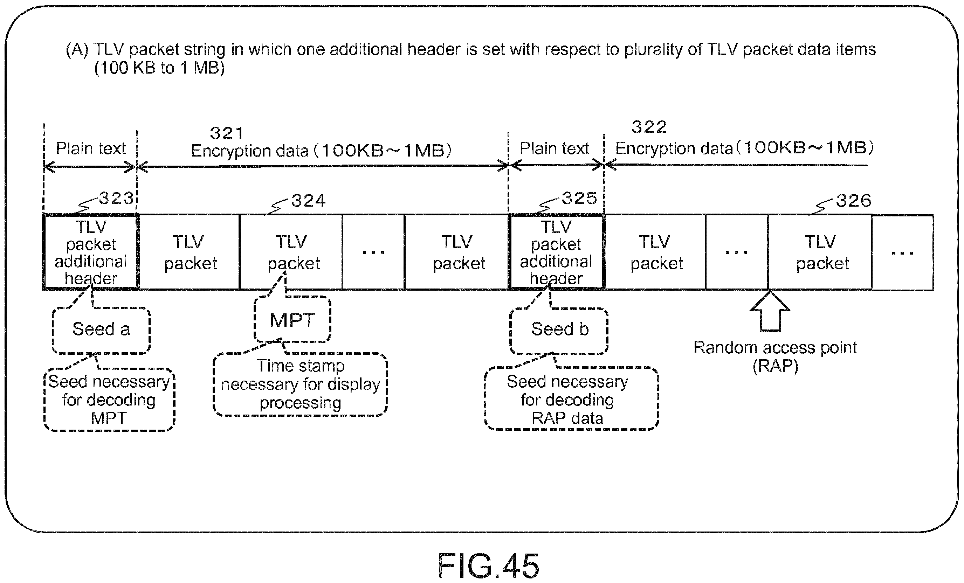

Fig. 45 illustrates a data configuration example in a case where the MMT format data that is recorded in the medium such as the BD is the data encrypted by the encryption key that is generated by using the additional header (the TLV packet additional header and the MMTP packet additional header) described with reference to Fig. 24 and Fig. 25 as the seed.

The example illustrated in Fig. 45 is an example using the TLV packet string as the medium recording data. The example illustrated in Fig. 45 is an example in which the additional header is set in a TLV packet data unit having a predetermined data length, for example, a data length of 100 KB to 1 MB.

The copy control information and the like described above with reference Fig. 22 and Fig. 23 are recorded in the additional header.

Note that, hereinafter, an example in which the TLV packet string is used as the medium recording data will be described, but as described above with reference to Fig. 17 to Fig. 25, the medium recording data is not limited to the TLV packet string, and there is a case where the medium recording data is recorded as the MMTP packet string. Accordingly, in the following example, the TLV packet can also be substituted with the MMTP packet.

In the example illustrated in Fig. 45, encryption data 321 is data encrypted with encryption key that is generated by using a TLV packet additional header 323 as seed information (a seed a).

That is, for example, the encryption data 321 is encryption data that is generated by the encryption key generation described above with reference to Fig. 24, and cryptographic processing.

Similarly, encryption data 322 is data encrypted with an encryption key that is generated by using a TLV packet additional header 325 as seed information (a seed b).

The same encryption key, that is, the encryption key that is generated by applying the TLV packet additional header 323 as the seed information (the seed a) is applied to the decoding of the encryption data 321.

Similarly, the encryption key that is generated by applying the TLV packet additional header 325 as the seed information (the seed b) is applied to the decoding of the encryption data 322.

As illustrated in Fig. 45, a TLV packet including the random access reproducible reproduction data, that is, a TLV packet 326 in which the RAP flag is set is included in the encryption data 322.

In order to perform the random access reproduction processing, it is necessary to decode the encryption data 322 including the TLV packet 326, and for this reason, it is necessary to generate the encryption key (= Decoding Key) using the TLV packet additional header 325 as the seed information (the seed b).

In addition, a TLV packet 324 including the MMT package table (MPT) in which the time stamp information of the random access reproduction data is recorded is included in the encryption data 321.

In order to perform the random access reproduction processing, the time stamp information is necessary, and in order to acquire the time stamp information, it is necessary to decode the encryption data 321 including the MPT storage TLV packet 324.

For this reason, it is necessary to perform generation processing of the encryption key (= Decoding Key) using the TLV packet additional header 323 as the seed information (the seed a).

First, in a case where the medium recording data is not encrypted, the following data items only have to be recorded in the EP map.
(a) Byte Count from First Packet Position of Clip AV Stream File in Which Storage Packet (MMTP Packet or TLV Packet) Stored with Any One of Random Access Reproduction Target Data or Control Information (MPT) in Which Time Stamp Information and Others Are Stored, as Position Information of Storage Packet
(b) Offset Information Corresponding to Separation Distance between Packet Position of Reproduction Data Storage Packet and Control Information (MPT) Storage Packet in Which Time Stamp Information and Others to Be Applied to Reproduction Processing of Reproduction Data Storage Packet Are Stored

It is possible to acquire the random access reproduction data, and the time stamp information necessary for reproducing the reproduction data from the clip a AV stream file, insofar as being an EP map in which two information items (a) and (b) described above are recorded.

However, as illustrated in Fig. 45, in a case where both of the random access reproduction data and the control information (MPT) in which the time stamp information and the like are stored are the encryption data, even when only such data items are acquired, both of the data items are the encryption data, and thus, are not capable of being used without being decoded.

In the decoding processing, it is necessary to generate the seed information necessary for generating the encryption key that is applied to the decoding of each of the data items, and to perform the decoding processing. For this reason, it is necessary to known the position of the seed information, that is, the position of the additional headers 323 and 325.

### [8-3-1. Example 1 of EP Map Corresponding to Encryption MMT Format Data]

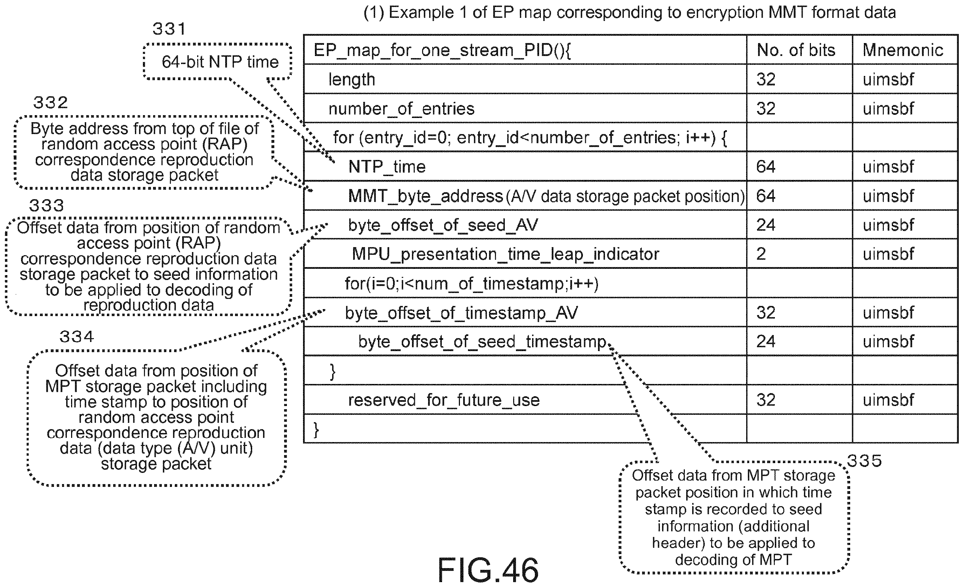

Next, a data configuration example of an EP map to which data capable of grasping the position of the seed information is added will be described with reference to Fig. 46.

Fig. 46 illustrates:
(1) Example 1 of EP Map Corresponding to Encryption MMT Format Data.

The EP map illustrated in Fig. 46 includes each of the following fields.
NTP Time Recording Region (NTP_time) 331
MMT Byte Address Recording Region
(MMT_byte_adress) 332
AV-Time Stamp Offset Recording Region (byte_offset_of_timestamp_AV) 334

In the EP map illustrated in Fig. 46, each data item of:
an AV-seed offset recording region (byte_offset_of_seed_AV) 333; and
a time stamp-seed offset recording region (byte_offset_of_seed_timestamp) 335
is further recorded.

Hereinafter, the recording data of the EP map illustrated in Fig. 46 will be described.

A network time protocol (NTP) time of 64 bits is recorded in the NTP time recording region (NTP_time) 331.

The time information, for example, corresponds to the time stamp (the presentation time stamp: PTS) representing the reproduction start position of a random access destination included in the reproduction data to be reproduced by applying the EP map on the time axis.

Note that, the time information according to the network time protocol (NTP) recorded in the EP map, for example, is acquired from the control information (SI) such as the MMT package table (MPT) described with reference to Fig. 33 and the like.

Address information indicating a packet position of a packet in which the reproduction target data to be reproduced by applying the EP map is stored is recorded in the MMT byte address recording region (MMT_byte_adress) 332.

Specifically, for example, as the position information of the reproduction target data storage packet (the MMTP packet or the TLV packet) of the image (V), the sound (A), the caption, and the like, a byte count from the first position of the first packet (the MMTP packet or the TLV packet) of the clip AV stream file stored with the packet described above is recorded. For example, the byte count is recorded in 64 bits.

The reproduction device is capable of immediately detecting the packet position of the reproduction data storage packet to be applied to the random access reproduction processing by using the data of:
the MMT byte address recording region (MMT_byte_adress) 332.

The offset information corresponding to the separation distance between the packet position of the reproduction data storage packet in which the reproduction data to be reproduced by applying the EP map is stored, and the control information (MPT) storage packet in which the time stamp information and the like to be applied to the reproduction processing of the reproduction data storage packet are stored is recorded in the AV-time stamp offset recording region (byte_offset_of_timestamp_AV) 334 as byte information.

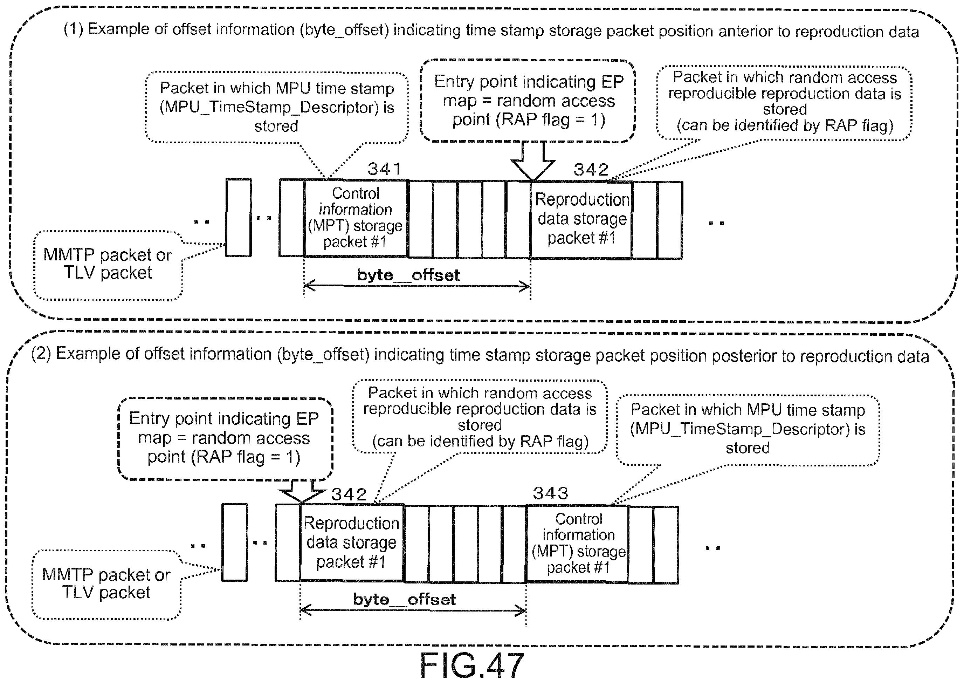

A specific example of the offset information will be described with reference to Fig. 47.

Fig. 47 illustrates two examples of the offset information described below in which the AV-time stamp offset recording region (byte_offset_of_timestamp_AV) 334 of Fig. 46 is recorded.
(Example 1) Example of Offset Information (byte_offset) Indicating Time Stamp Storage Packet Position Previous to Reproduction Data
(Example 2) Example of Offset Information (byte_offset) Indicating Time Stamp Storage Packet Position Subsequent to Reproduction Data

First, "(Example 1) Example of Offset Information (byte_offset) Indicating Time Stamp Storage Packet Position Previous to Reproduction Data" will be described.

(Example 1) is an example in a case where a control information storage packet #1 341 stored with the time stamp information to be applied to the reproduction of the packet is recorded previous to a reproduction data storage packet #1 342 stored with the reproduction target data to which the EP map illustrated in Fig. 46 is applied.

In this case, as illustrated in Fig. 47(1), the offset information recorded in the AV-time stamp offset recording region (byte_offset_of_timestamp_AV) 334 of the EP map illustrated in Fig. 46 is byte information corresponding to the distance of the first position of the previous control information storage packet #1 341 from the first position of the reproduction data storage packet #1 342.

In addition, "(Example 2) Example of Offset Information (byte_offset) Indicating Time Stamp Storage Packet Position Subsequent to Reproduction Data" illustrated in Fig. 47(2) is an example in a case where the control information storage packet #1 343 stored with the time stamp information to be applied to the reproduction of the packet is recorded on a data recording position posterior to the reproduction data storage packet #1 342 stored with the reproduction target data to which the EP map illustrated in Fig. 46 is applied.

In this case, as illustrated in Fig. 47(2), the offset information recorded in the AV-time stamp offset recording region (byte_offset_of_timestamp_AV) 334 of the EP map illustrated in Fig. 46 is byte information corresponding to the distance of the first position of the posterior control information storage packet #1 343 from the first position of the reproduction data storage packet #1 342.

As described above, the offset information recorded in the AV-time stamp offset recording region (byte_offset_of_timestamp_AV) 334 of the EP map illustrated in Fig. 46 includes two patterns illustrated in Figs. 47(1) and 47(2), and information for discriminating two patterns described above is also recorded in the EP map.

Specifically, for example, the byte information indicating the separation distance between the reproduction data storage packet and the control information storage packet is recorded as 31-bit information, and a control information recording position identification flag (Plus_minus_flag) for identifying whether the control information storage packet is in a data recording position anterior to the reproduction data storage packet or in a data recording position posterior to the reproduction data storage packet is recorded in 1 bit.

For example, as illustrated in Fig. 47(1), in a case of indicating that the control information storage packet is positioned in a position anterior to the reproduction data storage packet,

Control Information Recording Position Identification Flag (Plus_minus_flag) = 0 is set.

In addition, as illustrated in Fig. 47(2), in a case of indicating that the control information storage packet is positioned in a position posterior to the reproduction data storage packet,
Control Information Recording Position Identification Flag (Plus_minus_flag) = 1 is set.

As described above, information including the separation distance between the reproduction data storage packet and the control information storage packet, and the direction thereof is recorded in the EP map, and thus, the reproduction device is capable of immediately grasping the recording position of the control information storage packet in which the time stamp (PTS/DTS) corresponding to the reproduction data storage packet stored with the random access reproducible reproduction data is recorded, with reference to the EP map, and of starting smooth reproduction processing in which a reproduction delay does not occur.

Further, each of the following information items is recorded in the EP map illustrated in Fig. 46.
AV-Seed Offset Recording Region (byte_offset_of_seed_AV) 333
Time Stamp-Seed Offset Recording Region (byte_offset_of_seed_timestamp) 335

Data is recorded in such regions.

The offset information corresponding to the separation distance between the reproduction data storage packet to be applied to the random access reproduction processing, and the seed information (= Additional Header) necessary for generating the encryption key to be applied to the decoding of the reproduction data is recorded in the AV-seed offset recording region (byte_offset_of_seed_AV) 333 as the byte information.

In addition, the offset information corresponding to the separation distance between the control information (MPT) storage packet in which the time stamp information and the like to be applied to the reproduction processing of the reproduction data that is applied to the random access reproduction processing are stored, and the seed information (= Additional Header) necessary for generating the encryption key to be applied to the decoding of the control information (MPT) is recorded in the time stamp-seed offset recording region
(byte_offset_of_seed_timestamp) 335 as the byte information.

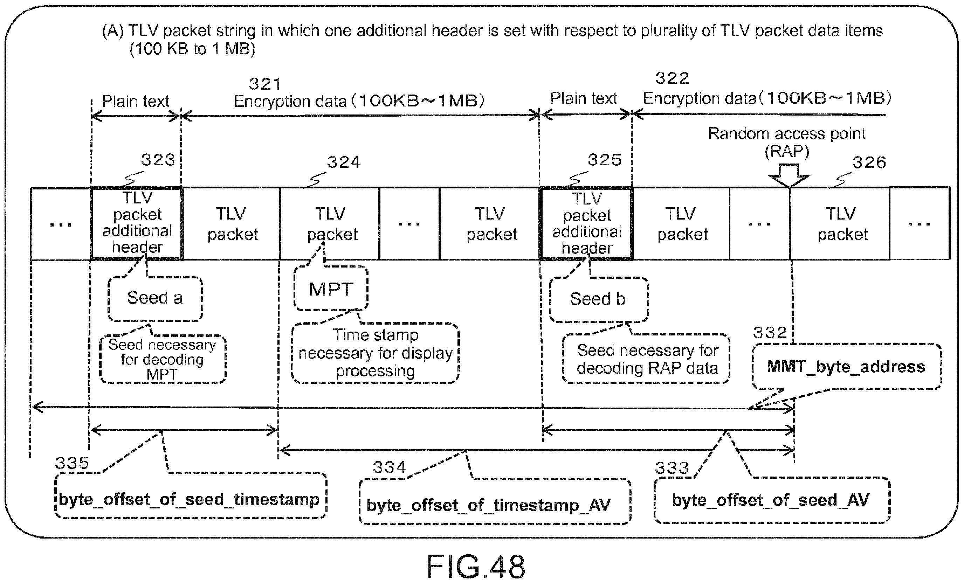

A specific example of the following data items that are recorded in the EP map will be described with reference to Fig. 48.
MMT Byte Address Recording Region (MMT_byte_adress) 332
AV-Time Stamp Offset Recording Region (byte_offset_of_timestamp_AV) 334
AV-Seed Offset Recording Region (byte_offset_of_seed_AV) 333
Time Stamp-Seed Offset Recording Region (byte_offset_of_seed_timestamp) 335

As illustrated in Fig. 48, each of the data items is the following data.

The recording data of the MMT byte address recording region (MMT_byte_adress) 332 is a byte count indicating a distance from the first packet of the clip AV stream file to the TLV packet 326 that is the storage packet of the random access reproduction data.

The recording data of the AV-time stamp offset recording region (byte_offset_of_timestamp_AV) 334 is a byte count indicating an offset distance corresponding to a separation distance between the TLV packet 326 that is the reproduction data storage packet, and the TLV packet 324 that is the control information (MPT) storage packet in which the time stamp information and the like to be applied to the reproduction processing of the reproduction data storage packet are stored.

The recording data of the AV-seed offset recording region (byte_offset_of_seed_AV) 333 is a byte count indicating an offset distance corresponding to a separation distance between the TLV packet 326 that is the reproduction data storage packet to be applied to the random access reproduction processing, and the TLV additional header 325 that is the seed information necessary for generating the encryption key to be applied to the decoding of the reproduction data.

The recording data of the time stamp-seed offset recording region (byte_offset_of_seed_timestamp) 335 is a byte count indicating an offset distance corresponding to a separation distance between the TLV packet 324 that is the control information (MPT) storage packet in which the time stamp information and the like to be applied to the reproduction processing of the reproduction data that is applied to the random access reproduction processing are stored, and the TLV additional header 323 that is the seed information necessary for generating the encryption key to be applied to the decoding of the control information (MPT).

As described above, each of the data items of:
the NTP time recording region (NTP_time) 331;
the MMT byte address recording region (MMT_byte_adress) 332;
the AV-time stamp offset recording region (byte_offset_of_timestamp_AV) 334;
the AV-seed offset recording region (byte_offset_of_seed_AV) 333; and
the time stamp-seed offset recording region (byte_offset_of_seed_timestamp) 335
is recorded in the EP map illustrated in Fig. 46.

A processing procedure in a case where the reproduction device performs the random access reproduction processing of selecting the clip AV stream in which the MMT format data is stored as the reproduction target, and of applying the EP map is as described above.

First, the reproduction device reads the data items of:
the NTP time recording region (NTP_time) 331; and
the MMT byte address recording region (MMT_byte_adress) 332
from the EP map illustrated in Fig. 46, detects the data position to be the random access point, and acquires the reproduction target data that is encrypted from the reproduction data storage packet.

Further, a seed information offset is read from the recording region of:
the AV-seed offset recording region (byte_offset_of_seed_AV) 333
from the EP map illustrated in Fig. 46. The offset corresponds to the separation distance between the storage packet of the reproduction data to be applied to the random access reproduction processing, and the TLV additional header that is the seed information necessary for generating the encryption key to be applied to the decoding of the reproduction data.
The reproduction device acquires the TLV additional header that is the seed information necessary for generating the encryption key, on the basis of the offset information, generates the encryption key (= Decoding Key), performs the decoding processing with respect to the encrypted reproduction target data by applying the generated encryption key, and thus, acquires the reproduction data.

Note that, a generation sequence of the encryption key (= Decoding Key) is the same sequence as that described above with reference to Fig. 24 and Fig. 25.

The reproduction device acquires the offset information that is the position identification information of the additional header to be the seed for generating the encryption key, reads the seed in accordance with the acquired information, generates the encryption key, and performs the decoding processing with respect to the encryption block data including the reproduction data.

Next, data is read from the recording region of:
the AV-time stamp offset recording region (byte_offset_of_timestamp_AV) 334
from the EP map illustrated in Fig. 46, the recording position of the control information (MPT) storage packet in which the time stamp (PTS/DTS) to be applied to the reproduction of the acquired reproduction data is recorded is confirmed, the control information storage packet is acquired, and thus, the encrypted control information (MPT) is acquired.

Further, the seed information offset is read from the recording region of:
time stamp-seed offset recording region (byte_offset_of_seed_timestamp) 335
from the EP map illustrated in Fig. 46. The offset corresponds to the separation distance between the control information (MPT) storage packet in which the time stamp information and the like necessary for reproducing the reproduction data to be applied to the random access reproduction processing are stored, and the TLV additional header that is the seed information necessary for generating the encryption key to be applied to the decoding of the control information (MPT).

The reproduction device acquires the TLV additional header that is the seed information necessary for generating the encryption key, on the basis of the offset information, generates the encryption key (= Decoding Key), performs the decoding processing with respect to the encrypted control information (MPT) by applying the generated encryption key, and thus, acquires the time stamp (PTS/DTS) information from the control information (MPT).

Note that, a generation sequence of the encryption key (= Decoding Key) is the same sequence as that described above with reference to Fig. 24 and Fig. 25.

The reproduction device acquires the offset information that is the position identification information of the additional header to be the seed for generating the encryption key, reads the seed in accordance with the acquired information, generates the encryption key, and performs the decoding processing with respect to the encryption block data including the MPT that is the time stamp recording information.

Next, the reproduction device executes the decoding processing and the reproduction processing in accordance with a decoding start time and the reproduction start time that are defined in accordance with the acquired time stamp (DTS/PTS).

As described above, the reproduction device is capable of executing smooth random access reproduction processing without a delay, with reference to the EP map corresponding to the encryption MMT format data illustrated in Fig. 46.

Note that, the EP map illustrated in Fig. 46 is capable of recording a plurality of offset information items by loop setting.

As a modification example of the EP map illustrated in Fig. 46, the EP map is also capable of recording only one offset information item without the loop setting.

### [8-3-2. Example 2 of EP Map Corresponding to Encryption MMT Format Data]

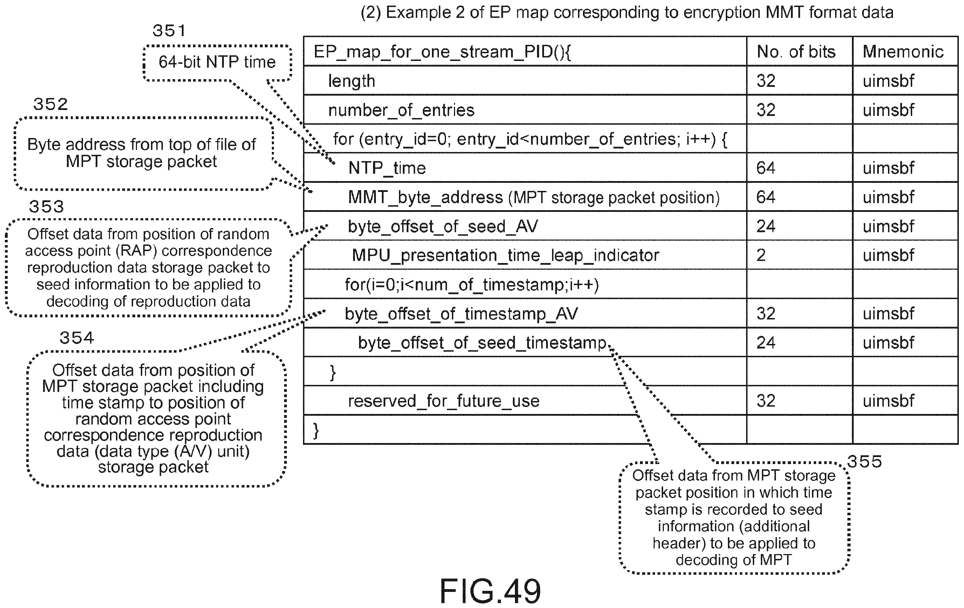

Next,
(2) Example 2 of EP Map Corresponding to Encryption MMT Format Data
will be described with reference to Fig. 49.

The EP map illustrated in Fig. 49 includes each of the following fields.
NTP Time Recording Region (NTP_time) 351
MMT Byte Address Recording Region (MMT_byte_adress) 352
AV-Seed Offset Recording Region (byte_offset_of_seed_AV) 353
AV-Time Stamp Offset Recording Region (byte_offset_of_timestamp_AV) 354
Time Stamp-Seed Offset Recording Region (byte_offset_of_seed_timestamp) 355

Four data items of:
the NTP time recording region (NTP_time) 351;
the AV-seed offset recording region (byte_offset_of_seed_AV) 353;
the AV-time stamp offset recording region (byte_offset_of_timestamp_AV) 354; and
the time stamp-seed offset recording region (byte_offset_of_seed_timestamp) 355
are the same data items as those described above with reference to Fig. 46.

In the recording data of the EP map illustrated in Fig. 49,
the recording data of the MMT byte address recording region (MMT_byte_adress) 352 is different from that of the EP map described with reference to Fig. 46.

In the EP map illustrated in Fig. 49, the recording data of the MMT byte address recording region (MMT_byte_adress) 352 is a byte count indicating a distance from the top of a file (the clip AV stream file) to the packet in which the control information (MPT) is stored.

In the example described above with reference to Fig. 46, the recording data of the MMT byte address recording region (MMT_byte_adress) 332 is the byte count indicating the distance from the top of the file (the clip AV stream file) to the packet in which the reproduction data of the random access reproduction processing target is stored, but in the example illustrated in Fig. 49, the recording data of the MMT byte address recording region (MMT_byte_adress) 332 is data indicating a start position of the MPT storage packet but not the reproduction data.

The reproduction device performing the reproduction by using the EP map of such setting is capable of immediately detecting the packet position of the control information (MPT) storage packet by using the data of:
the MMT byte address recording region (MMT_byte_adress) 352 recorded in the EP map.

In this example, the packet position of the control information storage packet in which the time stamp information and the like are stored is set to a standard position, and a distance from the standard position to the packet position of the reproduction data storage packet is recorded in the AV-time stamp offset recording region (byte_offset_of_timestamp_AV) 354.

The EP map is set in a stream unit of each of the image, the sound, the caption, and the like.

In the EP map of each of the image, the sound, and the caption, a separation distance between the control information storage packet in which the time stamp information and the like are stored, and the reproduction data storage packet corresponding to each data item is stored.

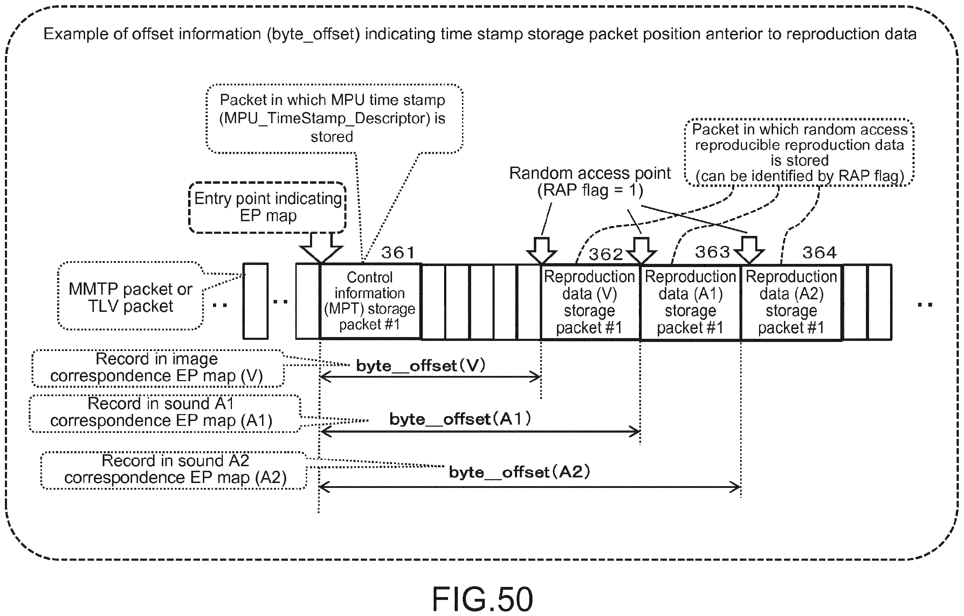

The recording data of the AV-time stamp offset recording region (byte_offset_of_timestamp_AV) 354 will be described with reference to Fig. 50.

The EP map is set in the stream unit of each of the image, the sound, the caption, and the like.

As illustrated in Fig. 50, the packet position of the control information storage packet 361 in which the time stamp information and the like are stored is set to the standard position, and a distance (byte_offset(V)) from the standard position to a packet position of a reproduction data (V) storage packet 362 in which an image (V) as the reproduction data is stored is recorded in the EP map corresponding to the image.

Further, as illustrated in Fig. 50, the packet position of the control information storage packet 361 in which the time stamp information and the like are stored is set to the standard position, and a distance (byte_offset(A1)) from the standard position to a packet position of a reproduction data (A1) storage packet 363 in which a sound (A1) as the reproduction data is stored is recorded in the EP map corresponding to the sound (A1).

Further, as illustrated in Fig. 50, the packet position of the control information storage packet 361 in which the time stamp information and the like are stored is set to the standard position, and distance (byte_offset(A2)) from the standard position to a packet position of a reproduction data (A2) storage packet 364 in which a sound (A2) as the reproduction data is stored is recorded in the EP map corresponding to the sound (A2).

Note that, even though it is not illustrated, similarly, the EP map is set in which a distance (byte_offset) to the packet position of the reproduction data storage packet in which the caption as the reproduction data is stored is recorded.

As described above, the EP map is set in the stream unit of each of the image, the sound, the caption, and the like.

In addition, as with Example 1 described above with reference to Fig. 46, not only the separation distance between the reproduction data storage packet and the control information storage packet, but also direction information indicating whether the reproduction data storage packet is recorded anteriorly or posteriorly by setting the recording position of the control information storage packet to the standard position, that is, the reproduction data recording position identification flag (Plus_minus_flag) may be recorded in the EP map.

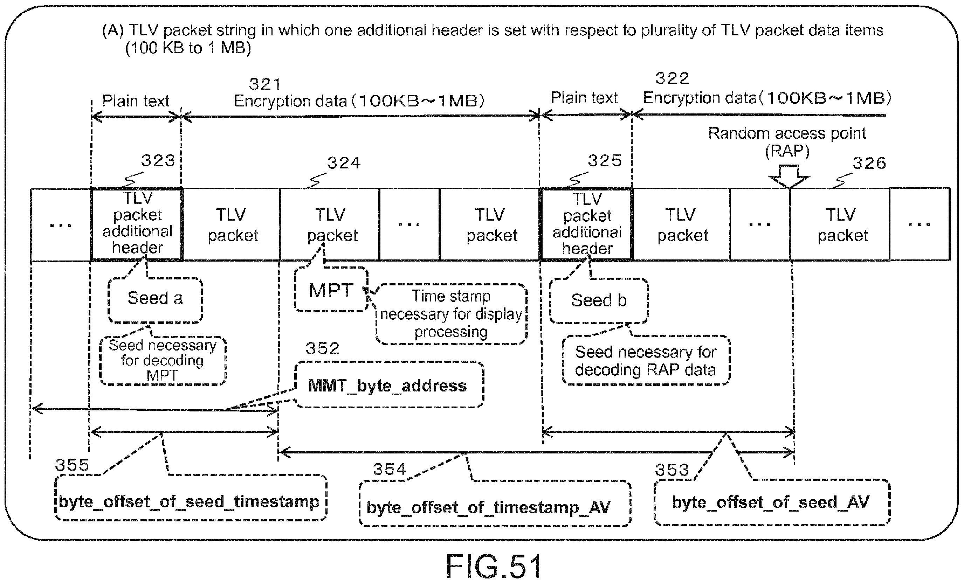

Next, a specific example of the following data items that are recorded in the EP map will be described with reference to Fig. 51.
MMT Byte Address Recording Region (MMT_byte_adress) 352
AV-Time Stamp Offset Recording Region (byte_offset_of_timestamp_AV) 354
AV-Seed Offset Recording Region (byte_offset_of_seed_AV) 353
Time Stamp-Seed Offset Recording Region (byte_offset_of_seed_timestamp) 355

As illustrated in Fig. 51, each of the data items is the following data.

The recording data of the MMT byte address recording region (MMT_byte_adress) 352 is a byte count indicating a distance from the first packet of the clip AV stream file to the TLV packet 324 that is the control information (MPT) storage packet in which the time stamp information and the like to be applied to the reproduction processing of the random access reproduction data are stored.

The recording data of the AV-time stamp offset recording region (byte_offset_of_timestamp_AV) 354 is a byte count indicating an offset distance corresponding to the separation distance between the TLV packet 326 that is the reproduction data storage packet, and the TLV packet 324 that is the control information (MPT) storage packet in which the time stamp information and the like to be applied to the reproduction processing of the reproduction data storage packet are stored.

The recording data of the AV-seed offset recording region (byte_offset_of_seed_AV) 353 is a byte count indicating an offset distance corresponding to the separation distance between the TLV packet 326 that is the reproduction data storage packet to be applied to the random access reproduction processing, and the TLV additional header 325 that is the seed information necessary for generating the encryption key to be applied to the decoding of the reproduction data.

The recording data of the time stamp-seed offset recording region (byte_offset_of_seed_timestamp) 355 is a byte count indicating an offset distance corresponding to the separation distance between the TLV packet 324 that is the control information (MPT) storage packet in which the time stamp information and the like to be applied to the reproduction processing of the reproduction data that is applied to the random access reproduction processing are stored, and the TLV additional header 323 that is the seed information necessary for generating the encryption key to be applied to the decoding of the control information (MPT).

As described above, each data item of:
the NTP time recording region (NTP_time) 351;
the MMT byte address recording region (MMT_byte_adress) 352;
the AV-time stamp offset recording region (byte_offset_of_timestamp_AV) 354;
the AV-seed offset recording region (byte_offset_of_seed_AV) 353; and
the time stamp-seed offset recording region (byte_offset_of_seed_timestamp) 355
is recorded in the EP map illustrated in Fig. 49.

A reproduction processing procedure of the reproduction device to which the EP map illustrated in Fig. 49 is applied is identical to that of the processing to which the EP map illustrated in Fig. 46 described above is applied, except that the initial access data is changed to the control information (MPT) storage packet in which the time stamp information and the like to be applied to the reproduction processing of the random access reproduction data are stored.

The reproduction device is capable of executing smooth random access reproduction processing without a delay, with reference to the EP map corresponding to the encryption MMT format data illustrated in Fig. 49.

### [9. Configuration and Processing of Information Processing Apparatus Executing Data Recording Processing with Respect to Information Recording Medium]

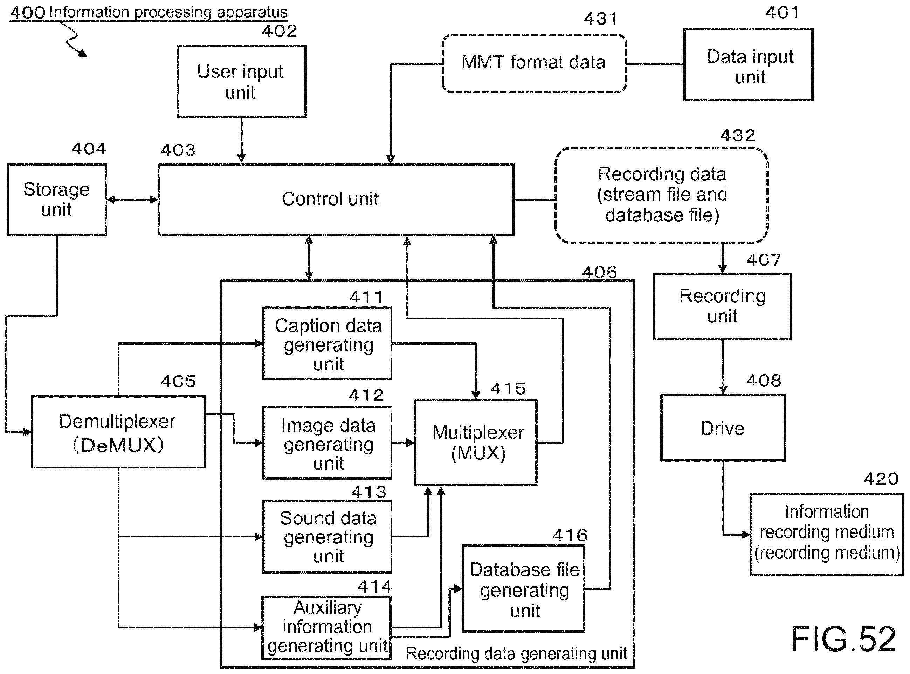

Next, the configuration and the processing of the information processing apparatus executing the data recording processing with respect to the information recording medium will be described with reference to Fig. 52 and the like.

As described above, the information processing apparatus of the present disclosure records the input data according to the MMT format in the information recording medium such as the BD or the HD, or the flash memory, as the BDAV format data.

Further, when such data recording processing is performed, the control information corresponding to the MMT format data, the attribute information, and the like are recorded in the database file such as the playlist or the clip information file.

Such information items, for example, can be acquired from various information recording tables configuring TLV-SI or MMT-SI that is the control information included in the input data according to the MMT format.

Note that, the recording processing described below includes not only processing of recording the data received from the broadcasting station, but also copy processing between the media.

In a case where the copy processing is performed, there is a case of performing processing in which reading data from a copy source medium is decoded, is re-encrypted in an encryption format corresponding to a content management system corresponding to a copy destination medium, and is recorded in the copy destination medium.

The information processing apparatus acquires various information items from the received data or the copy source medium, and records information corresponding to the medium recording content in the database file such as the playlist or the clip information file that is defined in the BDAV format.

Hereinafter, the configuration and a processing sequence of the information processing apparatus executing the generation processing of the information recording medium in which the playlist or the clip information file is recorded, specifically, the data recording processing with respect to the information recording medium such as the BD will be described.

Fig. 52 is a diagram illustrating the configuration of an information processing apparatus 400 executing the data recording processing with respect to the information recording medium such as the BD.

The information processing apparatus 400 records the clip AV stream file, and the database file such as the playlist or the clip information file in an information recording medium (a recording medium) 420.

A data input unit 401 inputs MMT format data 431 with respect to the information recording medium 420, that is, the MMT format data 431 including the image data, the sound data, the caption data, and the like.

The data input unit 401 includes a reception unit that receives the transmission data, for example, from the broadcasting station, the content server, or the like that transmits the MMT format data 431, a medium reading unit that executes data reading from the medium in which the MMT format data 431 is recorded, or the like.

The MMT format data 431 that is input from the data input unit 401 is data according to the data format described above with reference to Fig. 2, and for example, includes high-definition image data such as an HEVC image.

The MMT format data 431 is stored in a storage unit 404, under the control of a control unit 403.

A user input unit 402, for example, inputs a data recording start request with respect to the information recording medium 420, and the like.

In a case where the data recording start request is input from the user input unit 402, the MMT format data 431 stored in the storage unit 404 is input into a demultiplexer (DeMUX) 405, with the input as a trigger.

The demultiplexer (DeMUX) 405 acquires the packet in which each of the image data, the sound data, the caption data, and the like is stored, or auxiliary information such as the signaling information (TLV-SI and MMT-SI) in which the notification information, the control information, and the like are stored, from the MMT format data 431, sorts the packet into data type packets, and inputs each of the packets into a caption data generating unit 411, an image data generating unit 412, a sound data generating unit 413, and an auxiliary information generating unit 414 of a recording data generating unit 406, in accordance with the data type.

The caption data generating unit 411 acquires the caption data from the MMT format data 431 that is input by the data input unit 401 and is stored in the storage unit 404, and generates stream file storage data defined in the BDAV format.

The image data generating unit 412 acquires the image data from the MMT format data 431 that is input from the data input unit 401 and is stored in the storage unit 404, and generates stream file storage data defined in the BDAV format.

The sound data generating unit 413 acquires the sound data from the MMT format data 431 that is input from the data input unit 401 and is stored in the storage unit 404, and generates stream file storage data defined in the BDAV format.

The auxiliary information generating unit 414 acquires the auxiliary information such as the signaling information (TLV-SI and MMT-SI) in which the notification information, the control information, and the like are stored, from the MMT format data 431 that is input from the data input unit 401 and is stored in the storage unit 404, and generates data to be stored in the playlist file, the clip information file, or the clip AV stream file as the database file defined in the BDAV format.

A multiplexer (MUX) 415 inputs each of the caption data, the image data, and the sound data converted by the caption data generating unit 411, the image data generating unit 412, and the sound data generating unit 413, and various information items acquired from the signaling information (TLV-SI and MMT-SI) of the MMT format data 431, and the like by the auxiliary information generating unit 414, and generates a stream file in which such data items are stored.

A database file generating unit 416 generates a database file such as the playlist file or the clip information file in which various information items acquired from the signaling information (TLV-SI and MMT-SI) of the MMT format data 431 by the auxiliary information generating unit 414 are recorded.

Record data 432 including the stream file data generated by the recording data generating unit 406, and the database file such as the playlist file and the clip information file is output to and recorded in the information recording medium 420 through a drive 407 by a recording unit 406, under the control of the control unit 403.

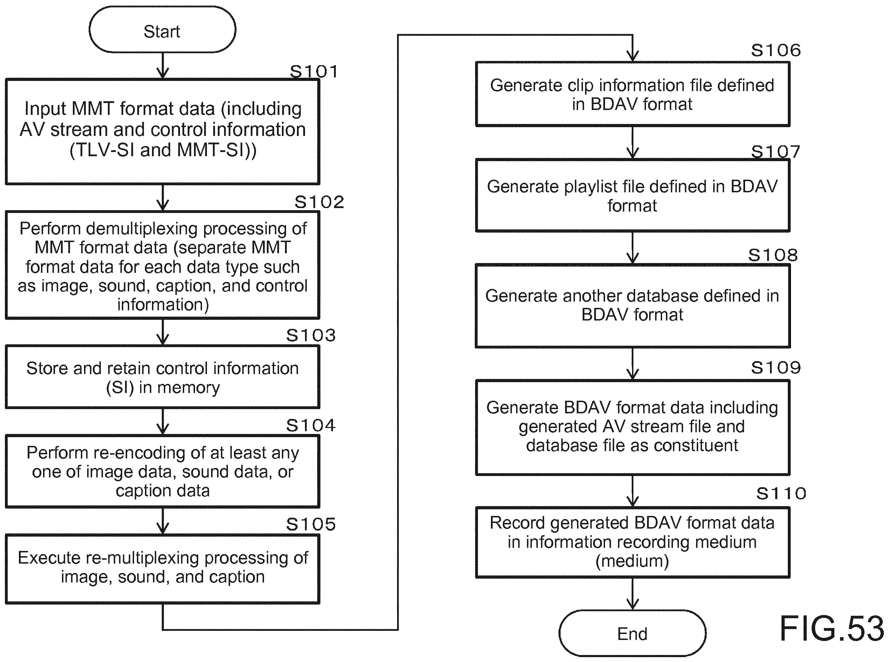

Next, the sequence of the data recording processing with respect to the information recording medium 420 that is executed by the information processing apparatus 400 illustrated in Fig. 52 will be described with reference to a flowchart illustrated in Fig. 53.

Processing according to the flow illustrated in Fig. 53, for example, can be executed under the control of the data processing unit (the control unit) including a CPU having a function of executing a program, in accordance with a program that is stored in the storage unit of the information processing apparatus.

Hereinafter, the processing of each step illustrated in the flow of Fig. 53 will be sequentially described.

### (Step S101)

First, in Step S101, the information processing apparatus 400 inputs the MMT format data that is the recording data through the data input unit 401.

Note that, the recording data includes the image data, the sound data, the caption data, the signaling information (TLV-SI and MMT-SI) in which the notification information, the control information, and the like are stored, and the like.

### (Step S102)

Next, in Step S102, the information processing apparatus 400 performs demultiplexing processing of the input MMT format data, that is, data separation processing of a data type unit. The information processing apparatus 400 executes separation processing of the image, the sound, the caption, the control information, and the like.

### (Step S103)

Next, in Step S103, the information processing apparatus 400 stores the control information separated in Step S102, for example, the signaling information (TLV-SI and MMT-SI) in a memory.

### (Step S104)

Next, in Step S104, the information processing apparatus 400 executes re-encoding processing of at least any one of the image data, the sound data, or the caption data that are separated in Step S102.

Note that, such processing is processing that is performed in a case of changing an encoding mode of the data that is recorded in the information recording medium, and in a case where the received data is recorded as it is, the re-encoding processing is not necessary.

### (Step S105)

Next, in Step S105, the information processing apparatus 400 executes multiplexing processing of the data including the image, the sound, the caption, the reproduction control information, and the like, including the data after being encoded in Step S103. That is, the generation processing of the clip AV stream file is executed.

Note that, the reproduction control information stored in the clip AV stream file, for example, includes information and the like that are acquired from the MMT package table (MPT) described with reference to Fig. 33 and the like.

### (Step S106)

Next, in Step S106, the information processing apparatus 400 generates the clip information file by using the configuration data of the input MMT format data.

For example, the clip information file described above with reference to Fig. 36 and the like, that is, the clip information file corresponding to the clip AV stream file in which the MMT format data is stored is generated.

The EP map is included in the clip information file.

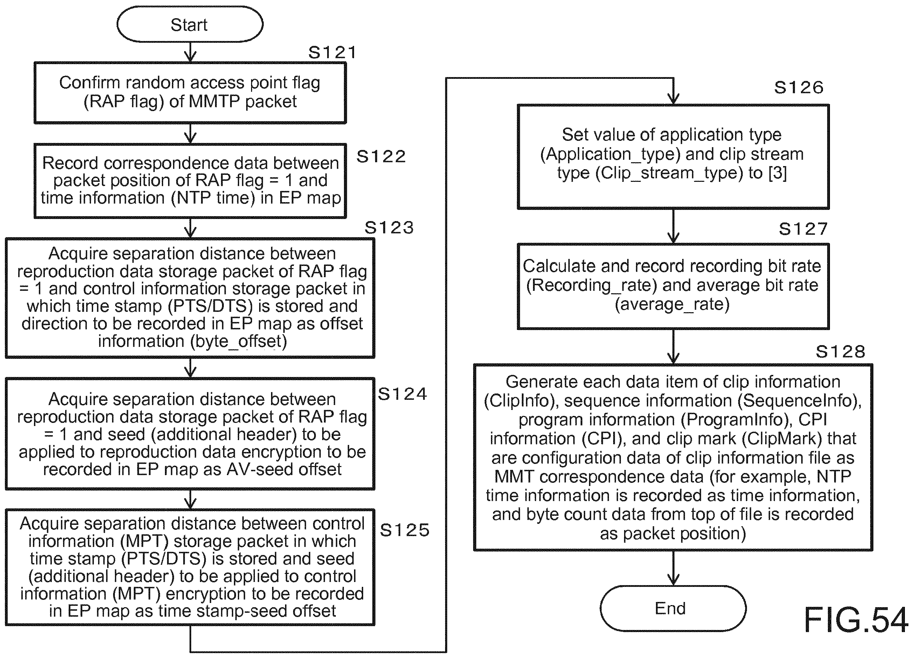

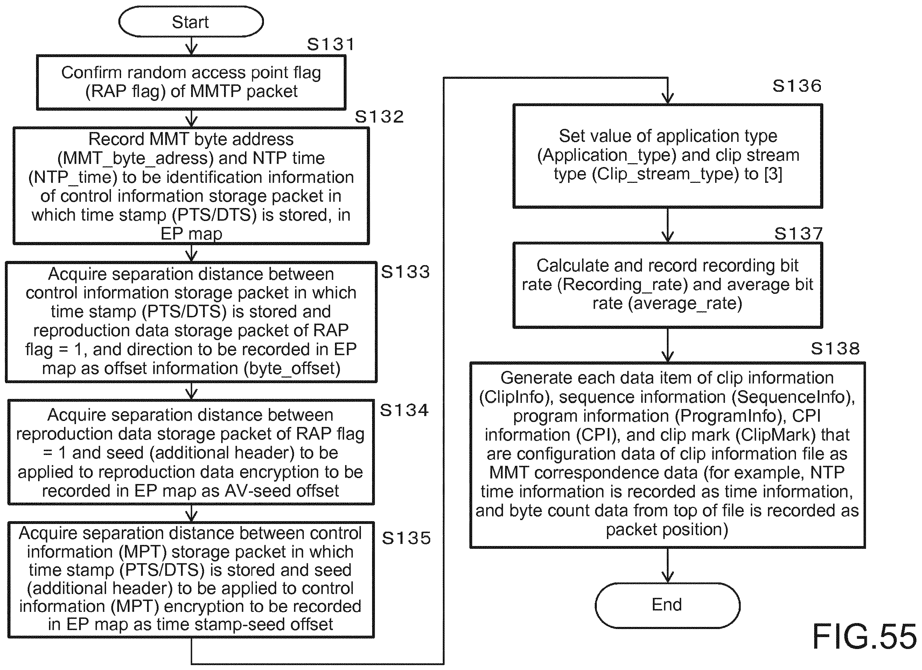

Note that, the detailed sequence of the generation processing of the clip information file in Step S106 will be described below in detail, with reference to the flow illustrated in Fig. 54 and Fig. 55.

### (Step S107)

Next, in Step S107, the information processing apparatus 400 generates the playlist file by using the configuration data of the input MMT format data.

For example, the playlist file described above with reference to Fig. 26 and the like, that is, the playlist file corresponding to the clip AV stream file in which the MMT format data is stored is generated.

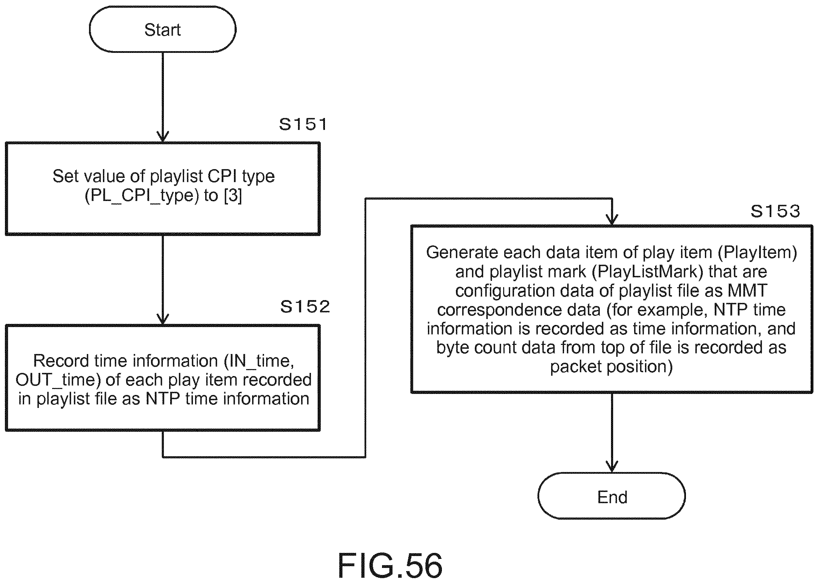

Note that, the details of playlist file generation processing in Step S107 will be described below with reference to Fig. 56.

### (Step S108)

Next, in Step S108, the information processing apparatus 400 generates another database file by using the input MMT format data.

### (Step S109)

Next, in Step S109, the information processing apparatus 400 generates the BDAV format data by using the AV stream file and the database file that are generated.

### (Step S110)

Next, in Step S110, the information processing apparatus 400 records the BDAV format data that is generated in Step S109 in the information recording medium (medium).

Next, the detailed sequence of the clip information file generation processing executed in Step S106 will be described with reference to the flowchart illustrated in Fig. 54 and Fig. 55.

The flowcharts illustrated in Fig. 54 and Fig. 55 are flows individually illustrating a generation processing sequence of the EP map described above. That is, the flowchart is a flow including the generation processing of two types of different EP maps of:
Example 1 of the EP map corresponding to the encryption MMT format data (Fig. 46) in Fig. 54; and
Example 2 of the EP map corresponding to the encryption MMT format data (Fig. 49) in Fig. 55.

Note that, the flowchart illustrated in Fig. 54 and Fig. 55 is a generation sequence of the clip information that is used for controlling the clip AV stream file in which the MMT format data is stored.

First, the flow illustrated in Fig. 54, that is, processing of each step of the clip information file generation processing flow including processing of generating the EP map corresponding to Example 1 of the EP map corresponding to the encryption MMT format data described above with reference to Fig. 46 to Fig. 48, and of recording the EP map in the clip information file will be sequentially described.

### (Step S121)

First, in Step S121, the information processing apparatus 400 confirms the random access point (RAP) flag of the MMTP packet that is the MMT format data stored in the clip AV stream file.

As described above with reference to Fig. 43 and the like, the MMTP packet in which RAP Flag = 1 is set is data including the random access point.

### (Step S122)

Next, in Step S122, the information processing apparatus 400 generates the EP map including correspondence data between the packet position of the MMTP packet in which RAP Flag = 1 is set and the time information (the NTP time).

Such processing is the generation processing of the EP map corresponding to the MMT format data described above with reference to Fig. 46. The byte position from the top of the clip AV stream file (= Top of Initial MMTP Packet Stored in File) is used as the packet position information. In addition, the network type protocol (NTP) time is used as the time information.

### (Step S123)

Next, in Step S123, the information processing apparatus 400 acquires the separation distance between the reproduction data storage packet of RAP Flag = 1, and the control information storage packet in which the time stamp is stored, and the direction thereof, and records the separation distance and the direction in the EP map as the offset information (byte_offset).

Such processing is also the generation processing of the EP map corresponding to the MMT format data described above with reference to Fig. 46.

For example, the byte information (byte_offset) indicating the separation distance between the reproduction data storage packet and the control information storage packet is recorded as 31-bit information, and the control information recording position identification flag (Plus _minus _flag) for identifying whether the control information storage packet is in the data recording position anterior to the reproduction data storage packet or in the data recording position posterior to the reproduction data storage packet is recorded in 1 bit.

### (Step S124)

Next, in Step S124, the information processing apparatus 400 acquires the separation distance between the reproduction data storage packet of RAP Flag = 1, and the seed (the additional header) to be applied to the reproduction data encryption, and records the separation distance in the EP map as the AV-seed offset.

Such processing is also the generation processing of the EP map corresponding to the MMT format data described above with reference to Fig. 46.

For example, the byte information (byte_offset) indicating the separation distance between the reproduction data storage packet, and the additional header to be the seed for generating the encryption key that is applied to the encryption and the decoding processing of the reproduction data storage packet is recorded as 24-bit information.

### (Step S125)

Next, in Step S125, the information processing apparatus 400 acquires the separation distance between the control information (MPT) storage packet in which the time stamp (PTS/DTS) is stored, and the seed (the additional header) to be applied to the control information (MPT) encryption, and records the separation distance in the EP map as the time stamp-seed offset.

Such processing is also the generation processing of the EP map corresponding to the MMT format data described above with reference to Fig. 46.

For example, the byte information (byte_offset) indicating the separation distance between the control information (MPT) storage packet in which the time stamp (PTS/DTS) is stored, and the additional header to be the seed for generating encryption key that is applied to the encryption and the decoding processing of the control information (MPT) stored with the time stamp (PTS/DTS) is recorded as 24-bit information.

### (Step S126)

Next, in Step S126, the information processing apparatus 400 sets the value of the application type (Application_type) and the clip stream type (Clip_stream_type) of the clip information file to [3].

Such processing is processing of recording a setting value capable of identifying that the storage data of the clip AV stream file to be control target data of the clip information file is the MMT format data.

### (Step S127)

Next, in Step S127, the information processing apparatus 400 records a record rate (recording_rate) and the average rate (average_rate) of the clip information file.

Such processing is the data recording processing of:
a TS average rate (TS_average_rate); and
a TS recording rate (TS_recording_rate).

The average bit rate of a transport stream of the clip AV stream file that is the reproduction target data of the clip information file, and a recording rate are represented in the unit of bytes/second.

The bit rate information is premised on the fact that the bit rate information is calculated on the basis of the TS packet, and in a case where the reproduction target data is the MMT format data including the MMT packet, the bit rate according to the MMT format is calculated and recorded. Alternatively, in a case where the reproduction target data is the MMT format, in this field, an invalid value may be recorded, and the bit rate information may not be used.

### (Step S128)

Next, in Step S128, the information processing apparatus 400 generates each data item of:
clip information (ClipInfo);
sequence information (SequenceInfo);
program information (ProgramInfo);
CPI information (CPI); and
a clip mark (ClipMark)
that are the configuration data of the clip information file.

Note that, in each of the data generation processings, in a case where the reproduction target data is the MMT format data, for example, the NTP time information is acquired and recorded as the time information, and byte count data from the top of the initial MMTP packet stored in the stream file (the clip AV stream file) is acquired and recorded as the packet position.

According to such processing, the clip information file corresponding to the MMT format data is generated.

Note that, in a case where a control target is the clip AV stream file in which the MPEG-2TS format data is stored, it is sufficient that the same clip information file generation processing as that of the related art is not performed.

Next, the flowchart illustrated in Fig. 55 will be described. The flow illustrated in Fig. 55 sequentially illustrates processing of each step of the clip information file generation processing flow including processing of generating the EP map corresponding to Example 2 of the EP map corresponding to the MMT format data described above with reference to Fig. 49, and of recording the EP data in the clip information file.

### (Step S131)

First, in Step S131, the information processing apparatus 400 confirms the random access point (RAP) flag of the MMTP packet that is the MMT format data stored in the clip AV stream file.

### (Step S132)

Next, in Step S132, the information processing apparatus 400 records the MMT byte address (MMT_byte_adress) that is the identification information of the control information storage packet position in which the time stamp (PTS/DTS) is stored, and the NTP time (NTP_time) in the EP map.

Such processing is the generation processing of the EP map corresponding to the MMT format data described above with reference to Fig. 49.

In this example, the address information that is recorded in the EP map is the address information of the control information (MPT) storage packet but not the reproduction data.

The byte position from the top of the clip AV stream file (= Top of Initial MMTP Packet Stored in File) is used as the address information. In addition, the network type protocol (NTP) time is used as the time information.

### (Step S133)

Next, in Step S133, the information processing apparatus 400 acquires the separation distance between the control information storage packet in which the time stamp (PTS/DTS) is stored, and the reproduction data storage packet of RAP Flag = 1, and the direction thereof, and records the separation distance and the direction in the EP map as the offset information (byte_offset).

Such processing is also the generation processing of the EP map corresponding to the MMT format data described above with reference to Fig. 49.

For example, the byte information (byte_offset) indicating the separation distance between the reproduction data storage packet and the control information storage packet is recorded as 31-bit information, and the control information recording position identification flag (Plus_minus_flag) for identifying whether the reproduction data storage packet is in the data recording position anterior to the control information storage packet or in the data recording position posterior to the control information storage packet is recorded in 1 bit.

### (Steps S134 to S138)

The subsequent processings of Steps S134 to S138 are identical to the processings of Steps S124 to S128 described with reference to Fig. 54, and thus, the description thereof will be omitted.

Next, the detailed sequence of the playlist file generation processing that is executed in Step S107 of the flow illustrated in Fig. 53 will be described with reference to the flowchart illustrated in Fig. 56.

Note that, the flowchart illustrated in Fig. 56 is a generation sequence of the playlist that is used for controlling the clip AV stream file in which the MMT format data is stored.

The processing of each step of the flow illustrated in Fig. 56 will be sequentially described.

### (Step S151)

First, in Step S151, the information processing apparatus 400 sets the value of the CPI type (PL_CPI_type) that is recorded in the playlist file to [3] .

Such processing corresponds to the processing described above with reference to Fig. 26 to Fig. 30.

As described with reference to "(2) New CPI Type Record Data (Recording MPEG-2TS Correspondence Data and MMT Correspondence Data)" of Fig. 30,
PL_CPI Type (PL_CPI_type) = 3 indicates that the CPI type in the clip information file referred to by the play item (PlayItem) defined in the playlist file is the EP map corresponding to the MMT.

### (Step S152)

Next, in Step S152, the information processing apparatus 400 records the time information (IN_time,OUT_time) of each of the play items recorded in the playlist file, as the NTP time information.

Such processing corresponds to the processing described above with reference to Fig. 31 and Fig. 32.

As illustrated in "(2) New Play Item Information Recording Data (MMT Correspondence Playlist)" of Fig. 32(2),
the start time (IN_time) is the reproduction start time information of the play item (PlayItem) reproduction start point. In a case where the reproduction target data is the MMT format data, the time information according to the network time protocol (NTP) is recorded.

The end time (OUT_time) is the reproduction end time information of the play item (PlayItem) reproduction end point. In a case where the reproduction target data is the MMT format data, the time information according to the network time protocol (NTP) is recorded.

The time information according to the network time protocol (NTP), for example, is transmitted along with the MMT format data including the broadcasting content and the like that are transmitted by the transmission device 20 such as the broadcasting server (the broadcasting station) 21 illustrated in Fig. 1.

The information processing apparatus 30 such as the television (TV) 32 acquires the time information according to the network time protocol (NTP) that is transmitted by the transmission device 20, and records the time information in the playlist.

### (Step S153)

Next, in Step S153, the information processing apparatus 400 generates each of the data items of:
a play item (PlayItem); and
a playlist mark (PlayListMark)
that are the configuration data of the playlist file.

Note that, in each of the data generation processings, in a case where the reproduction target data is the MMT format data, for example, the NTP time information is acquired and recorded as the time information, and byte count data from the top of the initial MMTP packet stored in the stream file (the clip AV stream file) is acquired and recorded as the packet position.

According to such processing, the playlist file corresponding to the MMT format data is generated.

Note that, in a case where the control target is the clip AV stream file in which the MPEG-2TS format data is stored, it is sufficient that the same playlist file generation processing as that of the related art is not performed.

The information processing apparatus 400 performs the processing according to the flow described with reference to Fig. 53 to Fig. 56, and thus, is capable of recording the input MMT format data as the playlist file, the clip information file, and the clip AV stream file according to the BDAV format, and of reproducing the input MMT format data.

### [10. Configuration and Processing of Information Processing Apparatus Executing Data Recording Processing from Information Recording Medium]

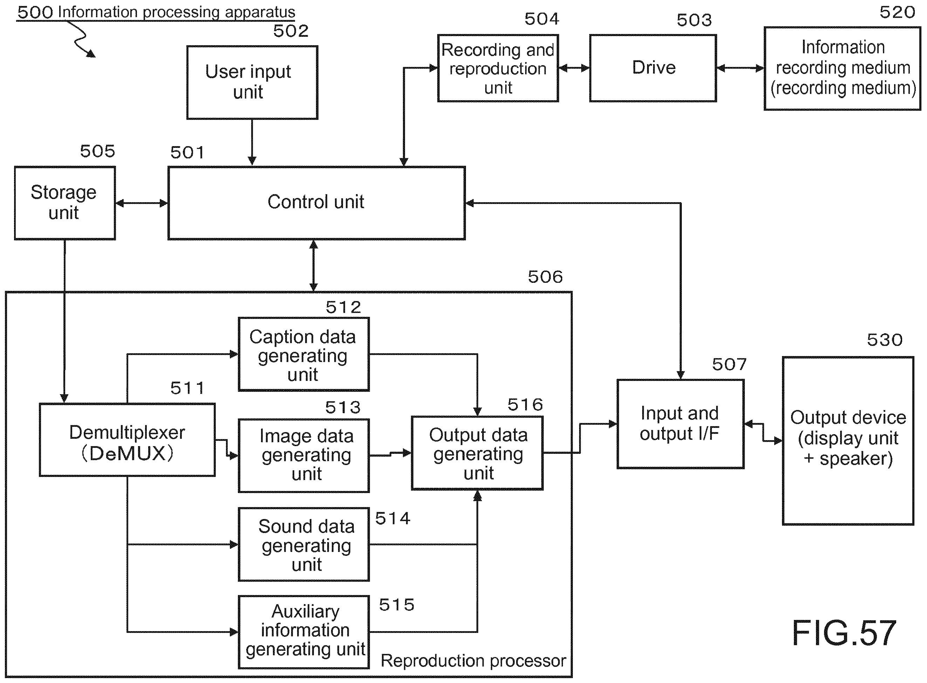

Next, the configuration and the processing of the information processing apparatus executing the data recording processing from the information recording medium will be described with reference to Fig. 57 and the like.

The information processing apparatus executing the reproduction processing executes the reading and the reproduction processing of the data that is recorded in the information recording medium mounted on a device.

Fig. 57 is a diagram illustrating the configuration of an information processing apparatus 500 executing the reproduction processing of data that is recorded in an information recording medium 520 such as the BD.

The information processing apparatus 500 reads the data that is recorded in the information recording medium (the recording medium) 520 illustrated in Fig. 57, and outputs the data to an output device (display unit + speaker) 530. Note that, the output device 530, for example, is a television and the like, and is a display device including a display, a speaker, and the like.

Note that, there is a case where the information processing apparatus 500 is identical to the information processing apparatus 400 performing the data recording described above with reference to Fig. 52. That is, the information processing apparatus 500 is an information processing apparatus having both of a data recording function and a data reproduction function.

The information recording medium (the recording medium) 520 is a recording medium in which the AV stream file generated by the processing described with reference to Fig. 53 to Fig. 56, and the database such as the playlist and the clip information file are recorded.

A control unit 501, for example, reads the recording data of the information recording medium 520 through a recording and reproduction unit 504 and a drive 503, on the basis of the input of reproduction instruction information from a user input unit 502, stores the recording data in a storage unit 505 as a data buffer, and outputs the storage data to a reproduction processor 506.

The reproduction processor 506 acquires the reproduction data read out from the information recording medium 520, that is, each data item from the clip AV stream file in which each of the image data, the sound data, the caption data, and the like is stored, and generates the reproduction data, under the control of the control unit 501.

A demultiplexer (DeMUX) 511 acquires the data storage packet in which each of the image data, the sound data, the caption data, the playlist file, the clip information file, and the like is stored, sorts the data storage packet into the data type packets, outputs each of the packets to a caption data generating unit 512, an image data generating unit 513, a sound data generating unit 514, and an auxiliary information generating unit 515, in accordance with the data type.

The caption data generating unit 512, the image data generating unit 513, and the sound data generating unit 514 execute the decoding processing and the like of the data that is stored in the packet, and output the decoding data to an output data generating unit 516.

The output data generating unit 516 outputs each of the caption data, the image data, and the sound data to the output device (display unit + speaker) 530 through an input and output interface 407.

Note that, there is a case where the information recording medium 520 includes:
the stream file in which the MPEG-2TS format data is stored; and
the stream file in which the MMT format data is stored, as the stream file in which the reproduction target data is stored.

In this case, the information processing apparatus 500 executes the reproduction processing of the stream file in which the MPEG-2TS format data is stored and the stream file in which the MMT format data is stored by applying the playlist file and the clip information file that are defined in the BDAV format.

The auxiliary information generating unit 515, for example, acquires video recording content list display data that is stored in the playlist file and the clip information file, generates a video recording content list, and outputs the generated list to the output device (display unit + speaker) 530.

The output device (display unit + speaker) 530 outputs each of the caption data, the image data, the sound data, and the like that are input from the information processing apparatus 500, through the output device (display unit + speaker) 530.

Note that, the information recording medium 520 stores data in which the MMT format data is recorded in accordance with the BDAV format, and the information processing apparatus 500 acquires the recording information of the playlist file and the clip information file that are the database file of the BDAV format definition, and executes the reproduction control processing.

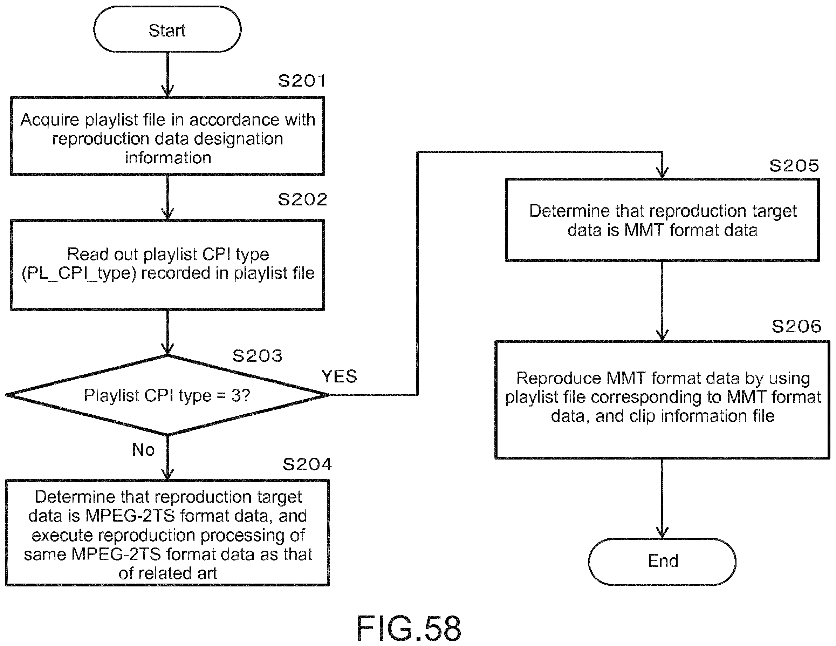

Next, the sequence of the data reproduction processing from the information recording medium 520 that is executed by the information processing apparatus 500 illustrated in Fig. 57 will be described with reference to a flowchart illustrated in Fig. 58.

The processing according to the flow illustrated in Fig. 58, for example, can be executed under the control of the data processor (the control unit) including a CPU having a function of executing a program, in accordance with a program stored in the storage unit of the information processing apparatus 500.

Note that, the information processing apparatus executing the processing according to the flow illustrated in Fig. 58 is the information processing apparatus 500 illustrated in Fig. 57, is mounted with the information recording medium (the recording medium) 520, reads the data that is recorded in the mounted information recording medium 520, and outputs the data to the output device (display unit + speaker) 530. Note that, the output device 520, for example, is a television and the like, and is a display device including a display, a speaker, and the like.

The information recording medium (the recording medium) 520 is the recording medium in which the AV stream that is generated by the processing described with reference to Fig. 53 to Fig. 56, and the database such as the playlist and the clip information file are recorded.

Hereinafter, the processing of each step illustrated in the flow of Fig. 58 will be sequentially described.

### (Step S201)

First, in Step S201, for example, the control unit 501 of the information processing apparatus 500 reads the playlist file in which the reproduction control information corresponding to the designated reproduction data is stored from the information recording medium (medium), in accordance with the reproduction data designation information that is input by the user.

### (Step S202)

Next, in Step S202, the control unit 501 of the information processing apparatus 500 reads out the PL_CPI type (PL_CPI_type) that is recorded in the playlist file.

As described above with reference to Fig. 26 to Fig. 30, the PL_CPI type (PL_CPI_type) is information indicating the CPI type in the clip information file referred to by the play item (PlayItem) that is defined in the playlist file.

Note that, the characteristic point information (CPI) is the recording data of the clip information file, and for example, is data for acquiring the data address of the reproduction start point.

As illustrated in Fig. 30, PL_CPI Type (PL_CPI_type) = 1 indicates that the CPI type in the clip information file referred to by the play item (PlayItem) that is defined in the playlist file is the EP map corresponding to the MPEG-2TS.

PL_CPI Type (PL_CPI_type) = 2 indicates that the CPI type in the clip information file referred to by the play item (PlayItem) that is defined in the playlist file is the TU map corresponding to the MPEG-2TS.

PL_CPI Type (PL_CPI_type) = 3 indicates that the CPI type in the clip information file referred to by the play item (PlayItem) that is defined in the playlist file is the EP map corresponding to the MMT.

As described above, it is possible to perform three types of definitions of PL_CPI Type (PL_CPI_type) = 1 to 3, and it is possible to identify three CPI types.

### (Step S203)

Next, in Step S203, the control unit 501 of the information processing apparatus 500 determines whether or not the setting value of the PL_CPI type (PL_CPI_type) read out in Step S202 is [3].

That is, it is determined whether or not the CPI type in the clip information file referred to by the play item (PlayItem) that is defined in the playlist file is the EP map corresponding to the MMT.

In a case of PL_CPI Type (PL_CPI_type) = 3, the determination of Step S203 is Yes, and the process proceeds to Step S205.

On the other hand, in a case where the PL_CPI type (PL_CPI_type) is not 3, the determination of Step S203 is No, and the process proceeds to Step S204.

### (Step S204)

In a case where PL_CPI type (PL_CPI_type) is not 3, the processing of Step S204 is executed.

In a case where the PL_CPI type is other than 3, the CPI type in the clip information file referred to by the play item (PlayItem) that is defined in the playlist file is 1 or 2, and the reproduction target data is the MPEG-2TS format data.

In this case, the information processing apparatus 500 executes the reproduction processing of the MPEG-2TS format data by applying a reproduction processing method of the related art.

### (Step S205)

On the other hand, in a case where the PL_CPI type (PL_CPI_type) is 3, in Step S205, it is determined that the reproduction target data according to the playlist file is the MMT format data.

### (Step S206)

Next, in Step S206, the information processing apparatus 500 executes the reproduction processing of the storage data of the clip information file in which the MMT format data is stored by applying the playlist and the clip information file corresponding to the MMT format data.

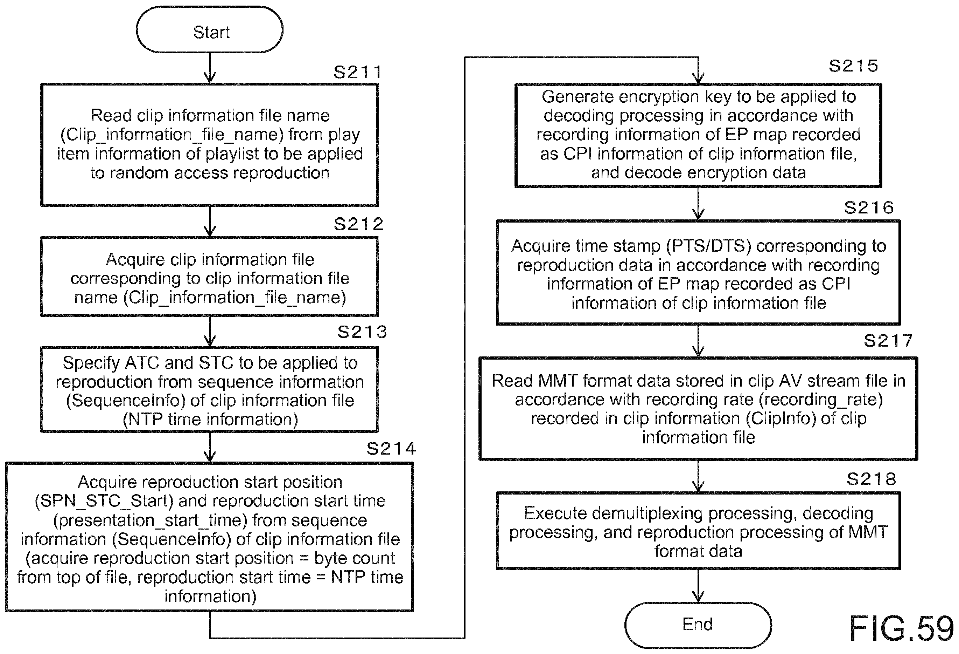

Next, the sequence of random access reproduction processing to which the EP map corresponding to the MMT format data that is recorded in the clip information file will be described as a specific example of the reproduction processing of the MMT format data, with reference to a flowchart illustrated in Fig. 59.

Note that, the EP map corresponding to the MMT format data, for example, is an EP map having any data configuration described above with reference to Fig. 46 to Fig. 49, and includes correspondence data between the time information corresponding to the random accessible data position and byte position information from the top of the initial MMTP packet that is stored in the stream file (the clip AV stream file).

Further, the EP map corresponding to the MMT format data is an EP map in which the offset information indicating a relative position relationship between the reproduction data storage packet and the control information storage packet, or the time stamp information is recorded.

The processing of each step of the flow illustrated in Fig. 59 will be described.

### (Step S211)

First, in Step S211, the information processing apparatus 500 reads a clip information file name (Clip_information_file_name) from the play item information of the playlist to be applied to the random access reproduction.

The clip information file name (Clip_information_file_name) is data that is recorded in the play item (PlayItem) information of the playlist file described above with reference to Fig. 31.

### (Step S212)

Next, in Step S212, the information processing apparatus 500 reads clip information file having the clip information file name (Clip_information_file_name) that is read from the playlist file in Step S211, from the information recording medium (medium).

### (Step S213)

Next, in Step S213, the information processing apparatus 500 specifies an arrival time clock (ATC) and a system time clock (STC) that are the clock information to be applied to the reproduction, from the sequence information (SequenceInfo) of the clip information file. Note that, such time information is the clock information to be applied to the data reproduction, and in a case where the reproduction target data is the MMT format data, the time information is recorded as the NTP time information.

### (Step S214)

Next, in Step S214, the information processing apparatus 500 acquires a reproduction start position (SPN_STC_Start) and a reproduction start time (presentation_start_time) from the sequence information (SequenceInfo) of the clip information file.

In a case where the reproduction target data is the MMT format data, the reproduction start position information, for example, is a byte count from the top of the initial MMTP packet that is stored in the stream file (the clip AV stream file), and the reproduction start time is the NTP time information. Such information is recorded as the sequence information (SequenceInfo) of the clip information file.

### (Step S215)

Next, in Step S215, the information processing apparatus 500 generates the encryption key to be applied to the decoding processing, in accordance with the recording information of the EP map that is recorded as the CPI information of the clip information file, and decodes the encryption data.

The random access reproduction processing is processing using the EP map corresponding to the MMT format data described above with reference to Fig. 46 or Fig. 49, and is processing of generating the encryption key (= Decoding Key) by using the additional header to be the seed, and of performing the decoding by applying the generated encryption key.

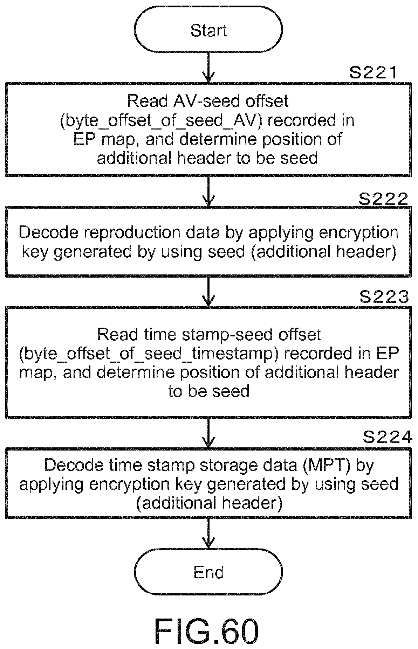

A specific processing sequence will be described later with reference to a flowchart illustrated in Fig. 60.

### (Step S216)

Next, in Step S216, the information processing apparatus 500 acquires the time stamp (PTS/DTS) corresponding to the reproduction data, in accordance with the recording information of the EP map that is recorded as the CPI information of the clip information file.

Such processing is processing using the EP map corresponding to the MMT format data described above with reference to Fig. 46 or Fig. 49.

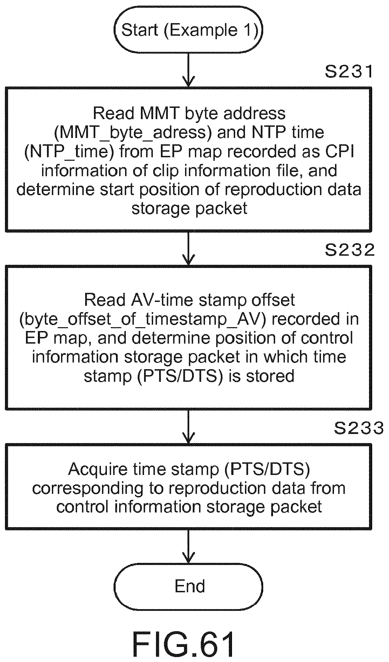

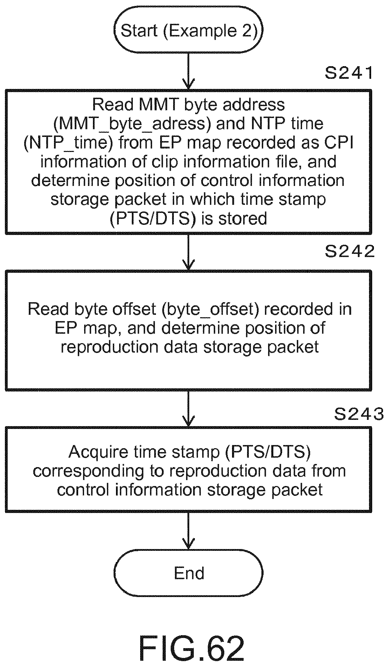

A specific processing sequence will be described later with reference to a flowchart illustrated in Fig. 61 and Fig. 62.

### (Step S217)

Next, in Step S217, the information processing apparatus 500 reads the MMT format data that is stored in the clip AV stream file, in accordance with the recording rate (recording_rate) that is recorded in the clip information (ClipInfo) of the clip information file.

Recording rate (recording_rate) information is recorded in the clip information (ClipInfo) of the clip information file, and the MMT format data that is stored in the clip AV stream file recorded in the information recording medium (medium) is read in accordance with the information.

Note that, in a case where the reproduction target data is the MMT format including the MMT packet, a bit rate according to the MMT format is recorded in the clip information (ClipInfo).

### (Step S218)

Next, in Step S218, the information processing apparatus 500 executes the demultiplexing processing, the decoding processing, and the reproduction processing of the MMT format data that is stored in the clip AV stream file read out from the information recording medium (medium).

Next, the detailed sequence of the processing in Step S215 of the flow illustrated in Fig. 59 described above, that is, processing of generating the encryption key to be applied to the decoding processing, in accordance with the recording information of the EP map that is recorded as the CPI information of the clip information file, and of decoding the encryption data will be described with reference to the flowchart illustrated in Fig. 60.

Such processing is processing using the EP map corresponding to the MMT format data described above with reference to Fig. 46 or Fig. 49, and is processing of generating encryption key (= Decoding Key) by using the additional header to be the seed, and of performing the decoding by applying the generated encryption key.

A specific processing sequence will be described with reference to the flowchart illustrated in Fig. 60.

### (Step S221)

First, in Step S221, the information processing apparatus 500 reads the AV-seed offset (byte_offset_of_seed_AV) from the EP map that is recorded as the CPI information of the clip information file, and determines the position of the additional header to be the seed.

As described above with reference to Fig. 46 to Fig. 51, the AV-seed offset (byte_offset_of_seed_AV) is offset information corresponding to a separation distance between the reproduction data storage packet to be applied to the random access reproduction processing, and the seed information (= Additional Header) necessary for generating the encryption key to be applied to the decoding of the reproduction data.

In Step S221, the information processing apparatus 500 reads the AV-seed offset (byte_offset_of_seed_AV), and determines the position of the additional header to be the seed.

### (Step S222)

Next, in Step S222, the information processing apparatus 500 acquires the additional header data of which the position is determined in Step S221, generates the encryption key by using the additional header data as the seed, and decodes the encrypted reproduction data by applying the generated encryption key.

Note that, an encryption key generation sequence is identical to the encryption key generation processing sequence described above with reference to Fig. 24 and Fig. 25.

### (Step S223)

Next, in Step S223, the information processing apparatus 500 reads the time stamp-seed offset (byte_offset_of_seed_timestamp) from the EP map that is recorded as the CPI information of the clip information file, and determines the position of the additional header to be the seed.

As described above with reference to Fig. 46 to Fig. 51, the time stamp-seed offset (byte_offset_of_seed_timestamp) is offset information corresponding to a separation distance between the control information (MPT) storage packet in which the time stamp to be applied to the reproduction of the reproduction data that is applied to the random access reproduction processing, and the seed information (= Additional Header) necessary for generating the encryption key to be applied to the decoding of the control information (MPT).

In Step S223, the information processing apparatus 500 reads the time stamp-seed offset (byte_offset_of_seed_timestamp), and determines the position of the additional header to be the seed.

### (Step S224)

Next, in Step S224, the information processing apparatus 500 acquires the additional header data of which the position is determined in Step S223, generates the encryption key by using the additional header data as the seed, and decodes the encrypted control information (MPT) by applying the generated encryption key.

Note that, an encryption key generation sequence is identical to the encryption key generation sequence described above with reference to Fig. 24 and Fig. 25.

Next, the detailed sequence of the processing of Step S216 in the flow illustrated in Fig. 59 described above, that is, processing of acquiring the time stamp (PTS/DTS) corresponding to the reproduction data, in accordance with the recording information of the EP map that is recorded as the CPI information of the clip information file will be described with reference to the flowcharts illustrated in Fig. 61 and Fig. 62.

The processing is processing using the EP map corresponding to the MMT format data described above with reference to Fig. 46 and Fig. 49. That is, the flowcharts are flows individually illustrating the sequence of the processing to which the EP map described above is applied.

The flowchart is a flow including processing to which two types of different EP maps of:
Example 1 of the EP map corresponding to the encryption MMT format data (Fig. 46) in Fig. 61; and
Example 2 of the EP map corresponding to the encryption MMT format data (Fig. 49) in Fig. 62 are applied.

First, the flow illustrated in Fig. 61, that is, the sequence of processing of acquiring the time stamp (PTS/DTS) corresponding to the reproduction data by using the EP map corresponding to Example 1 of the EP map corresponding to the encryption MMT format data described above with reference to Fig. 46 to Fig. 48 will be described.

### (Step S231)

First, in the Step S231, the information processing apparatus 500 reads the MMT byte address (MMT_byte_adress) and the NTP time (NTP_time) from the EP map that is recorded as the CPI information of the clip information file, and determines a start position of the reproduction data storage packet.

Here, the EP map that is used is the EP map illustrated in Fig. 46.

In such an EP map, the following data recording regions are set.
NTP Time Recording Region (NTP_time) 331
MMT Byte Address Recording Region (MMT_byte_adress) 332
AV-Time Stamp Offset Recording Region (byte_offset_of_timestamp_AV) 334.

Note that, in the EP map illustrated in Fig. 46, further, the following recording regions of data for determining a seed position are set.
AV-Seed Offset Recording Region (byte_offset_of_seed_AV) 333
Time Stamp-Seed Offset Recording Region (byte_offset_of_seed_timestamp) 335

According to Step S215 of the flow in Fig. 59, that is, the processing according to the flow in Fig. 60 described above, the encryption data is decoded with the encryption key generated by using the seed information that is acquired by using the data in the data recording region described above.

In Step S231, first, the information processing apparatus 500 executing the reproduction processing reads the MMT byte address (MMT_byte_adress) and the NTP time (NTP_time) from the EP map, and determines the start position of the reproduction data storage packet on the basis of such data.

### (Step S232)

Next, in Step S222, the information processing apparatus 500 reads the AV-time stamp offset recording region (byte_offset_of_timestamp_AV) that is recorded in the EP map, and determines the position of the control information storage packet in which the time stamp (PTS/DTS) is stored.

As described with reference to Fig. 48, the AV-time stamp offset recording region (byte_offset_of_timestamp_AV) that is recorded in the EP map illustrated in Fig. 46 is data that is capable of identifying a separation distance between the reproduction data storage packet and the control information storage packet, and a relative direction.

The position of the reproduction data storage packet has been confirmed in Step S231, and in Step S232, the byte offset (byte_offset) that is recorded in the EP map is read, and the position of the control information storage packet is determined in accordance with the data.

### (Step S233)

Next, in Step S233, the information processing apparatus acquires the time stamp (PTS/DTS) corresponding to the reproduction data from the control information storage packet.

The MMT package table (MPT) that is the control information to be transmitted as the MMT format data has the data configuration described above with reference to Fig. 33.

As described above with reference to Fig. 35, the time stamp (the PTS presentation timestamp) indicating the reproduction (presentation) time information of the MPU unit is recorded in the MPT, as the MPU time stamp descriptor.

Further, as described above with reference to Fig. 44, the time stamp (the DTS decoding timestamp) indicating the decoding time information of the MPU unit is recorded as the MPU extension time stamp descriptor.

In Step S233, the information processing apparatus acquires the time stamp (PTS/DTS) corresponding to the reproduction data from the MPT that is stored in the control information storage packet.

Next, the flowchart illustrated in Fig. 62 will be described. The flow illustrated in Fig. 62, is a flowchart illustrating the sequence of executing time stamp (PTS/DTS) acquisition processing of Step S216 of the flow in Fig. 59 by using the EP map corresponding to Example 2 of the EP map corresponding to the encryption MMT format data described above with reference to Fig. 49 to Fig. 51.

The processing of each step of the flow illustrated in Fig. 62 will be described.

### (Step S241)

First, in Step S241, the information processing apparatus 500 reads the MMT byte address (MMT_byte_adress) and the NTP time (NTP_time) from the EP map that is recorded as the CPI information of the clip information file, and determines a start position of the control information storage packet in which the time stamp (PTS/DTS) is stored.

Here, the EP map that is used is the EP map illustrated in Fig. 49.

In such an EP map, the following data recording regions are set.
NTP Time Recording Region (NTP_time) 351
MMT Byte Address Recording Region (MMT_byte_adress) 352
AV-Time Stamp Offset Recording Region (byte_offset_timstamp_AV) 354

Note that, in the EP map illustrated in Fig. 49, further, the following recording regions of data for determining a seed position are set.
AV-Seed Offset Recording Region (byte_offset_of_seed_AV) 353
Time Stamp-Seed Offset Recording Region (byte_offset_of_seed_timestamp) 355

According to Step S215 of the flow in Fig. 59, that is, the processing according to the flow in Fig. 60 described above, the encryption data is decoded with the encryption key generated by using the seed information that is acquired by using the data in the data recording region described above.

In Step S241, first, the information processing apparatus 500 executing the reproduction processing reads the MMT byte address (MMT_byte_adress) and the NTP time (NTP_time) from the EP map, and determines the start position of the control information storage packet on the basis of such data.

### (Step S242)

Next, in Step S242, the information processing apparatus 500 reads the AV-time stamp offset recording region (byte_offset_timstamp_AV) that is recorded in the EP map, and determines the position of the reproduction data storage packet.

As described with reference to Fig. 51, the AV-time stamp offset recording region (byte_offset_timstamp_AV) that is recorded in the EP map illustrated in Fig. 49 is the data that is capable of identifying the separation distance between the reproduction data storage packet and the control information storage packet, and the relative direction.

The position of the control information storage packet has been confirmed in Step S241, and in Step S242, the AV-time stamp offset recording region (byte_offset_timstamp_AV) that is recorded in the EP map is read, and the position of the reproduction data storage packet is determined in accordance with the data.

### (Step S243)

Next, in Step S243, the information processing apparatus acquires the time stamp (PTS/DTS) corresponding to the reproduction data from the control information storage packet.

Such a time stamp (PTS/DTS) is acquired from the MMT package table (MPT) that is the control information to be transmitted as the MMT format data.

### [11. Configuration Example of Information Processing Apparatus]

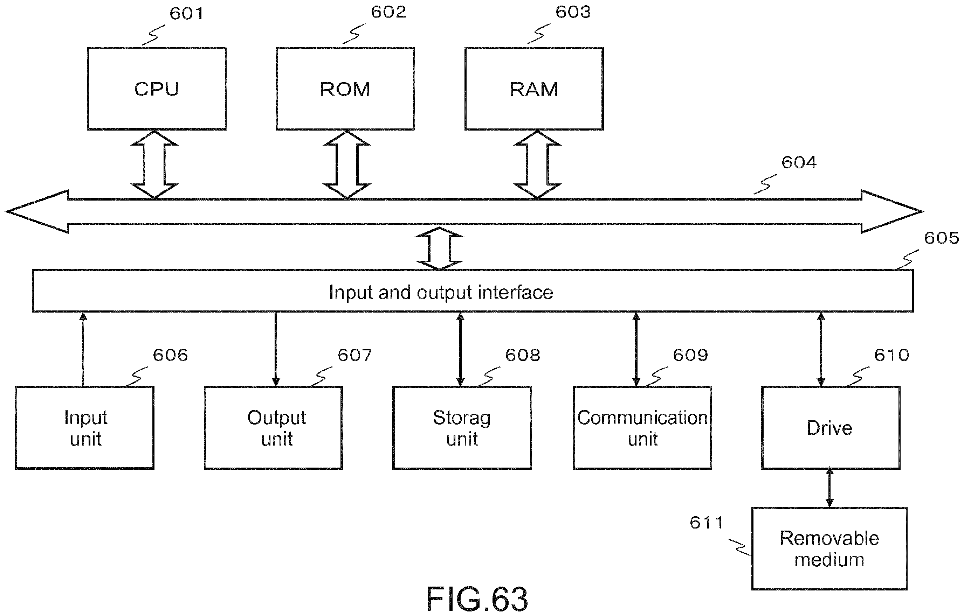

Next, a hardware configuration example of an information processing apparatus that can be applied as the information processing apparatus executing the data recording with respect to the information recording medium and the data reproduction from the information recording medium will be described with reference to Fig. 63.

A central processing unit (CPU) 601 functions as a data processor executing various processings in accordance with a program stored in a read only memory (ROM) 602 or a storage unit 608. For example, the processing according to the sequence described in the above example is executed. The program executed by the CPU 601, data, and the like are stored in a random access memory (RAM) 603. The CPU 601, the ROM 602, and the RAM 603 are connected to each other through a bus 604.

The CPU 601 is connected to an input and output interface 605 through the bus 604, and an input unit 606 including various switches, keyboards, mouses, microphones, and the like, and an output unit 607 including a display, a speaker, and the like are connected to the input and output interface 605. The CPU 601 executes various processings in response to a command input from the input unit 606, and outputs a processing result, for example, to the output unit 607.

The storage unit 608 connected to the input and output interface 605, for example, includes a hard disk and the like, and stores the program executed by the CPU 601, or various data items. A communication unit 609 functions as a transmission and reception unit of data communication through a network such as the internet or a local area network, and a transmission and reception unit of a broadcasting wave, and performs communication with respect to the external device.

A drive 610 connected to the input and output interface 605 drives a removable medium 611 such as a magnetic disk, an optical disk, a magnetooptical disk, or a semiconductor memory such as a memory card, and executes data recording or data reading.

### [12. Summary of Configuration Example of Present Disclosure]

As described above, the examples of the present disclosure have been described in detail, with reference to specific examples. However, it is obvious that a person skilled in the art is capable of performing correction or substitution with respect to the examples within a range not departing from the gist of the present disclosure. That is, the present invention has been described in the form of exemplification, and should not be limitingly construed. In order to determine the gist of the present disclosure, the claims should be referred to.

In addition, a set of processings described in the specification can be executed by hardware, software, or a composite configuration of both of hardware and software. In a case where the processing is executed by software, a program in which the processing sequence is recorded can be executed by being installed in a memory in a computer that is built in dedicated hardware, or can be executed by installing the program in a general-purpose computer that is capable of executing various processings. For example, the program can be recorded in advance in a recording medium. The program can be installed in a computer the recording medium, or can be installed in a recording medium such as a built-in hard disk by receiving the program through a network such as a local area network (LAN) and the internet.

Note that, various processings described in the specification may be executed not only in chronological order as described above, but also in parallel or individually, in accordance with processing capability of a device executing the processing or necessity. In addition, herein, the system is a logical assembly configuration of a plurality of devices, but the devices of each configuration are not limited to be in the same housing.

### Industrial Applicability

As described above, according to the configuration of one example of the present disclosure, a configuration of reproducing the block encryption MMT format data by applying the time stamp is realized.

Specifically, for example, the MMT format stream file and the reproduction control information file are generated and recorded in the medium. The stream file includes the encryption block data to which the encryption key generated by using the additional header in which the copy control information of the block unit is stored, as the seed, is applied, and the additional header. The position identification information capable of determining the position of the reproduction data, the position of the seed to be applied to the decoding of the reproduction data, the position of the time stamp, and the position of the seed to be applied to the decoding of the time stamp is recorded in the reproduction control information file. The data decoding, and the reproduction to which the time stamp is applied are performed by using he recording information.

The configuration of reproducing the block encryption MMT format data by applying the time stamp is realized by this configuration.

### Reference Signs List

- 20: transmission device
- 21: broadcasting server
- 22: data distribution server
- 30: information processing apparatus
- 31: BD player
- 32: TV
- 33: PC
- 34: mobile terminal
- 40: information recording medium (medium)
- 41: BD
- 42: HDD
- 43: flash memory
- 400: information processing apparatus
- 401: data input unit
- 402: user input unit
- 403: control unit
- 404: storage unit
- 405: demultiplexer
- 406: recording data generating unit
- 407: recording unit
- 408: drive
- 411: caption data generating unit
- 412: image data generating unit
- 413: sound data generating unit
- 414: auxiliary information generating unit
- 415: multiplexer
- 416: database file generating unit
- 420: information recording medium
- 500: information processing apparatus
- 501: control unit
- 502: user input unit
- 503: drive
- 504: recording and reproduction unit
- 505: storage unit
- 506: reproduction processor
- 507: input and output I/F
- 511: demultiplexer
- 512: caption data generating unit
- 513: image data generating unit
- 514: sound data generating unit
- 515: auxiliary information generating unit
- 516: output data generating unit
- 520: information recording medium
- 530: output device (display unit + speaker)
- 601: CPU
- 602: ROM
- 603: RAM
- 604: bus
- 605: input and output interface
- 606: input unit
- 607: output unit
- 608: storage unit
- 609: communication unit
- 610: drive
- 611: removable medium

## Claims

1. An information processing apparatus (400), comprising:
a data processor (403) configured to input MPEG media transport, MMT, format data (431), and to generate recording data according to a BDAV format or an SPAV format that is a data recording format with respect to an information recording medium (420), wherein
the data processor (403),
is configured to generate a stream file (432) in which the MMT format data (431) is stored as reproduction data, and a reproduction control information file in which reproduction control information of the stream file is stored,
to store copy control information of a block unit configuring the stream file (432) in an additional header (161),
to perform block encryption (S22) of the block unit by an encryption key (163) that is generated by using configuration data of the additional header (161) as a seed, and generates the stream file (432) including the additional header (161) and encryption block data as a constituent,
to generate random access reproduction control information as the configuration data of the reproduction control information file, and
to record position identification information capable of determining a position of the reproduction data that is random access reproduction start data in the stream file (432), and a position of the seed that is applied to decoding of the reproduction data, in the random access reproduction control information.

2. The information processing apparatus (400) according to claim 1, wherein
the data processor (403) is configured to generate configuration data of the stream file as an MMT protocol, MMTP, packet string or a type length value, TLV, packet string.

3. The information processing apparatus (400) according to any preceding claim, wherein
the data processor (403) is configured to set time stamp recording information in which a time stamp to be applied to reproduction processing of the reproduction data that is random access reproduction start data in the stream file (432), as configuration data of the stream file (432).

4. The information processing apparatus (400) according to claim 3, wherein
the time stamp recording information is an MMT package table, MPT, that is defined in an MMT format.

5. The information processing apparatus (400) according to claim 3 or 4, wherein
the data processor (403), is configured
to generate random access reproduction control information as configuration data of the reproduction control information file, and
to record position identification information capable of determining a position of the reproduction data that is the random access reproduction start data in the stream file (432), and a position of the seed that is applied to decoding of the reproduction data, and
a position of the time stamp recording information, and a position of the seed that is applied to decoding of the time stamp recording information, in the random access reproduction control information.

6. The information processing apparatus (400) according to any of claims 3 to 5, wherein
the time stamp includes at least one time stamp of a presentation timestamp, PTS, in which reproduction time information is defined or a decoding timestamp, ,DTS, in which decoding time information is defined.

7. The information processing apparatus (400) according to any of claims 1 to 6, wherein
the data processor (403) is configured to record offset information corresponding to a separation distance between the position of the reproduction data and a position of the time stamp recording information in which a time stamp to be applied to reproduction processing of the reproduction data is recorded, in the random access reproduction control information.

8. The information processing apparatus (400) according to any preceding claim, wherein
the data processor (403), is configured
to generate the stream file as an MMT protocol, MMTP, packet string or a type length value, TLV, packet string, and
to store copy control information of a packet configuring the stream file (432) in any one of an additional header of a packet unit, an additional header of a plurality of packet units, an additional header of a fixed data length unit, or an additional header of a variable data length unit.

9. An information processing apparatus (500), comprising:
a data processor (501) configured to execute reproduction processing of recording data of an information recording medium (520), wherein
the information recording medium (520) includes a stream file in which MPEG media transport, MMT, format data is stored as reproduction data, and a reproduction control information file in which reproduction control information of the stream file is stored, as the recording data,
the stream file is a file including an additional header (161) of a block unit, and encryption block data of an encryption key (163) that is generated by using configuration data of the additional header (161) as a seed, and
the data processor (501) is configured to acquire position identification information of the reproduction data, and position identification information of the additional header (161) that is the seed necessary for generating the encryption key (163) to be applied to decoding of the encryption block data including the reproduction data, from the reproduction control information file in which the reproduction control information of the stream file is stored, to read the seed in accordance with the acquired information, to generate the encryption key (163), and to perform decoding processing of the encryption block data (165) including the reproduction data.

10. The information processing apparatus (500) according to claim 9, wherein
the data processor (501) is configured to acquire position identification information of time stamp recording information in which a time stamp to be applied to reproduction processing of the reproduction data is recorded, and the position identification information of the additional header (161) that is the seed necessary for generating the encryption key (163) to be applied to the decoding of the encryption block data (165) including the time stamp recording information, from the reproduction control information file when the reproduction processing is performed, to read the seed in accordance with the acquired information, to generate the encryption key (163), and to perform the decoding processing of the encryption block data (165) including the time stamp recording information.

11. An information recording medium (420), comprising:
a stream file (432) in which MPEG media transport, MMT, format data is stored as reproduction data; and
a reproduction control information file in which reproduction control information of the stream file is stored, as recording data, wherein
the stream file (432) is a file including an additional header (161) of a block unit, and encryption block data (165) of an encryption key (163) that is generated (S21) by using configuration data of the additional header (161) as a seed,
the reproduction control information file includes position identification information capable of determining a position of the reproduction data that is random access reproduction start data in the stream file (432), and a position of the seed that is applied to decoding of the reproduction data, as the recording data, wherein
stream file storage data is reproducible by a reproduction device by acquiring the position identification information from the reproduction control information file, reading the seed in accordance with the acquired information, generating the encryption key (163), and performing decoding processing of the encryption block data (165) including the reproduction data.

12. An information processing method executed in an information processing apparatus (400), wherein
the information processing apparatus (400) includes a data processor (403) configured to input MPEG media transport, MMT, format data, and to generate recording data according to a BDAV format or an SPAV format that is a data recording format with respect to an information recording medium, and
the data processor (403),
generates a stream file (432) in which the MMT format data is stored as reproduction data, and a reproduction control information file in which reproduction control information of the stream file is stored, the reproduction control information file including position identification information capable of determining a position of the reproduction data that is random access reproduction start data in the stream file (432), and a position of the seed that is applied to decoding of the reproduction data, as the recording data,
stores copy control information of a block unit configuring the stream file in an additional header (161), and
performs block encryption (S22) of the block unit (164) by an encryption key (163) that is generated (S21) by using configuration data of the additional header (161) as a seed, and generates a stream file (432) including the additional header (161) and encryption block data (165) as a constituent.

13. An information processing method executed in an information processing apparatus (500), wherein
the information processing apparatus (500) includes a data processor (501) configured to execute reproduction processing of recording data of an information recording medium,
the information recording medium includes a stream file in which MPEG media transport, MMT, format data is stored as reproduction data, and a reproduction control information file in which reproduction control information of the stream file is stored, as the recording data,
the stream file is a file including an additional header (161) of a block unit, and encryption block data (165) of an encryption key (163) that is generated by using configuration data of the additional header (161) as a seed, and
the data processor (501) acquires position identification information of the reproduction data, and position identification information of the additional header (161) that is the seed necessary for generating the encryption key (163) to be applied to decoding of the encryption block data (165) including the reproduction data, from the reproduction control information file in which the reproduction control information of the stream file is stored, reads the seed in accordance with the acquired information, generates the encryption key (163), and performs decoding processing of the encryption block data (165) including the reproduction data.

14. A program allowing information processing to be executed in an information processing apparatus (400, 500) according to the method of claim 12 or 13.

## Patentansprüche

1. Informationsverarbeitungsvorrichtung (400), die Folgendes aufweist:
einen Datenprozessor (403), ausgebildet zum Eingeben von MPEG-Medientransport- bzw. MMT-Formatdaten (431) und zum Erzeugen von Aufzeichnungsdaten gemäß einem BDAV-Format oder einem SPAV-Format, das ein Datenaufzeichnungsformat mit Bezug auf ein Informationsaufzeichnungsmedium (420) ist, wobei
der Datenprozessor (403) ausgebildet ist zum
Erzeugen einer Stream-Datei (432), in der die MMT-Formatdaten (431) als Wiedergabedaten gespeichert werden, und einer Wiedergabe-Steuerinformationsdatei, in der Wiedergabe-Steuerinformationen der Stream-Datei gespeichert werden,
Speichern von Kopie-Steuerinformationen einer Blockeinheit, die die Stream-Datei (432) konfiguriert, in einem zusätzlichen Header (161),
Durchführen von Blockverschlüsselung (S22) der Blockeinheit durch einen Verschlüsselungsschlüssel (163), der durch Verwendung von Konfigurationsdaten des zusätzlichen Headers (161) als Seed erzeugt wird, und erzeugt die Stream-Datei (432) einschließlich des zusätzlichen Headers (161) und der Verschlüsselungsblockdaten als einen Bestandteil,
Erzeugen von Direktzugriffs-Wiedergabe-Steuerinformationen als die Konfigurationsdaten der Wiedergabe-Steuerinformationsdatei und
Aufzeichnen von Positionsidentifikationsinformationen mit der Fähigkeit zum Bestimmen einer Position der Wiedergabedaten, die Direktzugriffs-Wiedergabestartdaten sind, in der Stream-Datei (432) und einer Position des Seed, das auf Decodierung der Wiedergabedaten angewandt wird, in den Direktzugriffs-Wiedergabe-Steuerinformationen.

2. Informationsverarbeitungsvorrichtung (400) nach Anspruch 1, wobei
der Datenprozessor (403) ausgebildet ist zum Erzeugen von Konfigurationsdaten der Stream-Datei als eine MMT-Protokoll- bzw. MMTP-Paketzeichenkette oder eine Typ-Länge-Wert- bzw. TLV-Paketzeichenkette.

3. Informationsverarbeitungsvorrichtung (400) nach einem der vorhergehenden Ansprüche, wobei
der Datenprozessor (403) ausgebildet ist zum Setzen von Zeitstempel-Aufzeichnungsinformationen mit einem auf Wiedergabeverarbeitung der Wiedergabedaten, die Direktzugriffs-Wiedergabe-Startdaten sind, in der Stream-Datei (432) anzuwendenden Zeitstempel als Konfigurationsdaten der Stream-Datei (432).

4. Informationsverarbeitungsvorrichtung (400) nach Anspruch 3, wobei
die Zeitstempel-Aufzeichnungsinformationen eine MMT-Pakettabelle MPT sind, die in einem MMT-Format definiert ist.

5. Informationsverarbeitungsvorrichtung (400) nach Anspruch 3 oder 4, wobei
der Datenprozessor (403) ausgebildet ist zum
Erzeugen von Direktzugriffs-Wiedergabe-Steuerinformationen als Konfigurationsdaten der Wiedergabe-Steuerinformationsdatei und
Aufzeichnen von Positionsidentifikationsinformationen mit der Fähigkeit zum Bestimmen einer Position der Wiedergabedaten, die Direktzugriffs-Wiedergabestartdaten sind, in der Stream-Datei (432) und einer Position des Seed, das auf Decodierung der Wiedergabedaten angewandt wird, und
einer Position der Zeitstempel-Aufzeichnungsinformationen und einer Position des Seed, das auf Decodierung der Zeitstempel-Aufzeichnungsinformationen angewandt wird, in den Direktzugriffs-Wiedergabe-Steuerinformationen.

6. Informationsverarbeitungsvorrichtung (400) nach einem der Ansprüche 3 bis 5, wobei
der Zeitstempel mindestens einen Zeitstempel eines Präsentationszeitstempels PTS aufweist, worin Wiedergabezeitinformationen definiert sind, oder eines Decodierungszeitstempels DTS, worin Decodierungszeitinformationen definiert sind.

7. Informationsverarbeitungsvorrichtung (400) nach einem der Ansprüche 1 bis 6, wobei
der Datenprozessor (403) ausgebildet ist zum Aufzeichnen von Offset-Informationen entsprechend einem Trennungsabstand zwischen der Position der Wiedergabedaten und einer Position der Zeitstempel-Aufzeichnungsinformationen, worin ein auf Wiedergabeverarbeitung der Wiedergabedaten anzuwendender Zeitstempel aufgezeichnet wird, in den Direktzugriffs-Wiedergabe-Steuerinformationen.

8. Informationsverarbeitungsvorrichtung (400) nach einem der vorhergehenden Ansprüche, wobei
der Datenprozessor (403) ausgebildet ist zum
Erzeugen der Stream-Datei als eine MMT-Protokoll- bzw. MMTP-Paketzeichenkette oder eine Typ-Länge-Wert- bzw. TLV-Paketzeichenkette, und
Speichern von Kopie-Steuerinformationen eines die Stream-Datei (432) konfigurierenden Pakets in einem beliebigen von einem zusätzlichen Header einer Paketeinheit, einem zusätzlichen Header mehrerer Paketeinheiten, einem zusätzlichen Header einer Einheit fester Datenlänge oder einem zusätzlichen Header einer Einheit variabler Datenlänge.

9. Informationsverarbeitungsvorrichtung (500), die Folgendes aufweist:
einen Datenprozessor (501), ausgebildet zum Ausführen von Wiedergabeverarbeitung von Aufzeichnungsdaten eines Informationsaufzeichnungsmediums (520), wobei
das Informationsaufzeichnungsmedium (520) als die Aufzeichnungsdaten eine Stream-Datei, in der MPEG-Medientransport- bzw. MMT-Formatdaten als Wiedergabedaten gespeichert sind, und eine Wiedergabe-Steuerinformationsdatei, in der Wiedergabe-Steuerinformationen der Stream-Datei gespeichert sind, aufweist,
die Stream-Datei eine Datei mit einem zusätzlichen Header (161) einer Blockeinheit und Verschlüsselungsblockdaten eines Verschlüsselungsschlüssels (163), der durch Verwendung von Konfigurationsdaten des zusätzlichen Headers (161) als Seed erzeugt wird, ist und
der Datenprozessor (501) ausgebildet ist zum Beschaffen von Positionsidentifikationsinformationen der Wiedergabedaten und von Positionsidentifikationsinformationen des zusätzlichen Headers (161), wobei es sich um das Seed handelt, das zur Erzeugung des Verschlüsselungsschlüssels (163) notwendig ist, der auf Decodierung der die Wiedergabedaten enthaltenden Verschlüsselungsblockdaten anzuwenden ist, aus der Wiedergabe-Steuerinformationsdatei, in der die Wiedergabe-Steuerinformationen der Stream-Datei gespeichert sind, Lesen des Seed gemäß den beschafften Informationen, Erzeugen des Verschlüsselungsschlüssels (163) und Durchführen von Decodierungsverarbeitung der Verschlüsselungsblockdaten (165), die die Wiedergabedaten aufweisen.

10. Informationsverarbeitungsvorrichtung (500) nach Anspruch 9, wobei
der Datenprozessor (501) ausgebildet ist zum Beschaffen von Positionsidentifikationsinformationen der Zeitstempel-Aufzeichnungsinformationen, worin ein auf Wiedergabeverarbeitung der Wiedergabedaten anzuwendender Zeitstempel aufgezeichnet ist, und der Positionsidentifikationsinformationen des zusätzlichen Headers (161), wobei es sich um das Seed handelt, das zur Erzeugung des Verschlüsselungsschlüssels (163) notwendig ist, der auf die Decodierung der Verschlüsselungsblockdaten (165) anzuwenden ist, die die Zeitstempel-Aufzeichnungsinformationen aufweisen, aus der Wiedergabe-Steuerinformationsdatei, wenn die Wiedergabeverarbeitung durchgeführt wird, Lesen des Seed gemäß den beschafften Informationen, Erzeugen des Verschlüsselungsschlüssels (163) und Durchführen der Decodierungsverarbeitung der Verschlüsselungsblockdaten (165), die die Zeitstempel-Aufzeichnungsinformationen aufweisen.

11. Informationsaufzeichnungsmedium (420), das Folgendes aufweist:
eine Stream-Datei (432), in der MPEG-Medientransport- bzw. MMT-Formatdaten als Wiedergabedaten gespeichert sind; und
eine Wiedergabe-Steuerinformationsdatei, in der Wiedergabe-Steuerinformationen der Stream-Datei gespeichert sind, als Aufzeichnungsdaten, wobei
die Stream-Datei (432) eine Datei ist, die einen zusätzlichen Header (161) einer Blockeinheit und Verschlüsselungsblockdaten (165) eines Verschlüsselungsschlüssels (163) aufweist, der durch Verwendung von Konfigurationsdaten des zusätzlichen Headers (161) als Seed erzeugt wird (S21),
die Wiedergabe-Steuerinformationsdatei Positionsidentifikationsinformationen aufweist mit der Fähigkeit zur Bestimmung einer Position der Wiedergabedaten, die Direktzugriffs-Wiedergabestartdaten sind, in der Stream-Datei (432) und einer Position des Seed, das auf Decodierung der Wiedergabedaten angewandt wird, als die Aufzeichnungsdaten, wobei
Stream-Datei-Speicherungsdaten durch eine Wiedergabevorrichtung wiedergebbar sind durch Beschaffen der Positionsidentifikationsinformationen aus der Wiedergabe-Steuerinformationsdatei, Lesen des Seed gemäß den beschafften Informationen, Erzeugen des Verschlüsselungsschlüssels (163) und Durchführen von Decodierungsverarbeitung der Verschlüsselungsblockdaten (165), die die Wiedergabedaten aufweisen.

12. Informationsverarbeitungsverfahren, das in einer Informationsverarbeitungsvorrichtung (400) ausgeführt wird, wobei
die Informationsverarbeitungsvorrichtung (400) einen Datenprozessor (403) aufweist, ausgelegt zum Eingeben von MPEG-Medientransport- bzw. MMT-Formatdaten und Erzeugen von Aufzeichnungsdaten gemäß einem BDAV-Format oder einem SPAV-Format, das ein Datenaufzeichnungsformat mit Bezug auf ein Informationsaufzeichnungsmedium ist, und
der Datenprozessor (403)
eine Stream-Datei (432), in der die MMT-Formatdaten als Wiedergabedaten gespeichert sind, und eine Wiedergabe-Steuerinformationsdatei, in der die Wiedergabe-Steuerinformationen der Stream-Datei aufgezeichnet sind, erzeugt, wobei die Wiedergabe-Steuerinformationsdatei Positionsidentifikationsinformationen mit der Fähigkeit zur Bestimmung einer Position der Wiedergabedaten, die Direktzugriffs-Wiedergabestartdaten sind, in der Stream-Datei (432) und einer Position des Seed, das auf Decodierung der Wiedergabedaten angewandt wird, als die Aufzeichnungsdaten aufweist,
Kopie-Steuerinformationen einer Blockeinheit, die die Stream-Datei konfiguriert, in einem zusätzlichen Header (161) speichert und
Blockverschlüsselung (S22) der Blockeinheit (164) durch einen Verschlüsselungsschlüssel (163) durchführt, der durch Verwendung von Konfigurationsdaten des zusätzlichen Headers (161) als Seed erzeugt wird (S21),
und eine Stream-Datei (432) erzeugt, die den zusätzlichen Header (161) und Verschlüsselungsblockdaten (165) als Bestandteil aufweist.

13. Informationsverarbeitungsverfahren, das in einer Informationsverarbeitungsvorrichtung (400) ausgeführt wird, wobei
die Informationsverarbeitungsvorrichtung (500) einen Datenprozessor (501) aufweist, ausgebildet zum Ausführen von Wiedergabeverarbeitung von Aufzeichnungsdaten eines Informationsaufzeichnungsmediums,
das Informationsaufzeichnungsmedium eine Stream-Datei, in der MPEG-Medientransport- bzw. MMT-Formatdaten als Wiedergabedaten gespeichert sind, und eine Wiedergabe-Steuerinformationsdatei, in der Wiedergabe-Steuerinformationen der Stream-Datei gespeichert sind, als die Aufzeichnungsdaten aufweist,
die Stream-Datei eine Datei mit einem zusätzlichen Header (161) einer Blockeinheit und Verschlüsselungsblockdaten (165) eines Verschlüsselungsschlüssels (163), der durch Verwendung von Konfigurationsdaten des zusätzlichen Headers (161) als Seed erzeugt wird, ist und
der Datenprozessor (501) Positionsidentifikationsinformationen der Wiedergabedaten und Positionsidentifikationsinformationen des zusätzlichen Headers (161) beschafft, wobei es sich um das Seed handelt, das zur Erzeugung des Verschlüsselungsschlüssels (163) notwendig ist, der auf Decodierung der die Wiedergabedaten enthaltenden Verschlüsselungsblockdaten (165) anzuwenden ist, aus der Wiedergabe-Steuerinformationsdatei, in der die Wiedergabe-Steuerinformationen der Stream-Datei gespeichert sind, das Seed gemäß den beschafften Informationen liest, den Verschlüsselungsschlüssel (163) erzeugt und Decodierungsverarbeitung der Verschlüsselungsblockdaten (165), die die Wiedergabedaten aufweisen, durchführt.

14. Programm, das Ausführung von Informationsverarbeitung in einer Informationsverarbeitungsvorrichtung (400, 500) nach dem Verfahren von Anspruch 12 oder 13 erlaubt.

## Revendications

1. Appareil de traitement d'informations (400), comprenant :
un processeur de données (403) configuré pour entrer des données de format de transport multimédia MPEG, MMT, (431) et générer des données d'enregistrement selon un format BDAV ou SPAV qui est un format d'enregistrement de données relativement à un support d'enregistrement d'informations (420), dans lequel
le processeur de données (403)
est configuré pour générer un fichier de flux (432) dans lequel les données de format MMT (431) sont stockées en tant que données de reproduction, et un fichier d'informations de commande de reproduction dans lequel sont stockées des informations de commande de reproduction du fichier de flux,
stocker des informations de commande de copie d'une unité de bloc configurant le fichier de flux (432) dans un en-tête supplémentaire (161),
réaliser un cryptage de bloc (S22) de l'unité de bloc par une clé de cryptage (163) générée en utilisant des données de configuration de l'en-tête supplémentaire (161) comme valeur germe, et génère le fichier de flux (432) comportant l'en-tête supplémentaire (161) et des données de bloc de cryptage en tant que constituant,
générer des informations de commande de reproduction à accès aléatoire en tant que données de configuration du fichier d'informations de commande de reproduction, et
enregistrer des informations d'identification de position capables de déterminer une position des données de reproduction qui sont des données de début de reproduction à accès aléatoire dans le fichier de flux (432), et une position de la valeur germe qui est appliquée à un décodage des données de reproduction, dans les informations de commande de reproduction à accès aléatoire.

2. Appareil de traitement d'informations (400) selon la revendication 1, dans lequel
le processeur de données (403) est configuré pour générer des données de configuration du fichier de flux en tant que chaîne de paquets de protocole MMT, MMTP, ou de chaîne de paquets de valeur de longueur de type, TLV.

3. Appareil de traitement d'informations (400) selon n'importe quelle revendication précédente, dans lequel
le processeur de données (403) est configuré pour établir des informations d'enregistrement d'estampille temporelle dans lesquelles une estampille temporelle à appliquer à un traitement de reproduction des données de reproduction qui sont des données de début de reproduction à accès aléatoire dans le fichier de flux (432), en tant que données de configuration du fichier de flux(432).

4. Appareil de traitement d'informations (400) revendication 3, dans lequel
les informations d'enregistrement d'estampille temporelle sont une table de paquets MMT, définie dans un format MMT.

5. Appareil de traitement d'informations (400) selon la revendication 3 ou 4, dans lequel
le processeur de données (403), est configuré pour
générer des informations de commande de reproduction à accès aléatoire en tant que données de configuration du fichier d'informations de commande de reproduction, et
enregistrer des informations d'identification de position capables de déterminer une position des données de reproduction qui sont des données de début de reproduction à accès aléatoire dans le fichier de flux (432), et une position de la valeur germe qui est appliquée à un décodage des données de reproduction, et
une position des informations d'enregistrement d'estampille temporelle et une position de la valeur germe qui est appliquée à un décodage des informations d'enregistrement d'estampille temporelle, dans les informations de commande de reproduction à accès aléatoire .

6. Appareil de traitement d'informations (400) selon l'une quelconque des revendications 3 à 5, dans lequel
l'estampille temporelle comporte au moins une d'une estampille temporelle de présentation, PTS, dans laquelle des informations de reproduction sont définies ou d'une estampille temporelle de décodage, DTS, dans laquelle des informations de temps de décodage sont définies.

7. Appareil de traitement d'informations (400) selon l'une quelconque des revendications 1 à 6, dans lequel
le processeur de données (403) est configuré pour enregistrer des informations de décalage correspondant à une distance de séparation entre la position des données de reproduction et une position des informations d'enregistrement d'estampille temporelle dans lesquelles une estampille temporelle à appliquer à un traitement de reproduction des données de reproduction est enregistrée, dans les informations de commande de reproduction à accès aléatoire.

8. Appareil de traitement d'informations (400) selon n'importe quelle revendication précédente, dans lequel
le processeur de données (403) est configuré pour
générer le fichier de flux en tant que chaîne de paquets de protocole MMT, MMTP, ou chaîne de paquets de valeur de longueur de type, TLV, et
stocker des informations de commande de copie d'un paquet configurant le fichier de flux (432) dans l'un quelconque d'un en-tête supplémentaire d'une unité de paquets, d'un en-tête supplémentaire d'une pluralité d'unités de paquets, d'un en-tête supplémentaire d'une unité de longueur de données fixe ou d'un en-tête supplémentaire d'une unité de longueur de données variable.

9. Appareil de traitement d'informations (500), comprenant:
un processeur de données (501) configuré pour exécuter un traitement de reproduction de données d'enregistrement d'un support d'enregistrement d'informations (520), dans lequel
le support d'enregistrement d'informations (520) comporte un fichier de flux dans lequel des données de format de transport multimédia MPEG, MMT, sont stockées en tant que données de reproduction, et un fichier d'informations de commande de reproduction dans lequel des informations de commande de reproduction du fichier de flux sont stockées, en tant que données d'enregistrement,
le fichier de flux est un fichier comportant un en-tête supplémentaire (161) d'une unité de bloc, et des données de bloc de cryptage d'une clé de cryptage (163) générée en utilisant des données de configuration de l'en-tête supplémentaire (161) comme valeur germe, et
le processeur de données (501) est configuré pour acquérir des informations d'identification de position des données de reproduction, et des informations d'identification de position de l'en-tête supplémentaire (161) qui sont la valeur germe nécessaire pour générer la clé de cryptage (163) à appliquer à un décodage des données de bloc de cryptage comportant les données de reproduction, à partir du fichier d'informations de commande de reproduction dans lequel sont stockées les informations de commande de reproduction du fichier de flux, lire la valeur germe conformément aux informations acquises, générer la clé de cryptage (163), et réaliser un traitement de décodage des données de bloc de cryptage (165) comportant les données de reproduction.

10. Appareil de traitement d'informations (500) selon la revendication 9, dans lequel
le processeur de données (501) est configuré pour acquérir des informations d'identification de position d'informations d'enregistrement d'estampille temporelle dans lesquelles une estampille temporelle à appliquer à un traitement de reproduction des données de reproduction est enregistrée, et les informations d'identification de position de l'en-tête supplémentaire (161) qui sont la valeur germe nécessaire pour générer la clé de cryptage (163) à appliquer au décodage des données de bloc de cryptage (165) comportant les informations d'enregistrement d'estampille temporelle, à partir du fichier d'informations de commande de reproduction lorsque le traitement de reproduction est réalisé, lire la valeur germe conformément aux informations acquises, générer la clé de cryptage (163) et réaliser le traitement de décodage des données de bloc de cryptage (165) comportant les informations d'enregistrement d'estampille temporelle .

11. Support d'enregistrement d'informations (420), comprenant :
un fichier de flux (432) dans lequel sont stockées des données de format de transport multimédia MPEG, MMT, en tant que données de reproduction ; et
un fichier d'informations de commande de reproduction dans lequel sont stockées des informations de commande de reproduction du fichier de flux, en tant que données d'enregistrement, dans lequel
le fichier de flux (432) est un fichier comportant un en-tête supplémentaire (161) d'une unité de bloc et des données de bloc de cryptage (165) d'une clé de cryptage (163) générée (S21) en utilisant des données de configuration de l'en-tête supplémentaire (161) comme valeur germe,
le fichier d'informations de commande de reproduction comporte des informations d'identification de position capables de déterminer une position des données de reproduction qui sont des données de début de reproduction à accès aléatoire dans le fichier de flux (432), et une position de la valeur germe qui est appliquée à un décodage des données de reproduction, en tant que données d'enregistrement, dans lequel
des données de stockage de fichier de flux sont reproductibles par un dispositif de reproduction en acquérant les informations d'identification de position à partir du fichier d'informations de commande de reproduction, lisant la valeur germe conformément aux informations acquises, générant la clé de cryptage (163) et réalisant un traitement de décodage des données de bloc de cryptage (165) comportant les données de reproduction.

12. Procédé de traitement d'informations exécuté dans un appareil de traitement d'informations (400), dans lequel
l'appareil de traitement d'informations (400) comporte un processeur de données (403) configuré pour entrer des données de format de transport multimédia MPEG, MMT, et générer des données d'enregistrement selon un format BDAV ou un format SPAV qui est un format d'enregistrement de données relativement à un support d'enregistrement d'informations, et
le processeur de données (403)
génère un fichier de flux (432) dans lequel les données de format MMT sont stockées en tant que données de reproduction, et un fichier d'informations de commande de reproduction dans lequel sont stockées des informations de commande de reproduction du fichier de flux, le fichier d'informations de commande de reproduction comportant des informations d'identification de position capables de déterminer une position des données de reproduction qui sont des données de début de reproduction à accès aléatoire dans le fichier de flux (432), et une position de la valeur germe qui est appliquée à un décodage des données de reproduction, en tant que données d'enregistrement,
stocke des informations de commande de copie d'une unité de bloc configurant le fichier de flux dans un en-tête supplémentaire (161) et
réalise un cryptage de bloc (S22) de l'unité de bloc (164) par une clé de cryptage (163) générée (S21) en utilisant des données de configuration de l'en-tête supplémentaire (161) comme valeur cible, et génère un fichier de flux (432) comportant l'en-tête supplémentaire (161) et des données de bloc de cryptage (165) en tant que constituant.

13. Procédé de traitement d'informations exécuté dans un appareil de traitement d'informations (500), dans lequel
l'appareil de traitement d'informations (500) comporte un processeur de données (501) configuré pour exécuter un traitement de reproduction de données d'enregistrement d'un support d'enregistrement d'informations,
le support d'enregistrement d'informations comporte un fichier de flux dans lequel sont stockées des données de format de transport multimédia MPEG, MMT, en tant que données de reproduction, et un fichier d'informations de commande de reproduction dans lequel sont stockées des informations de commande de reproduction du fichier de flux, en tant que données d'enregistrement,
le fichier de flux est un fichier comportant un en-tête supplémentaire (161) d'une unité de bloc et des données de bloc de cryptage (165) d'une clé de cryptage (163) générées en utilisant des données de configuration de l'en-tête supplémentaire (161) comme valeur germe, et
le processeur de données (501) acquiert des informations d'identification de position des données de reproduction, et des informations d'identification de position de l'en-tête supplémentaire (161) qui est la valeur germe nécessaire pour générer la clé de cryptage (163) à appliquer à un décodage des données de bloc de cryptage (165) comportant les données de reproduction, à partir du fichier d'informations de commande de reproduction dans lequel sont stockées les informations de commande de reproduction du fichier de flux, lit la valeur germe conformément aux informations acquises, génère la clé de cryptage (163) et réalise un traitement de décodage des données de bloc de cryptage (165) comportant les données de reproduction.

14. Programme permettant de réaliser un traitement d'informations dans un appareil de traitement d'informations (400, 500) selon le procédé de la revendication 12 ou 13.
